(19) **Europäisches Patentamt / European Patent Office / Office européen des brevets**

(11) **EP 3 783 825 B1**

(12) # EUROPEAN PATENT SPECIFICATION

(45) Date of publication and mention
of the grant of the patent:
**11.09.2024 Bulletin 2024/37**

(51) International Patent Classification (IPC):
**H04B 7/06** (2006.01)   **H04L 5/00** (2006.01)
**H04B 7/024** (2017.01)

(21) Application number: **19789007.2**

(22) Date of filing: **16.04.2019**

(52) Cooperative Patent Classification (CPC):
**H04L 5/0053; H04B 7/024; H04B 7/0695;
H04L 5/0023; H04L 5/0035; H04L 5/0051;
H04L 5/0091**

(86) International application number:
**PCT/CN2019/082928**

(87) International publication number:
**WO 2019/201250 (24.10.2019 Gazette 2019/43)**

(54) **METHOD AND DEVICE FOR DETERMINING QUASI CO-LOCATED REFERENCE SIGNAL SET**

VERFAHREN UND VORRICHTUNG ZUR BESTIMMUNG EINES QUASI-COLOKALISIERTEN REFERENZSIGNALSATZES

PROCÉDÉ ET DISPOSITIF DE DÉTERMINATION D'ENSEMBLE DE SIGNAUX DE RÉFÉRENCE QUASI CO-LOCALISÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2018 CN 201810339860
18.04.2018 CN 201810351096
10.08.2018 CN 201810912239**

(43) Date of publication of application:
**24.02.2021 Bulletin 2021/08**

(60) Divisional application:
**24192870.4**

(73) Proprietor: **ZTE Corporation
Shenzhen, Guangdong 518057 (CN)**

(72) Inventors:
  • **ZHANG, Shujuan
    Shenzhen, Guangdong 518057 (CN)**
  • **LU, Zhaohua
    Shenzhen, Guangdong 518057 (CN)**
  • **LI, Yu Ngok
    Shenzhen, Guangdong 518057 (CN)**
  • **GAO, Bo
    Shenzhen, Guangdong 518057 (CN)**

  • **ZHANG, Nan
    Shenzhen, Guangdong 518057 (CN)**
  • **WANG, Feiming
    Shenzhen, Guangdong 518057 (CN)**

(74) Representative: **Iannone, Carlo Luigi et al
Barzanò & Zanardo Milano S.p.A.
Via Borgonuovo, 10
20121 Milano (IT)**

(56) References cited:
**WO-A1-2014/173334     CN-A- 103 945 447
CN-A- 104 604 166     CN-A- 104 956 611
CN-A- 107 888 266     CN-A- 108 023 841
US-A1- 2017 288 743**

  • **INTERDIGITAL ET AL: "Remaining issues on beam management", vol. RAN WG1, no. Reno, USA; 20171127 - 20171201, 18 November 2017 (2017-11-18), XP051370095, Retrieved from the Internet
<URL:http://www.3gpp.org/ftp/tsg%5Fran/WG1%5FRL1/TSGR1%5F91/Docs/> [retrieved on 20171118]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- ERICSSON: "Remaining details of beam management", vol. RAN WG1, no. Sanya, China; 20180416 - 20180420, 15 April 2018 (2018-04-15), XP051427235, Retrieved from the Internet <URL:http://www.3gpp.org/ftp/Meetings%5F3GPP%5FSYNC/RAN1/Docs/> [retrieved on 20180415]
- VIVO: "Remaining issues on QCL", vol. RAN WG1, no. Athens, Greece; 20180226 - 20180302, 15 February 2018 (2018-02-15), XP051396781, Retrieved from the Internet <URL:http://www.3gpp.org/ftp/tsg%5Fran/WG1%5FRL1/TSGR1%5F92/Docs/> [retrieved on 20180215]
- ZTE ET AL: "Remaining details on beam management", vol. RAN WG1, no. Athens, Greece; 20180226 - 20180302, 16 February 2018 (2018-02-16), XP051396949, Retrieved from the Internet <URL:http://www.3gpp.org/ftp/tsg%5Fran/WG1%5FRL1/TSGR1%5F92/Docs/> [retrieved on 20180216]

**Description**

**TECHNICAL FIELD**

The present disclosure relates to a field of communications, in particular, to a method and device for determining a quasi-co-location reference signal set.

**BACKGROUND**

A new radio (NR) user equipment (UE) of Release-15 supports beam-based high-frequency communications. A key problem of the beam-based communications is how to accurately acquire beams.

The NR UE of the Release-15 only supports to transmit signals with one transmission receiver point (TRP) at one occasion. When a beam isolation of multiple TRPs is relatively high, multiple TRPs can be used for transmitting multi-stream signals with the same user at the same time to improve the spectrum efficiency. On the other hand, multiple TRPs transmitting the same signal with the same user at the same time can improve the robustness of beam communication, thus requiring the NR-UE to support to transmit the signals with multiple TRPs at a same occasion. When two or more TRPs work at a high frequency and the UE needs to receive the signals transmitted by two or more TRPs at the same time, especially when the terminal cannot acquire the beam through downlink control information (DCI), what kind of beam the UE needs to use for transmission with multiple TRPs is the key problem to be solved in the present disclosure.

On the other hand, in high-frequency communications, when beams of different signals at the same occasion collide or beam terminals corresponding to two signals at the same occasion cannot receive at the same time, how deal with these scenarios become a to-be-solved problem. In the current discussion, to solve the problem, beam base stations of the two signals at the same occasion are expected to be consistent at the same time of being scheduled. However, to increase the flexibility of the base stations, the beam of the signal scheduled subsequently may be collided with the beam of the signal having been scheduled, the present disclosure will further describe how to solve the problem when the beams collide.

The reference R1-1720630 discloses DL beam management including beam indication, beam measurement and reporting. The reference R1-1804974 discloses several open issues for beam management, including uplink beam indication which has not received enough attention over the course of Rel-15 discussions. The reference R1-1801529 discloses QCL related issues. The reference R1-1801581 discloses TPs on beam management related issues. The reference US 2017/0288743A1 discloses a base station including a controller configured to configure an MRS resource set comprising a group of MRS resources, where each MRS resource comprises a set of MRS antenna ports.

**SUMMARY**

The invention is set out in the appended set of claims.

**BRIEF DESCRIPTION OF DRAWINGS**

The drawings are used to provide a further understanding of solutions of embodiments of the present disclosure, constitute a part of the description, explain the solutions of the present disclosure in conjunction with the embodiments of the present disclosure, and do not limit the solutions of the embodiments of the present disclosure.

FIG. 1 is schematic diagram one illustrating a multi-TRP transmission in an embodiment of the present disclosure;
FIG. 2 is a flowchart of a method for determining a QCL reference signal set provided by an embodiment of the present disclosure;
FIG. 3A is schematic diagram one of selecting control resources in an embodiment of the present disclosure;
FIG. 3B is schematic diagram two of selecting control resources in an embodiment of the present disclosure;
FIG. 3C is schematic diagram three of selecting control resources in an embodiment of the present disclosure;
FIG. 4 is schematic diagram two illustrating a multi-TRP transmission in an embodiment of the present disclosure;
FIG. 5 is schematic diagram three illustrating a multi-TRP transmission in an embodiment of the present disclosure;
FIG. 6 is a flowchart of a method for determining a QCL reference signal set provided by another embodiment of the present disclosure;
FIG. 7 is a schematic diagram of receiving a quasi-co-location reference signal set of two port groups in an embodiment of the present disclosure;
FIG. 8 is a flowchart of a method for determining a QCL reference signal set provided by another embodiment of the present disclosure;

FIG. 9 is schematic diagram four illustrating a multi-TRP transmission in an embodiment of the present disclosure;

FIG. 10 is a schematic diagram of an apparatus for determining a QCL reference signal set provided by another embodiment of the present disclosure;

FIG. 11 is a schematic diagram of an apparatus for determining a QCL reference signal set provided by another embodiment of the present disclosure;

FIG. 12 is a schematic diagram of an apparatus for determining a QCL reference signal set provided by another embodiment of the present disclosure;

FIG. 13 is a schematic diagram of beams of a channel or signal colliding in an embodiment of the present disclosure;

FIG. 14 is a flowchart of a signal processing method provided by another embodiment of the present disclosure;

FIG. 15 is schematic diagram one of a signal processing apparatus provided by another embodiment of the present disclosure;

FIG. 16 is schematic diagram one of allocating control resources in X time units corresponding to an aggregation factor of the channel being greater than 1 in an embodiment of the present disclosure;

FIG. 17 is schematic diagram two of allocating control resources in X time units corresponding to an aggregation factor of the channel being greater than 1 in an embodiment of the present disclosure;

FIG. 18 is an exemplary diagram of a feedback period corresponding to a feedback occasion in an embodiment of the present disclosure;

FIG. 19 is schematic diagram one of two control resources associated with two CCs; and

FIG. 20 is schematic diagram two of two control resources associated with two CCs.

## DETAILED DESCRIPTION

Embodiments of the present disclosure will be described below in detail in conjunction with the drawings. It is to be noted that if not in collision, the embodiments and features therein in the present disclosure may be combined with each other.

The steps illustrated in the flowcharts among the drawings may be performed by a computer system such as a group of computers capable of executing instructions. Moreover, although logical sequences are illustrated in the flowcharts, the illustrated or described steps may be performed in sequences different from those described herein in some cases.

The New Radio (NR) supports downlink control information (DCI) to dynamically indicate beams used by a physical downlink shared channel (PDSCH). Specifically, the beams used by the PDSCH is indicated by a transmission configuration indication (TCI) field in the DCI, that is, the TCI field indicates a quasi-co-location (QCL) of a demodulation reference signal (DMRS) reference signal set of the PDSCH, that is, reference signals in the QCL reference signal set and the DMRS of the PDSCH satisfy a QCL relationship with respect to a type of QCL parameters, so that the terminal may obtain QCL parameters of the DMRS of the PDSCH according to the QCL parameters of the reference signals in the QCL reference signal set.

The QCL parameters include at least one of the following: a Doppler shift, a Doppler spread, an average delay, a delay spread or a Spatial receive (Rx) parameter .

As shown in Table 1, a TCI state 1 indicates that a DMRS port group 1 and channel state information reference signal (CSI-RS) 1 satisfies the QCL relationship with respect to {doppler shift, doppler spread, average delay, delay spread}, the DMRS group 1 and a CSI-RS2 satisfies the QCL relationship with respect to {spatial Rx parameter}.In the present disclosure, the QCL reference signal set of the DMRS group 1 is called {CSI-RS1,CSI-RS2}.

Table 1

| TCI state index | Target reference signal | QCL reference signal set (QCL reference signal - associated QCLparameter) |
|---|---|---|
| TCI state 1 | DMRS group 1 | CSI-RS1-{Doppler shift, Doppler spread, average delay, delay spread}; |
| | | CSI-RS2-{Spatial Rx parameter} |

In particular, a terminal obtains the spatial Rx parameter of the DMRS of the PDSCH according to the reference signal associated with the spatial Rx parameter in the QCL reference signal set indicated by the TCI field, so that the terminal uses a suitable receiving beam to receive the PDSCH, but only a transmission time interval between the DCI and the PDSCH is greater than or equal to a predefined threshold K, the QCL reference signal set of the PDSCH may be obtained through the TCI field indicated in the DCI; when the transmission time interval between the DCI and the PDSCH is less than the predefined threshold, the terminal has not decoded the DCI when receiving the PDSCH or has not had time to switch the beam to the receiving beam indicated by the TCI field in the DCI, thus the terminal cannot use the beam indicated in the DCI to receive the PDSCH. For this problem, the NR now stipulates that when the transmission time interval between the DCI and the PDSCH is less than a predefined threshold K, the terminal uses a beam of a control resource set (CORESET) with a lowest control resource set identifier (CORESETID) in a time unit closest to the PDSCH to receive the PDSCH, where the time unit includes at least one CORESET that the terminal needs to detect, that is, the QCL reference signal set that satisfies the QCL relationship with the DMRS of the PDSCH in this case is a QCL reference signal set of a demodulation reference signal of the CORESET.

The above solution is only suitable for a single-TRP transmission. When two or more TRPs communicate with the terminal, the above solution cannot be applied.

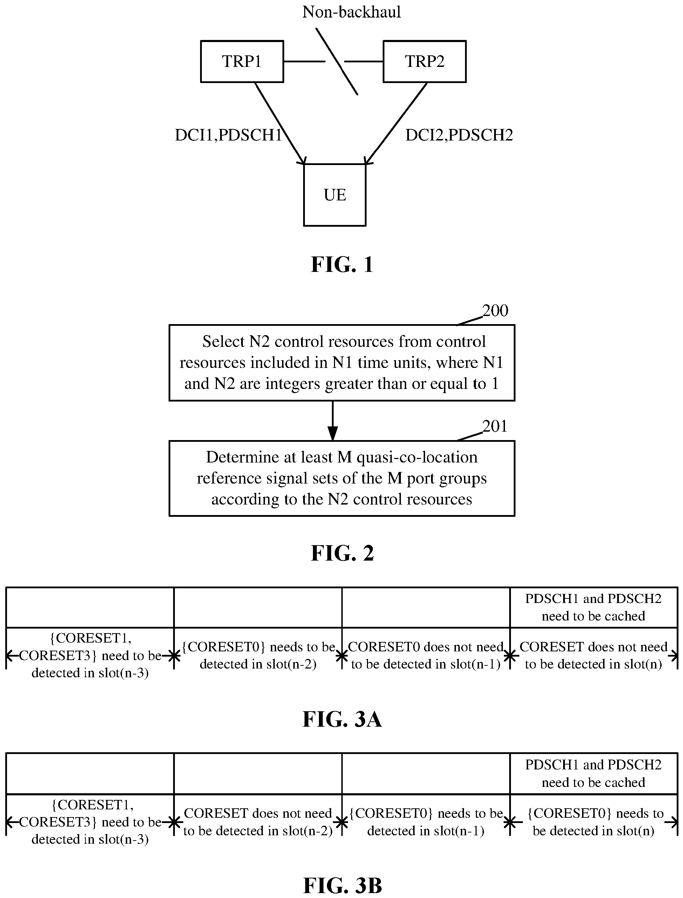

For example, as shown in FIG. 1, a TRP1 and a TRP2 serve a UE, the TRP1 transmits (DCI1, a PDSCH1) to the UE, and the TRP2 transmits (DCI2, a PDSCH2) to the UE. Since there is no ideal backhaul between the TRP1 and the TRP2, the TRP1 and the TRP2 schedule the PDSCH separately at a same occasion or in a same time unit (such as a same slot).The terminal needs to receive the PDSCH1 from the TRP1 and the PDSCH2 from the TRP2 at the same time, that is, time domain resources occupied by the PDSCH1 and the PDSCH2 at least partially overlap or occupy the same time unit; or the PDSCH1 and the PDSCH2 may be in different time units, but their receiving beam problems must be considered independently because transmission beams of the PDSCH1 and the PDSCH2 are different. That is, the TRP1 and the TRP2 both transmit the DCI and a data channel, DCI1 is used for scheduling the PDSCH1, and DCI2 is used for scheduling the PDSCH2.In FIG. 1, when a time interval between DCI1 and the PDSCH1 is less than the predefined threshold K, and a time interval between DCI2 and the PDSCH2 is also less than the predefined threshold K, the receiving beam problems of the PDSCH1 and the PDSCH2 need to be considered.

In the present disclosure, a QCL reference signal set of reference signals means that the reference signal and reference signals in the QCL reference signal set satisfy the QCL relationship with respect to at least one QCL parameter.

Two reference signals satisfying the QCL relationship with respect to at least one QCL parameter means that the QCL parameter of one reference signal may be acquired according to the QCL parameter of the other reference signal.

Referring to FIG. 2, an embodiment of the present disclosure provides a method for determining a quasi-co-location reference signal set, the method includes steps described below. In step 200, N2 control resources are selected from control resources included in N1 time units, where N1 and N2 are integers greater than or equal to 1.

In step 201, at least M quasi-co-location reference signal sets of the M port groups are determined according to the N2 control resources.

Optionally, the method further includes the following steps.

A QCL parameter of a channel or signal corresponding to at least one port group of the M port groups is determined according to at least M quasi-co-location reference signal sets of the M port groups and the channel or signal is received according to the QCL parameter.

In the embodiment of the present disclosure, the time unit may be a slot or a time domain symbol included in one slot.

In the embodiment of the present disclosure, the M port groups satisfy at least one of the following features: the M port groups lying within a same occasion; the M port groups lying within a same time unit; M1 channels or signals corresponding to the M port groups lying within a same occasion; M1 channels or signals corresponding to the M port groups lying within a same time unit; the M port groups being M demodulation reference signal (DMRS) port groups corresponding to M1 data channels; or the M port groups being M measurement reference signal port groups corresponding to at least one measurement reference resource; M1 is a positive integer less than or equal to M.

In the embodiment of the present disclosure, the channel or signal corresponding to at least one port group of the M port groups satisfies at least one of: a time interval between the channel or signal and a control channel scheduling the channel or signal being less than a predefined threshold; the control signaling for scheduling the channel or signal not including notification information of the quasi-co-location reference signal sets of the port groups; the control signaling for scheduling the channel or signal not including notification information of the quasi-co-location reference signal sets of the port groups; the signal being a periodic signal; the signal being a semi-periodic signal; or the channel being a semi-persistent scheduling channel. In the embodiment of the present disclosure, the N1 time units includes at least one of: a time unit in which a channel or signal corresponding to at least one of the M port groups is located; a time unit preceding a time unit in which the channel or signal is located; a time unit in which control signaling for scheduling the channel or signal is located; N1 time units first to Nlth closest to the channel or signal in time units including at least L1 control resources, where L1 is a positive integer less than or equal to N2; for example, when N1 is 1, N1 time units are time units closest to the channel or signal in time units including at least N2 control resources; when N1 is greater than or equal to 2, N1 time units are N1 time units first to Nlth closest to the channel or signal in time units including at least L1 control resources, and a sum of control resources included in the N1 time units is greater than or equal to N2; a time unit closest to the channel or signal in a time unit set including at least N2 control resources; time units included in a time unit set closest to the channel or signal in time unit sets including the at least N2 control resources and in which demodulation reference signals of any two control resources in the at least N2 control resources are not satisfied with a quasi-co-location relationship with respect to a spatial receive parameter; and a time unit in which a time interval between the time unit and the channel or signal is less than or equal to a time interval between the control signaling for scheduling the channel or signal and the channel or signal; a time unit disposed between the time unit in which the control signaling for scheduling the channel or signal is located and the time unit in which the channel or signal is located; or a time unit whose distance from the channel or signal is less than a predefined threshold.

In the embodiment of the present disclosure, the N1 time units includes at least one of: time units included in a time unit set closest to a channel or signal in time unit sets including at least N2 control resources; time units included in a time unit set closest to the channel or signal in time unit sets including at least N2 control resources satisfying a first predefined feature; or N1 time units first to NIth closest to the channel or signal in the time units including at least L1 control resources satisfying the first predefined feature, where L1 is a positive integer less than or equal to N2; the control resources satisfying the first predefined feature include at least one of the following: a control resource where a center carrier of component carriers where the control resource is located is greater than a predefined threshold; a control resource where the demodulation reference signal and a quasi-co-location reference signal satisfy the quasi-co-location relationship with respect to a spatial Rx filter parameter; a control resource in which the demodulation reference signal configures a quasi-co-location reference signal with respect to the spatial Rx filter parameter; a control resource lying within a same frequency bandwidth as the port groups; demodulation reference signals of different control resources in the N2 control resources or the L1 control resources not satisfying the quasi-co-location relationship with respect to the spatial Rx filter parameter; a control resource belonging to a predefined frequency bandwidth or a predefined frequency bandwidth group; where a frequency bandwidth may be a bandwidth corresponding to one CC or may be a bandwidth corresponding to one BWP; control resources belonging to a control resource group; control resources belonging to a frequency bandwidth or a frequency bandwidth group; at least associating with one control resource in candidate control channels monitored by a first communication node in the time units, where the first communication node is a receiving node of the port groups.

In the embodiment of the present disclosure, one control resource includes any one of: one CORESET, one search space set, one search space, one candidate control channel, a physical downlink control channel (PDCCH).

One CORESET corresponds to one control resource, one PDCCH occupies some or all of frequency domain resources in one CORESET, one CORESET corresponds to a frequency domain resource set, and one CORESET is a set of frequency domain resources for transmitting control channels. Time domain resources corresponding to the CORESET are determined by configuration information in the search space set associated with the CORESET.

One time unit including the control resource means that the one time unit needs to detect the control channels included in this control resource.

For example, when the control resource is CORESET, whether one time unit includes the CORESET is determined according to whether the CORESET in the time unit is associated with at least one search space set that needs to be detected in the time unit.

Specifically, when the CORESET in the time unit is associated with at least one search space set that needs to be detected in the time unit, it is determined that the time unit includes the CORESET. When the CORESET in the time unit is not associated with any search space set that needs to be detected in the time unit, it is determined that the time unit does not include the CORESET.

For example, one CORESET is configured with one search space set in the time unit, but since the number of candidate control channels configured in the time unit exceeds a detection capability of the terminal, such as exceeding an agreed threshold, it is not detected any search space set of the CORESET through a certain discarding principle, for this reason the CORESET is not included in the time unit.

In the embodiment of the present disclosure, the N2 control resources are selected from the control resources included in the N1 time units according to configuration information of a channel or signal.

Alternatively, the N2 control resources are selected from the control resources included in the N1 time units according to configuration information of the control resource in which a control channel for scheduling the channel or signal is located.

Alternatively, the N2 control resources satisfying a second predefined feature are selected from the control resources included in the N1 time units.

The channel or signal is a channel or signal corresponding to at least one port group in the M port groups.

In the configuration information of the channel or signal or the configuration information of the control resource for scheduling the channel or signal, N2 control resources selected from the control resources included in the N1 time units are indicated.

The step in which the N2 control resources satisfying the second predefined feature are selected from the control resources included in the N1 time units includes any one of: selecting N2 control resources having Lth lowest to (L+N2-1)-th lowest control resource identifiers from the control resources included in the N1 time units; selecting the N2 control resources having Lth lowest to (L+N2-1)-th lowest control resource identifiers from the control resources in which where the demodulation reference signals do not satisfy the quasi-co-location relationship with respect to the spatial Rx filter parameter included in the N1 time units, where L is an integer greater than or equal to 1.

For example, as shown in FIG. 1, there is no ideal Backhaul between a TRP1 and a TRP2, the TRP1 and the TRP2 are independently scheduled, a PDSCH1 and a PDSCH2 are on a slot (n) , and a slot before the slot(n) includes a slot closest to the slot (n) is a slot (n-2) in a slot of the CORESET that needs to be detected by the terminal. The CORESET that needs to be detected by the terminal on the slot (n-2) includes {CORESET0, CORESET1, CORESET2, CORESET3 }, and the terminal acquires a QCL reference signal set of a demodulation reference signal of the PDSCH1 according to a TCI configuration of a CORESETO (i.e., a demodulation reference signal of the CORESETO and a QCL reference signal included in TCI configuration information of the CORESETO satisfy a QCL relationship with respect to a type of QCL parameters, i.e., a QCL reference signal set of the demodulation reference signal of the CORESETO is acquired according to the TCI configuration of the CORESETO). For example, the QCL reference signal set of the DMRS of the PDSCH1 is the QCL reference signal set of the demodulation reference signal of the CORESETO. The terminal acquires a QCL reference signal set of a DMRS of the PDSCH2 according to a TCI configuration of a CORESET1 (i.e., a demodulation reference signal of the CORESET1 and a QCL reference signal included in TCI configuration information of the CORESET1 satisfy the QCL relationship with respect to a type of QCL parameters). For example, the QCL reference signal set of the DMRS of the PDSCH2 is the QCL reference signal set of the demodulation reference signal of the CORESET1. If there is only one CORESET in the slot (n-2), the QCL reference signal set of the PDSCH2 is acquired according to a beam with a lowest CORESETID in the slot before the slot (n-2).That is, the slot that includes the CORESET and is closest to the slot (n) is the slot(n-2), and there is only one CORESET in the slot (n-2). In order to determine beams of the PDSCH1 and the PDSCH2,the following methods are presented.

Method one for selecting N2 control resources: selecting two CORESETs with a first lowest CORESETID and a second lowest CORESETID from a time unit closest to the slot in which the PDSCH1 and the PDSCH2 are located in the slot including at least two CORESETs. According to QCL reference signal sets of demodulation reference signals of these two CORESETs, the QCL reference signal sets of the demodulation reference signals of the PDSCH1 and the PDSCH2 are obtained respectively. For example, the slot(n) and the slot(n-1) do not include the CORESET, the slot(n-2) only includes the CORESETO, and the slot(n-3) includes {CORESET1,CORESET3}, according to the QCL reference signal set of the demodulation reference signal of {CORESET1, CORESET3} in the slot(n -3), the QCL reference signal sets of the PDSCH1 and the PDSCH2 are obtained respectively, as shown in FIG. 3A.

Method two for selecting the N2 control resources: selecting two CORESETs with the first lowest CORESETID and the second lowest CORESETID from a time unit set closest to the slot (n) in time unit sets including at least two CORESETs. According to QCL reference signal sets of demodulation reference signals of these two CORESETs, the QCL reference signal sets of the demodulation reference signals of the PDSCH1 and the PDSCH2 are obtained respectively. For example, slot (n) includes {CORESET0}, slot (n-1) includes {CORESET0}, slot (n-2) does not include CORESET, and slot (n-3) includes {CORESET1,CORESET3}, then QCL reference signal sets of demodulation reference signals of {CORESET0,CORESET1} are selected from {CORESET0,CORESET1,CORESET3} included in {slot(n)-slot(n-3)} as the QCL reference signal sets of the PDSCH1 and the PDSCH2 respectively, as shown in FIG. 3B.

Method three for selecting the N2 control resources: selecting two CORESETs with the first lowest CORESETID and the second lowest CORESETID from the time unit set closest to the slot (n) in time unit sets including at least two CORESETs in which the QCL reference signal sets of the demodulation reference signals are different. According to QCL reference signal sets of demodulation reference signals of these two CORESETs, the QCL reference signal sets of the demodulation reference signals of the PDSCH1 and the PDSCH2 are obtained respectively. For example, the slot (n) includes {CORESET0}, the slot (n-1) includes {CORESET0}, the slot (n-2) does not include CORESET, and the slot (n-3) includes {CORESET 1,CORESET3}, then QCL reference signal sets of the demodulation reference signals of {CORESET0,CORESET1}are selected from {CORESET0,CORESET1,CORESET3} included in {slot(n)-slot(n-3)} as the QCL reference signal sets of the PDSCH1 and the PDSCH2 respectively, as shown in FIG. 3B. Although the CORESETO and the CORESET1 are different CORESETs, the QCL reference signal set of their demodulation reference signals is the same, and is the QCL reference signal set 1, while the QCL reference signal set of the demodulation reference signal of the CORESET3 is the QCL reference signal set 2, thus the QCL reference signal set of the demodulation reference signal of the PDSCH1 is the QCL reference signal set 1 corresponding to the CORESETO and the CORESET1, and the QCL reference signal set of the demodulation reference signal of the PDSCH2 is the QCL reference signal set 2 corresponding to the CORESET3. The QCL reference signal sets of the demodulation reference signals of the CORESETO and the CORESET1 are the same. In another implementation mode of this embodiment, the QCL reference signal sets of the demodulation reference signals of the CORESETO and the CORESET1 are different, but the CORESETO and the CORESET1 have the same QCL reference signal with respect to the spatial Rx filter parameters. For example, for the QCL reference signal sets {CSI-RS1,CSI-RS2} of the demodulation reference signal of the CORESETO, QCL parameters associated with a CSI-RS1 are {Doppler shift, Doppler spread, average delay, delay spread}, a QCL parameter associated with a CSI-RS2 is the spatial Rx parameter. For the QCL reference signal sets {CSI-RS3,CSI-RS2} of the demodulation reference signal of the CORESET1, QCL parameters associated with a CSI-RS3 are {Doppler shift, Doppler spread, average delay, delay spread}, a QCL parameter associated with the CSI-RS2 is spatial Rx parameter, thus acquiring the QCL reference signal set of the demodulation reference signal of the PDSCH1 by adopting the QCL reference signal set of the CORESET0. That is, two CORESETs with the first lowest CORESETID and the second lowest CORESETID are selected from the time unit set closest to the slot (n) in time unit sets including at least two CORESETs in which the demodulation reference signals do not satisfy the QCL relationship with respect to the spatial Rx parameter. In FIG. 3A and FIG. 3B, a time interval between the DCI1 and the PDSCH1 is less than the predefined threshold K, and a time interval between the DCI2 and the PDSCH2 is less than the predefined threshold K, for example, K is 4 slots, because the DCI1 and the DCI2 are transmitted in two different CORESETs, starting from slot (n), before encountering the DCI1 and the DCI2, a CORESET satisfying requirements may be found or not. If the CORESET satisfying requirements cannot be found, the CORESET in which the DCI1 and the DCI2 are located may be encounter, so that N1 time units belong to time units between time units in which the DCI is located and time units in which the PDSCH is located, that is, a time interval between the N1 time units and the PDSCH is less than K.

Method four for selecting the N2 control resources: selecting N2 control resources satisfying the second predefined feature in N1 time units first to Nlth closest to the channel or signal in time units including at least L1 control resources satisfying the first predefined feature, where the control resource satisfying the first predefined feature includes at least one of: a control resource in which a center carrier of component carriers in which the control resource is located is greater than a predefined threshold; a control resource in which the demodulation reference signal and one quasi-co-location reference signal satisfy the quasi-co-location relationship with respect to the spatial Rx filter parameter; a control resource in which the demodulation reference signal configures a quasi-co-location reference signal with respect to the spatial Rx filter parameter; a control resource lying within a same frequency bandwidth as the port groups, where the one frequency bandwidth may be a bandwidth corresponding to one component carrier (CC), or a bandwidth corresponding to one bandwidth part (BWP); demodulation reference signals of different control resources in the N2 control resources or the L1 control resources not satisfying the quasi-co-location relationship with respect to the spatial Rx filter parameter; a control resource belonging to a predefined frequency bandwidth or a predefined frequency bandwidth group; at least associating with one control resource in candidate control channels monitored by a first communication node in the time units, where the first communication node is a receiving node of the port groups; control resources belonging to one predefined control resource group; or control resources belonging to one frequency bandwidth or a frequency bandwidth group.

The control resources having the second predefined feature satisfies the following features: a set formed by the control resources having the first predefined feature included in the N1 time units having control resources having an Lth lowest to an (L+N2-1)th lowest identification number; in the set formed by the control resources having the first predefined feature included in the N1 time units having the control resources having the Lth lowest to the (L+N2-1)th lowest identification number, when the number of control resources having the same identification number is more than one, selecting control resources belonging to a frequency bandwidth with a lowest frequency bandwidth identification number in the multiple control resources having the same identification number; control resources belonging to F frequency bandwidths with the lowest frequency bandwidth identification number in the set formed by the control resources having the first predefined feature included in the N1 time units.

Alternatively, the PDSCH1 and/or the PDSCH2 are semi-persistent scheduling PDSCHs (SPS-PDSCH), and the DCI1 for scheduling the PDSCH1 and the DCI2 for scheduling the PDSCH2 are on a slot (n-20), and periods of the PDSCH1 and the PDSCH2 are 5 slots, that is, the PDSCH1 and the PDSCH2 are transmitted every 5 slots, and an interval between the PDSCH1 as well as the PDSCH2 on the slot(n) and the DCI for scheduling the PDSCH1 as well as the PDSCH2 has exceeded a period of 4 semi-continuous scheduling PDSCHs.

In FIG. 3A and FIG. 3B, the selected CORESET with the first lowest CORESETID should be configured in the PDSCH1, and the selected CORESET with the second lowest CORESETID should be configured in the PDSCH2. In the above interval, each PDSCH includes only one DMRS group. In this embodiment, it is not excluded that each PDSCH may correspond to multiple DMRS groups. Therefore, the selected CORESET with the first to second lowest CORESETIDs should be configured in the PDSCH1, thus the selected CORESET with the third lowest CORESETID should be configured in the PDSCH2. That is, if an interval between a current semi-persistent scheduling channel and the DCI for scheduling the semi-persistent PDSCH is far enough, such as more than a predefined number of semi-persistent periods, the quasi-co-location reference signal of the semi-persistent channel is acquired following with the quasi-co-location reference signal set of the control resource satisfying the second predefined feature in a time unit closest to the current semi-persistent PDSCH in time units of the control resources satisfying the first predefined feature included in the semi-persistent channel. If the interval between the current semi-persistent scheduling channel and the DCI for scheduling the semi-persistent PDSCH is relatively close, such as the predefined number of semi-persistent periods, the quasi-co-location reference signal set of the current semi-persistent scheduling channel may be acquired according to the TCI field indicated by the DCI of the semi-persistent scheduling PDSCH.

In the embodiment of the present disclosure, the channel or signal corresponding to at least one port group of the M port groups satisfies at least one of: the time interval between the channel or signal and the control signaling for scheduling the channel or signal being less than the predefined threshold; the time interval between the channel or signal and the control channel scheduling the channel or signal being less than the predefined threshold; the control signaling for scheduling the channel or signal not including notification information of the quasi-co-location reference signal sets of the port groups; the signal being a periodic signal; the signal being a semi-periodic signal; or the channel being a semi-persistent scheduling channel. The notification information may be a TCI field.

In another embodiment of the present disclosure, the N1 time units include M2 time unit groups, and the M port groups correspond to the M2 time unit groups, where M2 is a positive integer greater than or equal to 1; and/or the M port groups correspond to M3 control resource groups, and M3 is a positive integer greater than or equal to 1.

An intersection between the time units included in different time unit groups is not empty.

Quasi-co-location reference signal sets of the port groups corresponding to the time unit groups are determined according to N4 control resources selected from the time unit groups. That is, the quasi-co-location reference signal sets of the port groups corresponding to the time unit groups are a QCL reference signal set of DMRSs of N4 control resources.

Where N4 is a positive integer less than or equal to N2, and N4 corresponding to different time unit groups have a same value or different values.

Any one of time unit groups includes N3 time units first closest to N3-th closest to a channel or signal in the time units satisfying a first feature; where N3 is an integer greater than or equal to 1.

Where the time units satisfying the first feature include at least L2 control resources in one control resource group, and L2 is an integer greater than or equal to 1.

The channel or signal includes the port groups corresponding to the time unit groups.

The control resource groups include at least one of: the control resource groups corresponding to the port groups corresponding to the time unit groups; the control resource groups corresponding to the port groups included in the channel or signal; and the control resource groups corresponding to at least one port group.

The step in which N2 control resources are selected from control resources included in N1 time units includes steps described below.

N4 control resources are selected from the control resources belonging to the control resource groups and included in the N3 time units, where the control resource groups correspond to at least one port group in the port groups.

The step in which at least M quasi-co-location reference signal sets of M port groups are determined according to the N2 control resources includes a step described below.

The quasi-co-location reference signal sets of the port groups corresponding to the control resource groups are determined according to the N4 control resources.

Where N3 is a positive integer less than or equal to N1, N4 is a positive integer less than or equal to N2, and L2 is a positive integer less than or equal to N4, N4 corresponding to different port groups have a same value or different values, and N3 corresponding to different port groups have a same value or different values.

The step in which N4 control resources are selected from the control resources belonging to the control resource groups and included in the N3 time units includes steps described below.

N2 control resources having Lth lowest to (L+N2-1)-th lowest control resource identifiers are selected from the control resources belonging to the control resource group and included in N1 time units.

The N2 control resources having Lth lowest to (L+N2-1)-th lowest control resource identifiers are selected from the control resources in which demodulation reference signals do not satisfy a quasi-co-location relationship with respect to a spatial Rx filter parameter from the control resources belonging to the control resource group and included in N1 time units, where L is an integer greater than or equal to 1.

Where the M port groups corresponding to M3 control resource groups includes at least one of: any one port group in the M port groups corresponding to at least one control resource group; any one control resource group in the M3 control resource groups corresponding to at least one port group; determining a correspondence between the M port groups and the M3 control resource groups according to signaling information; determining a correspondence between the M port groups and the M3 control resource groups according to the agreed rule; determining a control resource group corresponding to one port group according to the signaling information; determining a control resource group corresponding to one port group according to the agreed rule; a control resource group corresponding to one port group being a control resource group to which the control resources in which control information scheduling a channel or signal is located belong, where the channel or signal includes the port group; a control resource group corresponding to one port group being a control resource group of control resources in a predefined component carrier; a control resource group corresponding to one port group being a control resource group including control resources in a predefined component carrier group; a control resource group corresponding to one port group being a control resource group including control resources satisfying a first feature; where the control resources satisfying the first feature are associated with a second quasi-co-location reference signal set; a difference set between the second quasi-co-location reference signal set and a third quasi-co-location reference signal set of demodulation reference signals of the control resources satisfying the first feature is not empty, and/or the second quasi-co-location reference signal set and the third quasi-co-location reference signal set correspond to different control signaling bit fields; or reference signals in the third quasi-co-location reference signal set and demodulation reference signals of the control resources satisfying the first feature

9

satisfy the quasi-co-location relationship with respect to a first-type of quasi-co-location parameters; or a control resource group corresponding to one port group being a control resource group including control resources satisfying a second feature; where a seventh quasi-co-location reference signal set of demodulation reference signals of the control resources satisfying the second feature is associated with a sixth quasi-co-location reference signal set; and the sixth quasi-co-location reference signal sets associated with different seventh quasi-co-location reference signal sets of the demodulation reference signals of the control resources satisfying the second feature are different; an interaction between the sixth quasi-co-location reference signal set and the seventh quasi-co-location reference signal set is not empty, and/or the seventh quasi-co-location reference signal set and the sixth quasi-co-location reference signal set correspond to different control signaling bit fields; reference signals in the seventh quasi-co-location reference signal set and demodulation reference signals of the control resources satisfying the second feature satisfy the quasi-co-location relationship with respect to a second-type of quasi-co-location parameters.

Associating the control resource satisfying the first feature with the second quasi-co-location reference signal set means: configuring the second quasi-co-location reference signal set in the configuration information of the control resource satisfying the first feature; or including the configuration information of the control resource satisfying the first feature in configuration information of the second quasi-co-location reference signal set; determining the association relationship between the control resource satisfying the first feature and the second quasi-co-location reference signal set through the predefined rule.

The association between the fourth QCL reference signal set of the demodulation reference signal of the control resource satisfying the second feature and the fifth quasi-co-location reference signal set means: configuring the fifth quasi-co-location reference signal set in the configuration information of the fourth QCL reference signal set; or including the configuration information of the fourth QCL reference signal set in the configuration information of the fifth quasi-co-location reference signal set; or determining the association relationship between the fourth QCL reference signal set and the fifth quasi-co-location reference signal set according to the predefined rule.

In the embodiment of the present disclosure, the control resource group satisfies at least one of: different control resources in different control resource groups capable of being simultaneously received by a communication node; different control resources in a same control resource group incapable of being simultaneously received by the communication node; or X1 control resources in the same control resource group capable of being simultaneously received by the communication node, where x1 is a positive integer less than or equal to x2, and x2 is a number of control resources included in the control resource groups.

For example, one downlink control resource group corresponds to a receiving panel of the communication node, and the control resources in different control resource groups may be received by the communication node simultaneously. Generally, a beam isolation of different panels is relatively high. Different control resources in the same control resource group cannot be received by the communication node simultaneously, that is, in this case, one panel has only one radio frequency link, and one radio frequency link may only generate one radio frequency beam at one occasion. Of course, one panel may also correspond to multiple radio frequency links, so that x1 control resources in one control resource group may be received by the communication node at the same time, x1 is a positive integer less than or equal to x2, where x2 is the number of control resources included in the control resource group.

M is a positive integer less than or equal to M2.

M is a positive integer less than or equal to M3.

M2 is equal to M3.

In the embodiment of the present disclosure, the control resource group satisfies at least one of: different control resources in different control resource groups capable of being simultaneously received by a communication node; different control resources in a same control resource group incapable of being simultaneously received by the communication node; X1 control resources in one control resource group capable of being simultaneously received by the communication node; where x1 is a positive integer less than or equal to x2, and x2 is a number of control resources included in the control resource groups; M being a positive integer less than or equal to M2; M being a positive integer less than or equal to M3; M2 being equal to M3; an intersection of resources occupied by control channels in different control resource groups being empty.

The communication node is a communication node receiving the control resource groups.

The communication node (such as the terminal) is the communication node receiving the control resource groups.

In the embodiment of the present disclosure, a type of QCL parameters refers to at least one QCL parameter.

In the embodiment of the present disclosure, the port may be a DMRS port, or may be a measurement reference signal port.

When selecting the above control resources, it is equivalent to that the PDSCH1 and the PDSCH2 are the control resources selected in one control resource group. The following describes another method for selecting the control resources. The PDSCH1 selects the control channel in the control resource group corresponding to the PDSCH1, and the PDSCH2 selects the control resource from the control resource group corresponding to the PDSCH2.

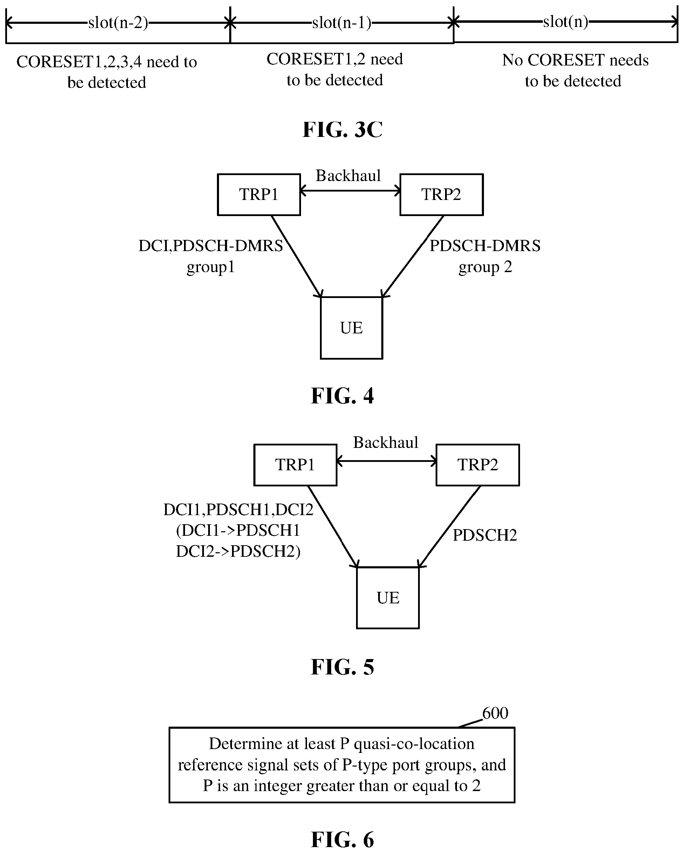

For example, as shown in FIG. 3C, the control resource group corresponding to the PDSCH1 is a group 1 {CORESET0, CORESET1, CORESET2}, and the control resource group corresponding to the PDSCH2 is a group 2 {CORESET3, CORESET4, CORESET5}, then when an interval between the DCI1 and PDSCH1 is less than K, N4 control resources are selected from the slot closest to the PDSCH1 in slots including at least one control resource in a control resource group 1. The QCL reference signal set of the N4 DMRS groups of the PDSCH1 according to the N4 control resources, where one DMRS group corresponds to one QCL reference signal set, where one DMRS group corresponds to more than one QCL reference signal set.

For example, as shown in FIG. 3C, the PDSCH1 and the PDSCH2 are both in the slot(n), and a slot closest to the PDSCH1 in the slots including the CORESET in the control resource group 1 is the slot(n-1), thereby the QCL reference signal set of the PDSCH1 is the QCL reference signal set of the demodulation reference signal of the CORESET1 with the lowest CORESETID in {CORESET1, CORESET2} in the slot (n-1).

A slot closest to the PDSCH2 in the slots including the CORESET in the control resource group 2 is the slot(n-2), thereby the QCL reference signal set of the PDSCH2 is the QCL reference signal set of the demodulation reference signal of the CORESET3 with the lowest CORESETID in {CORESET3,CORESET4} in the slot (n-2).Optionally, the PDSCH1 and the PDSCH2 belong to the same component carrier (CC), or the PDSCH1 and the PDSCH2 lie in the same bandwidth part (BWP).

The above one port group corresponds to one control resource group. Of course, the embodiment of the present disclosure does not exclude the case where one port group corresponds to multiple control resource groups. For example, one port group is transmitted in multiple time units, and the one port group in each time unit corresponds to one control resource group. One control resource group may also correspond to one or more port groups. For example, one PDSCH includes two DMRS groups, and QCL reference signal sets in the two DMRS groups are QCL reference signal sets of two control resources selected in one control resource group corresponding to the PDSCH. A method for selecting N4 control resources in one control resource group may be similar to method one to method four for selecting N2 control resources, while in this case, the N4 control resources are selected from one control resource group.

The following specifically describes how to acquire a correspondence between the port group and the control resource group.

Method one for determining the correspondence between the port group and the control resource group: configuration information of the data channel includes the configuration information of the control resource group corresponding to the data channel, for example, configuration information of the PDSCH includes configuration information of a CORESET group corresponding to the PDSCH , the port group included in the data channel corresponds to the control resource group configured in the data channel.

For example, transmission parameters of the PDSCH are configured in the higher layer signaling, and the CORESET group corresponding to the PDSCH is also configured. The DCI dynamically schedules the PDSCH. Some transmission parameters of the dynamically scheduled PDSCH are obtained according to the transmission parameters of the PDSCH configured according to the higher layer signaling. The dynamically scheduled PDSCH may include one demodulation reference signal group, or two demodulation reference signal groups. The control resource groups corresponding to all demodulation reference signal groups included in the dynamically scheduled PDSCH are the CORESET group included in the higher layer signaling configuration of the PDSCH.

Method 2 for determining the correspondence between the port group and the control resource group: configuring an index of the control resource group where the control channel is located in the configuration information of the control resource. If there is no index of the control resource group in the configuration information of one control resource, the control resource is a first group by default.

For example, a CORESET group ID where the CORESET is located is configured in the configuration information of the CORESET. If the configuration information of one CORESET does not include the CORESET group ID, the CORESET belongs to a first CORESET group by default.

Alternatively, the control resource group is configured, where the configuration information in the control resource group includes configuration information of the control resources included in the control resource group.

The CORESET group corresponding to one port group is the CORESET group to which the CORESET belongs. The DCI scheduling the channel or signal corresponding to the port group is located in the CORESET.

Method 3 for determining the correspondence between the port group and the control resource group: control resources in a predefined CC group or a predefined CC corresponding to one port group form the control resource group corresponding to the port group.

The predefined CC or predefined CC group corresponding to one port group is obtained according to signaling information or an agreed rule.

For example, the CC/CC group corresponding to one port group includes any of: a CC with a lowest CCID in the time unit closest to the channel or signal corresponding to the port group/a CC group in which the CC with the lowest CCID in the time unit closest to the channel or signal corresponding to the port group is located; a CC corresponding to the channel or signal of the port group/a CC group in which the CC corresponding to the channel or signal of the port group is located; a CC in which DCI of the channel or signal of the port group is located/a CC group in which CC in which DCI of the channel or signal of the port group is located is located.

Different CCs may be represented by different serving cells.

For example, when there are multiple CCs, it is necessary to determine the control resource group corresponding to the one port group, the control resource is selected in the control resource group, and the QCL reference signal of the port group is obtained according to the selected control resource, the one control resource group is determined according to at least one piece of the above CC information.

In the embodiment of the present disclosure, the step in which at least M quasi-co-location reference signal sets of the M port groups are determined according to the N2 control resources includes: determining a quasi-co-location reference signal set of any one port group of the M port groups according to configuration information of at least one control resource in the N2 control resources, where M is a positive integer less than or equal to N2; determining the quasi-co-location reference signal set of any one port group of the M port groups according to a quasi-co-location reference signal set of demodulation reference signals of at least one control resource in the N2 control resources.

In FIG. 1, there is no ideal backhaul link between the TRP1 and the TRP2. Of course, this embodiment does not exclude the case where there is an ideal Backhaul link between the TRP1 and the TRP2.

In the above embodiment, two or more TRPs serving the UE both transmit the control channel and the data channel. When some TRPs of the two or two TRPs serving the UE transmit both the control channel and the data channel. When some TRPs only transmit the data channel, the solution of the above embodiment cannot be applied.

For example, as shown in FIG. 4, there is an ideal Backhaul between the TRP1 and the TRP2, the TRP1 transmits a DMRS group 1 of the PDSCH and the DCI scheduling the PDSCH, the TRP2 transmits a DMRS group2 of the PDSCH, when a time interval between the DCI scheduling PDSCH and the PDSCH is less than the predefined threshold is K, it is necessary to determine the receiving beams of the DMRS group1 and the DMRS group2, that is, determine the QCL reference signal set of the DMRS group 1 and the DMRS group2, or determine that a QCL reference signal set 1 satisfying the QCL relationship of a DMRS group1 with respect to the spatial Rx parameter and a QCL reference signal set 2 satisfying the QCL relationship of a DMRS group2 with respect to the spatial Rx parameter.

As another example, as shown in FIG. 5, there is an ideal Backhaul between the TRP1 and the TRP2, the TRP1 transmits a PDSCH1, the TRP2 transmits a PDSCH2, and DCI1 for scheduling the PDSCH1 and DCI2 for scheduling the PDSCH2 are all transmitted on the TRP1. When a time interval between the DCI1 for scheduling the PDSCH1 and the PDSCH1 is less than the predefined threshold K, and a time interval between the DCI2 for scheduling PDSCH2 and the PDSCH2 is less than the predefined threshold K, it is necessary to determine receiving beams of the PDSCH1 and the PDSCH2, that is, determining the QCL reference signal sets of the DMRS group 1 and the DMRS group2, or determining the QCL reference signal set 1 of the DMRS group1 satisfying the QCL relationship with respect to the spatial Rx parameter and the QCL reference signal set 2 of the DMRS group2 satisfying the QCL relationship with respect to the spatial Rx parameter. The DMRS group 1 is the demodulation reference signal group included in the PDSCH1, and the DMRS group2 is the demodulation reference signal group included in the PDSCH2; that is, both the PDSCH1 and the PDSCH2 in FIG. 5 include only one DMRS port group, and this embodiment does not exclude the case in which the PDSCH1 and/or the PDSCH2 includes two or more DMRS port groups. Optionally, the PDSCH1 and the PDSCH2 belong to the same CC, or the PDSCH1 and the PDSCH2 lie in the same BWP.

Referring to FIG. 6, another embodiment of the present disclosure provides a method for determining a quasi-co-location reference signal set, the method includes steps described below. In step 600, at least P quasi-co-location reference signal sets of P-type port groups are determined, and P is an integer greater than or equal to 2.

Specifically, the P-type port group includes a first-type port group and a second-type port group. The step in which at least P quasi-co-location reference signal sets of P-type port groups are determined includes steps described below.

A first quasi-co-location reference signal set of the first-type port group is determined.

A second quasi-co-location reference signal set of the second-type port group is determined.

A method for acquiring a quasi-co-location (QCL) reference signal set of the first-type port group is different from a method for acquiring a quasi-co-location (QCL) reference signal set of the second-type port group. That is, a first determination method is used for determining a first quasi-co-location reference signal set of the first-type port group; a second determination method is used for determining a second quasi-co-location reference signal set of the second-type port group.

The step in which the first determination method is used for determining the first quasi-co-location reference signal set of the first-type port group includes determining the first quasi-co-location reference signal set of the first-type port group according to a first-type parameter.

The step in which the second determination method is used for determining the second quasi-co-location reference signal set of the second-type port group includes determining the second quasi-co-location reference signal set of the second-type port group according to a second-type parameter.

The first-type parameter and the second-type parameter satisfy at least one of: a difference set between the first-type parameter and the second-type parameter is not empty; for example, the first-type parameter includes a quasi-co-location reference signal set of a demodulation reference signal of a predefined control resource, where the predefined control resource includes a control resource satisfying the second predefined feature in a time unit closest to the channel or signal corresponding to the first-type port group in time units of the control resource with a predefined feature. Or the predefined control resource is the control resource in which DCI for scheduling first-type port is located. The second-type parameter does not include the quasi-co-location reference signal set of the demodulation reference signal of the predefined control resource, and may be the following parameters, such as a higher layer signaling notification parameter.

The first-type parameter is the quasi-co-location reference signal set of the demodulation reference signal of one control resource, and the second-type parameter does not include the quasi-co-location reference signal set of the demodulation reference signal of one control resource. That is, the second-type is not acquired according to the quasi-co-location reference signal set of the demodulation reference signal of the control resource, the first-type is acquired according to the quasi-co-location reference signal set of the demodulation reference signal of the control resource.

A first QCL reference signal set of the first-type port group may also be determined by using the method in the above embodiment.

The step in which the first quasi-co-location reference signal set of the first-type port group is determined includes: determining the first quasi-co-location reference signal set according to a third quasi-co-location reference signal set; where the third quasi-co-location reference signal set is acquired according to a quasi-co-location reference signal set of a demodulation reference signal of a control resource satisfying a predefined feature in a first time unit; or the third quasi-co-location reference signal set is acquired according to a quasi-co-location reference signal set of a demodulation reference signal of a control resource in which control information scheduling a channel or signal corresponding to the first-type port group is located.

The control resource satisfying the predefined feature in the first time unit includes: a control resource with a lowest control resource identifier belonging to a control resource group and included in the first time unit; a control resource with the lowest control resource identifier in all control resources included in the first time unit; a control resource with the lowest control resource identifier in a predefined CC / a predefined CC group included in the first time unit; a control resource satisfying the second predefined feature in the first time unit. The second predefined feature may refer to the description of the above embodiment.

The QCL reference signal set of the demodulation reference signal means that the demodulation reference signal and any one of reference signals in the QCL reference signal set satisfy the QCL relationship with respect to one or more QCL parameters.

The first time unit includes any one of: a time unit closest to a data channel corresponding to a first-type port group in time units satisfying a first predefined feature; a time unit closest to a measurement channel resource corresponding to the first-type port group in the time units satisfying the first predefined feature; or a time unit closest to the first-type port group in the time units satisfying the first predefined feature.

The time unit satisfying the first predefined feature includes any one of: a time unit including control resources in a predefined component carrier; a time unit including control resources in a predefined component carrier group; a time unit including at least L control resources, where L is a positive integer greater than or equal to 1; a time unit including control resources in a predefined control resource group; or a time unit including the control resource satisfying the first predefined feature, where the first predefined feature may refer to the description of the above embodiment.

The step in which the second quasi-co-location reference signal set of the second-type port group is determined includes at least one of steps described below.

The second quasi-co-location reference signal set is determined according to a fourth quasi-co-location reference signal set, where the fourth quasi-co-location reference signal set and a control resource satisfying a predefined feature in a second time unit have a correspondence. A control resource satisfying the predefined feature in the second time unit is a control resource with the lowest control resource identifier belonging to a control resource group and included in the second time unit.

The second quasi-co-location reference signal set is determined according to a fifth quasi-co-location reference signal set notified by first control signaling.

The second quasi-co-location reference signal set is determined according to a sixth quasi-co-location reference signal set, where the sixth quasi-co-location reference signal set and a seventh quasi-co-location reference signal set have a correspondence, the seventh quasi-co-location reference signal set includes the quasi-co-location reference signal set of the demodulation reference signal of the control resource satisfying the predefined feature in the second time unit. A reference signal in the seventh quasi-co-location reference signal set and the demodulation reference signal of the control resource satisfying the predefined feature in the second time unit have a quasi-co-location relationship with respect to a fourth type of quasi-co-location parameters.

The second quasi-co-location reference signal set is determined according to configuration information of the control resource in which a control channel scheduling a channel or signal corresponding to a first-type port group is located.

The seventh quasi-co-location reference signal set satisfies at least one of: the seventh quasi-co-location reference signal set and the fourth quasi-co-location reference signal set being different quasi-co-location reference signal sets; the seventh quasi-co-location reference signal set and the fourth quasi-co-location reference signal set corresponding to different control signaling bit fields; the seventh quasi-co-location reference signal set and the fifth quasi-co-location reference signal set being different quasi-co-location reference signal sets; the seventh quasi-co-location reference signal set and the fifth quasi-co-location reference signal set corresponding to different control signaling bit fields; the seventh quasi-co-location reference signal set and the sixth quasi-co-location reference signal set being different quasi-co-location reference signal sets; the seventh quasi-co-location reference signal set and the sixth quasi-co-location reference signal set corresponding to different control signaling bit fields; a difference set between the seventh quasi-co-location reference signal set and the fourth quasi-co-location reference signal set being a non-empty set; a difference set between the seventh quasi-co-location reference signal set and the fifth quasi-co-location reference signal set being the non-empty set; or a difference set between the seventh quasi-co-location reference signal set and the sixth quasi-co-location reference signal set being the non-empty set; the seventh quasi-co-location reference signal set being a quasi-co-location reference signal set of a demodulation reference signal of a control resource in which control information scheduling a channel or signal corresponding to the first-type port group is located; or the control resource satisfying the predefined feature in the second time unit being the control resource in which the control information scheduling the channel or signal corresponding to the first-type port group is located.

Different time unit sets correspond to different fifth quasi-co-location reference signal sets.

The time units included in the time unit set may be consecutive or non-consecutive; the time units may be one slot, or a time domain symbol included in one slot.

The first control signaling includes any one of the following: higher layer control signaling; physical layer control signaling in which a time interval between the physical layer control signaling and a data channel corresponding to a second-type port group is greater than or equal to a predefined threshold; physical layer control signaling in which a time interval between the physical layer control signaling and a measurement reference signal resource corresponding to the second-type port group is greater than or equal to the predefined threshold; or physical layer control signaling in which a time interval between the physical layer control signaling and the second-type port group is greater than or equal to the predefined threshold.

The second time unit includes any one of: a time unit closest to a data channel corresponding to a second-type port group in time units satisfying a second predefined feature; a time unit closest to a measurement channel resource corresponding to the second-type port group in the time units satisfying the second predefined feature; a time unit closest to the second-type port group in the time units satisfying the second predefined feature; or a time unit in which control signaling for scheduling the channel or signal is located.

The time unit satisfying the second predefined feature includes any one of: a time unit including control resources in a predefined component carrier; a time unit including control resources in a predefined component carrier group; a time unit including at least L control resources, where L is a positive integer greater than or equal to 1; a time unit including control resources in a predefined control resource group; or a time unit including control resources with the predefined feature, where the control resource with the predefined feature is associated with the fourth quasi-co-location reference signal set, or the sixth quasi-co-location reference signal set is associated with the seventh quasi-co-location reference signal set of the demodulation reference signal of the control resource with the predefined feature.

In another embodiment of the present disclosure, before the first quasi-co-location reference signal set is determined, the method further includes a step described below. The port group is determined to be the first-type port group according to second control signaling and/or a predefined rule.

Before the second quasi-co-location reference signal set is determined, the method further includes a step described below. The port group is determined to be the second-type port group according to the second control signaling and/or the predefined rule.

For example, a method for determining the QCL reference signal set of one port group in the second control signaling is a first determination method or a second determination method. If it is the first determination method, the port group is determined to be the first-type port group; if it is the second determination method, the port group is determined to be the second-type port group.

The at least P quasi-co-location reference signal sets of the P-type port groups are determined according to at least one piece of the following parameter information; a maximum number of port groups included in the channel or signal; a maximum number of port groups included in one channel or signal in response to a time interval between control information scheduling the channel or signal and the channel or signal being less than a predefined threshold; a method for determining the quasi-co-location reference signal set of each port group of the channel or signal; the quasi-co-location reference signal set of each port group of one channel or signal; a method for determining the quasi-co-location reference signal set of each port group of one channel or signal in response to the time interval between the control information scheduling the channel or signal and the channel or signal being less than the predefined threshold; or the quasi-co-location reference signal set of each port group of one channel or signal in response to the time interval between the control information scheduling the channel or signal and the channel or signal being less than the predefined threshold.

The channel includes a data channel or a control channel, and the port group of the channel is a demodulation reference signal group.

In response to the signal being a measurement reference signal, the port group of the signal is a measurement reference signal group.

In the embodiment of the present disclosure, where the at least one quasi-co-location reference signal set of at least one port group of the P-type port groups is determined according to at least one piece of the following parameter information: a maximum number of port groups included in the channel or signal; a maximum number of port groups included in one channel or signal in response to a time interval between control information scheduling the channel or signal and the channel or signal being less than a predefined threshold; a method for determining the quasi-co-location reference signal set of each port group of the channel or signal; the quasi-co-location reference signal set of each port group of one channel or signal; a method for determining the quasi-co-location reference signal set of each port group of one channel or signal in response to the time interval between the control information scheduling the channel or signal and the channel or signal being less than the predefined threshold; or the quasi-co-location reference signal set of each port group of one channel or signal in response to the time interval between the control information scheduling the channel or signal and the channel or signal being less than the predefined threshold.

Where the parameter information is determined according to signaling information or a predefined rule, and the signaling information includes at least one of: non-physical layer signaling information; higher layer signaling information; configuring signaling information of the channel corresponding to the port group; configuring signaling information of a measurement reference signal resource corresponding to the port group; configuration information of a control resource in which the control information scheduling the channel corresponding to the port group; configuration information of a control resource satisfying a predefined feature included in a time unit closest to the channel corresponding to the port group; configuration information of a control resource in which control information scheduling the measurement reference signal resource corresponding to the port group; or configuration information of a control resource satisfying a predefined feature included in a time unit closest to the measurement reference signal resource corresponding to the port group.

The port group satisfies at least one of the following features: the maximum number of port groups included in one channel or signal being related to a number of control resources; in response to a time interval between the control information scheduling the channel or signal and the channel or signal being less than the predefined threshold, the maximum number of port groups included in one channel or signal being related to the number of control resources; the maximum number of port groups included in one channel or signal being related to a number of control resource groups; or in response to a time interval between the control information scheduling the channel or signal and the channel or signal being less than the predefined threshold, the maximum number of port groups included in one channel or signal being related to the number of control resource groups.

There is a correlation between two pieces of information, which means that one piece of information may be obtained by the other piece of information, or a value range of the other piece of information may be obtained.

It is assumed that the number of control resources is B, B is an integer greater than or equal to 1, and the B control resources satisfy at least one of the following features: the B control resources belonging to one BWP, the B control resources are dedicated control resources, and QCL reference signal sets of demodulation reference signals of the B control resources are different. The P-type port groups correspond to P demodulation reference signal port groups of one or more data channels; or the P-type port groups correspond to P measurement reference signal port groups of one or more measurement reference signal resources; or part of port groups in the P-type port groups correspond to demodulation reference signal groups of one or more data channels, and part of port groups corresponding to one or more measurement reference signal port groups.

The port group satisfies at least one of: the time interval between the channel or signal and the control signaling for scheduling the channel or signal being less than the predefined threshold; the time interval between the channel or signal and the control channel scheduling the channel or signal being less than the predefined threshold; the control signaling for scheduling the channel or signal not including notification information of the quasi-co-location reference signal sets of the port groups; the signal being a periodic signal; the signal being a semi-periodic signal; or the channel being a semi-periodic scheduling channel; channels corresponding to the P-type port groups being received on a same time unit; the measurement reference signal resources corresponding to the P-type port groups being received on a same time unit; the channels corresponding to the P-type port groups being received at a same occasion; the measurement reference signal resources corresponding to the P-type port groups being received at the same occasion; the channel or signal is a channel or signal corresponding to at least one port group in the port groups.

In the present disclosure, different ports in the different port groups do not satisfy the QCL relationship, and ports in the same port group satisfy the QCL relationship with respect to at least one QCL parameter.

A method for acquiring a quasi-co-location (QCL) reference signal set of the first-type port group is different from a method for acquiring a quasi-co-location (QCL) reference signal set of the second-type port group.

For example, the QCL reference signal set of the first-type port group is the QCL reference signal set of the demodulation reference signal of the control resource, and the QCL reference signal set of the second-type port group is not acquired according to the QCL reference signal of the demodulation reference signal of the control resource. DMRS groups included in a DMRS group 2 in FIG. 4 or a PDSCH 2 in FIG. 5 are not the same as the QCL reference signal set of the demodulation reference signal of any control resource group, because a TRP2 does not transmit a PDCCH.

The method for acquiring the QCL reference signal set of the second-type port group may include at least one of methods described below.

Method one: a method for determining the QCL reference signal set of the second-type port group configured by higher layer signaling.

For example, when a time interval between the DCI and the PDSCH is less than K, a QCL reference signal set of the DMRS group2 included in the PDSCH, a QCL reference signal set of a DMRS group 1 are configured to be QCL reference signal sets of the demodulation reference signal of a CORERSET with a lowest CORESETID in a slot closest to the PDSCH and including the CORESET in the higher layer of the PDSCH, as shown in FIG. 4.

Alternatively, when the time interval between the DCI and the PDSCH is less than K, the method for determining the QCL reference signal set of each DMRS group in all DMRS groups included in the PDSCH may also be configured in the higher layer signaling of the PDSCH. When the time interval between the PDSCH and the DCI scheduling the PDSCH is greater than K, a QCL reference signal set of a port group of the PDSCH is determined according to a TCI field indicated in the DCI, not according to the QCL reference signal set of the port group configured in the higher layer signaling.

To implement the above method, at least one of the following parameters may be obtained through signaling information or a predefined rule:

parameter one: a maximum number of port groups included in the channel or signal.

For example, the maximum number of demodulation reference signal groups included in the PDSCH is further configured in the higher layer signaling information of the PDSCH, that is, the number of demodulation reference signal groups included in the PDSCH indicated in the DCI does not exceed the maximum number configured by the higher layer signaling.

When the maximum number of port groups is greater than 1, the QCL reference signal of the DMRS group 1 is acquired according to the QCL reference signal set of the demodulation reference signal of the control resource with the lowest control resource identifier in the control resource group that the terminal needs to detect in a predefined time unit. The predefined time unit is the time unit closest to the PDSCH in time units of the including the control resources that need to be detected. Further, when other DMRS groups in addition to the DMRS group 1 are configured, and the interval between the DCI for scheduling the PDSCH and the PDSCH is configured to be less than K, the method for acquiring the QCL reference signal set of other DMRS groups, or the QCL reference signal set of other DMRS groups is configured. Alternatively, the higher layer signaling configures the QCL reference signal set of the port group for each port group in x3 port groups when the time interval between the DCI and the PDSCH is less than K, and x3 is the maximum number of port groups included in the PDSCH . For example, the following information is configured in the higher layer signaling configuration of the PDSCH.

For example, the following configuration is performed in the higher layer signaling of the PDSCH. In the present disclosure, different DMRS ports in one DMRS group satisfy the QCL relationship, and DMRS ports in different DMRS groups do not satisfy the QCL relationship.

PDSCH-Config ::=                                     SEQUENCE {

......,

the maximum number of DMRS groups included in the PDSCH (assuming to be 2), optional;
when the interval between the PDSCH and the DCI for scheduling the PDSCH is less than K, the method of acquiring the QCL reference signal set of the DMRS group 1; optional;
when the interval between the DCI for scheduling the PDSCH and the PDSCH is less than K, the method of acquiring the QCL reference signal set of the DMRS group2; optional} ;
alternatively, the following configuration is performed in the higher layer signaling of the PDSCH.

PDSCH-Config ::=                                        SEQUENCE {

......,

the maximum number of DMRS groups included in the PDSCH (assuming to be 2), optional;
when the interval between the DCI for scheduling the PDSCH and the PDSCH is less than K, the QCL reference
signal set of the DMRS group2; optional};

Parameter two: the maximum number of port groups included in the channel or signal when the time interval
between the control information scheduling the channel or signal and the channel or signal is less than the predefined
threshold.
For example, when the time interval between the DCI and the PDSCH is less than K, the number of port groups
included in the DCI for scheduling the PDSCH cannot exceed the maximum number of port groups, and the time interval
between the DCI and the PDSCH is greater than or equal to K, the number of port groups included in the DCI for
scheduling the PDSCH cannot exceed the predefined maximum number of port groups. For example, it is agreed that
the maximum number of DMRS groups included in one PDSCH is 2. When the interval between the DCI and the PDSCH
is less than the predefined threshold, the maximum number of DMRS port groups included in the DCI scheduling the
PDSCH is 1. When the interval between the DCI and the PDSCH is greater than or equal to the predefined threshold,
the maximum number of DMRS port groups included in the DCI for scheduling the PDSCH is 2. In short, the maximum
number of DMRS port groups that may be included in the PDSCH corresponding to this higher layer configuration
information when the interval between the DCI and the PDSCH is less than the predefined threshold and the maximum
number of DMRS port groups that may be included in the PDSCH corresponding to this higher layer configuration
information when the interval between the DCI and the PDSCH is greater than or equal to the predefined threshold may
be different.
The maximum number of port groups included in the channel or signal when the time interval between the
control channel for scheduling the channel or signal and the channel or signal is less than the predefined threshold may
be a predefined value, such as 1, or the higher layer signaling configuration information may include the following
information:

PDSCH-Config ::=                                        SEQUENCE {

......,

when the interval between the DCI for scheduling the PDSCH and the PDSCH is less than K, the maximum number
of DMRS groups included in the PDSCH (assuming to be 2), optional;
when the interval between the DCI for scheduling the PDSCH and the PDSCH is less than K, the method for acquiring
the QCL reference signal set of the DMRS group 1; optional;
when the interval between the DCI for scheduling the PDSCH and the PDSCH is less than K, the method for acquiring
the QCL reference signal set of the DMRS group2; optional}.

Alternatively, the following configuration is performed in the higher layer signaling of the PDSCH.

PDSCH-Config ::=                                        SEQUENCE {

......,

when the interval between the DCI for scheduling the PDSCH and the PDSCH is less than K, the maximum number
of DMRS groups included in the PDSCH (assuming to be 2), optional;
when the interval between the DCI for scheduling the PDSCH and the PDSCH is less than K, the method for acquiring
the QCL reference signal set of the DMRS group2; optional}.

Alternatively, the following configuration is performed in the higher layer signaling:

PDSCH-Config ::=                              SEQUENCE {

......,

the maximum number of DMRS groups included in the PDSCH when the interval between the DCI for scheduling the PDSCH and the PDSCH is less than K (assuming to be 1), optional,
when the time interval between the DCI for scheduling the PDSCH and the PDSCH is less than K, the QCL reference signal set of the DMRS group 1; optional}.

Parameter three: a method for determining the quasi-co-location reference signal set of each port group of the channel or signal.
For example, the determination method for configuring each port group is a first determination method or a second determination method. In the first determination method, the QCL reference signal set of the port group is the QCL reference signal set of the demodulation reference signal of the control resource satisfying the predefined feature; in the second determination method, the QCL reference signal set of the port group is not the QCL reference signal set of the demodulation reference signal of the control resource satisfying the predefined feature, such as may be acquired according to the quasi-co-location reference signal set configured in the higher layer signaling in the PDSCH.
Parameter four: the quasi-co-location reference signal set of each port group of the channel or signal, so the DCI may not include the TCI field, and the quasi-co-location reference signal set of each port group is explicitly configured by the higher layer signaling, or is acquired through the predefined rule.
Parameter five: a method for determining the quasi-co-location reference signal set of each port group of the channel or signal when the interval between the control information scheduling the channel or signal and the channel or signal is less than the predefined threshold. For example, the determination method includes the first determination method and the second determination method described above.
Parameter six: the quasi-co-location reference signal set of each port group of the channel or signal when the interval between the control information scheduling the channel or signal and the channel or signal is less than the predefined threshold.
The above information is notified by the higher layer signaling or previous physical layer control signaling that when the interval between the control information scheduling channel or signal and the channel or signal is greater than or equal to the predefined threshold, the quasi-co-location reference signal set of each port group is acquired according to the TCI field notified in the DCI and is no longer acquired according to any one of the above parameters 1 to 6. Of course, when the DCI does not include the TCI field, even if the interval between the control information and the channel or signal is greater than or equal to the predefined threshold, the quasi-co-location reference signal set of each port group may also be determined according to the above parameters 1 to 6. The method for determining the QCL reference signal set of the DMRS group2 or the PDSCH2 corresponds to the second determination method.
The channel or signal is the channel or signal corresponding to at least one port group in the P-type port groups.
Method two for acquiring the QCL reference signal set of the second-type port group: the QCL reference signal set of the second-type port group is acquired through the fourth quasi-co-location reference signal set (which is also called the fourth QCL reference signal set) associated with one control resource, the fourth quasi-co-location reference signal set is not the seventh quasi reference signal of the demodulation reference signal of the control resource.
For example, the following information is included in the configuration information of the CORESET:

```
ControlResourceSet ::=                    SEQUENCE {

controlResourceSetId                      1; (i.e., this CORESET is the CORESET1)

......

tci-StatesPDCCH                           SEQUENCE(SIZE  (1..maxNrofTCI-StatesPDCCH))  OF

TCI-StateId                               OPTIONAL, (used for configuring this control resource set, that

is the seventh QCL reference signal set of the demodulation reference signal of the CORESET)

tci-StatesPDSCH           SEQUENCE(SIZE (1..maxNrofTCI-StatesPDCCH)) OF TCI-StateId

                          OPTIONAL, (used for configuring the fourth QCL reference signal set)


                                                }
```

It needs to clarify that the above configuration information may be MAC-CE signaling, the MAC-CE signaling simultaneously activates tci-StatesPDCCH and tci-StatesPDSCH, tci-StatesPDCCH and tci-StatesPDSCH from one TCI state pool configured by the radio resource control (RRC) of the PDCCH ; or the above signaling is RRC signaling, and two TCI state pools of tci-StatesPDCCH and tci-StatesPDSCH are configured in the RRC signaling, and the MAC-CE signaling further activates one TCI state for tci-StatesPDCCH and tci-StatesPDSCH respectively.

Specifically, when the interval between the PDSCH and the DCI is less than K, and the CORESET with the lowest CORESETID in the slot closest to the PDSCH is the above configured CORESET, the QCL reference signal set of the DMRS group 1 of this PDSCH is acquired according to the QCL reference signal set of the demodulation reference signal of the above CORESET, i.e., acquired according to information configured by tci-StatesPDCCH 1, and the QCL reference signal set of the DMRS group 2 is acquired according to the QCL reference signal set configured in tci-StatesPDSCH 1 in the CORESET.

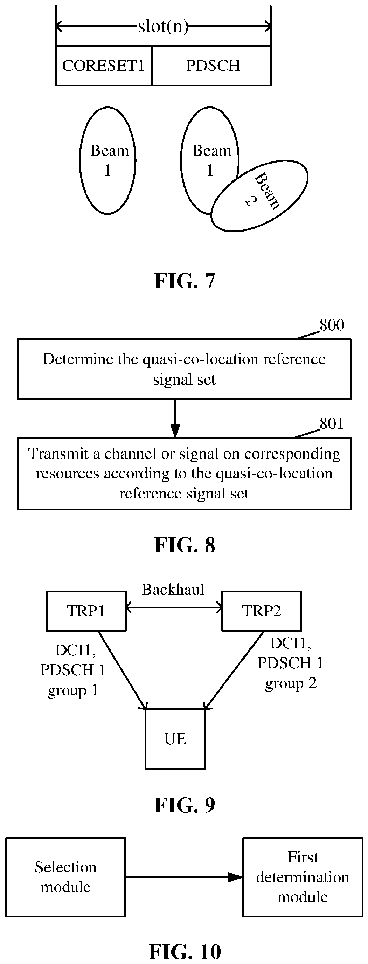

As shown in FIG. 7, on the slot(n), the CORESET1 is on first 3 time domain symbols, and the PDSCH is on subsequent time domain symbols. The time interval between the DCI for scheduling the PDSCH and the PDSCH is less than the predefined threshold K, and when receiving the PDSCH, the terminal receives the CORESET according to a receiving beam 1 obtained by information configured by tci-StatesPDCCH, receives the DMRS group 1 of the PDSCH by using the receiving beam 1, and receives the DMRS group 2 of the PDSCH according to a receiving beam 2 obtained by information configured by tci-StatesPDSCH.

Optionally, tci-StatesPDSCH may have a relationship with a time domain set, and different time domain sets correspond to different tci-StatesPDSCH configurations.

For example, the CORESET with the lowest CORESETID in the slot (n) is in the time unit closest to the PDSCH1 is the CORESET1 (i.e., the CORESET1 configured in the above configuration information), and a beam corresponding to a TCI state1 corresponding to tci-StatesPDSCH in the slot(n) of the CORESET1 is a beam 2. The beam 2 is used for receiving the DMRS group2 of the PDSCH1; the CORESET with the lowest CORESETID in slot (n+10) in the time unit closest to the PDSCH2 is the CORESET1, and a beam corresponding to a TCI state2 corresponding to the tci-StatesPDSCH in the slot (n+10) of the CORESET1 is a beam 3. The beam 3 is used for receiving the DMRS group 2 of the PDSCH2.

In FIG. 7, different DMRS groups of the same PDSCH use the acquisition method of different QCL reference signal sets. In FIG. 5, the TRP1 transmits the DCI1, the DCI2 and the PDSCH1, the TRP2 transmits the PDSCH2, where the DCI1 schedules the PDSCH1 and the DCI2 schedules the PDSCH2.

When the time interval between the DCI1 and the PDSCH1 is less than K, according to the QCL reference signal set (i.e., the seventh QCL reference signal set or the QCL reference signal set configured by the above tci-StatesPDCCH) of the demodulation reference signal of the CORESET with the lowest CORESETID in the time unit closest to the PDSCH1 (assuming to be a time unit 1), the QCL reference signal set of the PDSCH1 is acquired.

According to tci-StatesPDSCH (i.e., the fourth quasi-co-location reference signal set) configured in the CORESET (assuming to be the CORESET configured above) with the lowest CORESETID in the time unit (assuming to be a time unit 2) closest to the PDSCH2, the QCL reference signal set of the demodulation reference signal of the PDSCH2.

The time unit 1 and the time unit 2 may be the same time units or different time units.

tci-StatesPDSCH may correspond to different QCL reference signal sets in different time domain sets. For example, when the CORESET lies in a first time domain set, the QCL reference signal set of the PDSCH2 is a reference signal set 1; when the CORESET lies in a second time domain set, the QCL reference signal set of the PDSCH2 is reference signal set 2.

Further, when the DCI in the CORESET1 may be cross-CC scheduled, tci-StatesPDSCH in the CORESET1 should correspond to multiple CCs that may be scheduled by the CORESET1 separately, so that when the terminal is caching and the interval between the DCI and the PDSCH is less than K, for the PDSCH in each CC, the DMRS group 2 of the PDSCH or the quasi-co-location reference signal set of the DMRS of the PDSCH 2 in the CC. Alternatively, tci-StatesPDSCH only configures the quasi-co-location reference signal associated with the spatial Rx filter parameter, so even if the CORESET1 may schedule PDSCHs/CSI-RSs in multiple CCs, but only one quasi-co-location reference signal is configured in tci-StatesPDSCH. The spatial Rx filter parameters of multiple CCs may use one quasi-co-location reference signal, and the quasi-co-location reference signal of other QCL parameters of the PDSCH in each CC may be obtained according to the DCI or the higher layer configuration in each CC.

Further, it is necessary to configure in the configuration information of the PDSCH that when the time interval between the DCI and the PDSCH is less than K, the QCL reference signal set of the demodulation reference signal of the PDSCH is acquired according to tci-StatesPDCCH configured in the CORESET with the lowest CORESETID in the time unit closest to the PDSCH (corresponding to the first determination method), or is acquired according to tci-StatesPDSCH configured in the CORESET with the lowest CORESETID in the time unit closest to the PDSCH (corresponding to the second determination method).

The above is that tci-StatesPDCCH and tci-StatesPDSCH are included in the configuration of CORESET, or two QCL reference signal sets may also be included in one TCI state of tci-StatesPDCCH. A first QCL reference signal set is the QCL reference signal set of the demodulation reference signal of the CORESET, (that is, the seventh QCL reference signal set), when the interval between one PDSCH and the DCI for scheduling the PDSCH (more strictly speaking, which should include the PDCCH for scheduling the PDSCH) is less than K, a CORESET with the lowest CORESETID in a slot including the CORESET and closest to the PDSCH is the CORESET, the quasi-co-location reference signal set of the demodulation reference signal of the PDSCH is acquired according to a second QCL reference signal set included in the TCI state of tci-StatesPDCCH, or a quasi-co-location reference signal set of a second demodulation reference signal group of the PDSCH is acquired according to the second QCL reference signal set included in the above TCI state.

In the above embodiment, the method for determining the QCL reference signal set of the port group is applicable when the time interval between the control information (DCI) for scheduling the channel or signal corresponding to the port group and the channel or signal is less than the predefined threshold, of course, the method for acquiring the QCL reference signal set of the port group is also applicable to a case in which the control information scheduling the channel or signal corresponding to the port group does not include the QCL reference signal set of the port group. That is, dynamic signaling does not include the TCI field, namely, the method for determining the QCL reference signal set of the demodulation reference signal is not notified in the dynamic control signaling. For example, the DCI included in the CORESET in which DCI1_0 and DCI1_1 are located is not configured to include the TCI field. Optionally, the DCI does not include the TCI field, and when the interval between the DCI and the PDSCH is greater than the predefined threshold, the first time unit or the second time unit are time units in which the DCI is located or multiple time units closest to the DCI. The N2 control resources include the control resources in which the DCI is located. For example, the PDSCH includes two DMRS groups, the DMRS group 1 is determined according to the QCL reference signal of the demodulation reference signal of the CORESET in which the DCI1 is located, and the quasi-co-location reference signal set of the DMRS group2 may be determined according to the method for determining the quasi-co-location reference signal of the DMRS group2. Where the DCI1 is the DCI for scheduling the PDSCH, and the quasi-co-location reference signal set of the DMRS group2 may also be determined according to one of the following methods:

Method one: acquiring according to the quasi-co-location reference signal set of the demodulation reference signal of the CORESET with the lowest CORESETID in CORESETs in addition to the CORESET1 in the time unit closest to the time unit in which the DCI1 is located.

Method two: determining according to the quasi-co-location reference signal set of the demodulation reference signal of the CORESET with the lowest CORESETID in CORESET groups in addition to a CORESET group in which the CORESET1 is located in the time unit closest to the time units in which the DCI1 is located, where the CORESET1 is the CORESET in which the DCI is located.

Method three: acquiring the QCL reference signal set of the DMRS group2 according to tci-StatesPDSCH configured in the CORESET of the control channel in which the DCI1 is located, or acquiring the QCL reference signal set of the DMRS group2 according to a second QCL reference signal set configured in tci-StatesPDCCH configured by the CORESET in which the control channel in which the DCI is located.

In the present disclosure, the CORESET in which the DCI is located, that is, the CORESET in which the PDCCH including the DCI is located, the interval between the DCI/control signaling for scheduling the PDSCH/AP-CSI-RS and the PDCCH, more strictly speaking, it should be the interval between the PDCCH for scheduling the PDSCH/AP-CSI-RS and the PDCCH, where the DCI includes transmission parameters for scheduling the PDSCH/AP-CSI-RS, and a DCI channel is transmitted in the PDCCH after being encoded. The control signaling may correspond to the control channel.

A demodulation reference signal of one CORESET in the present disclosure refers to a demodulation reference signal of the DCI transmitted in this CORESET, or a demodulation reference signal of the PDCCH transmitted in this CORESET.

In the above embodiment, the QCL reference signal set of one target reference signal indicates that reference signals in a target reference signal and a reference signal in the QCL reference signal set satisfy the QCL relationship with respect to one type of QCL parameters, and the two reference signals satisfying the QCL relationship with respect to one type of QCL parameters indicates that a QCL parameter of one reference signal may be acquired according to a QCL parameter of another reference signal. The one type of QCL parameter includes at least one of the following parameters: a Doppler shift, a Doppler spread, an average delay, a delay spread and a spatial Rx parameter).

In the present disclosure, the signal includes at least one of the following signals: a demodulation reference signal, a measurement reference signal, a synchronization signal, a phase tracking reference signal (PTRS) and a tracking reference signal (TRS).

The channel includes at least one of the following channels: a physical downlink shared channel (PDSCH), a physical downlink control channel (PDCCH), a physical uplink shared channel (PUSCH) and a physical uplink control channel (PUCCH).

Another embodiment of the present disclosure provides a method for determining a QCL reference signal set, the method includes a step described below.

A second quasi-co-location reference signal set corresponding to a second-type port group is determined.

In the embodiment of the present disclosure, the step in which the second quasi-co-location reference signal set corresponding to the second-type port group is determined includes at least one of steps described below.

A second quasi-co-location reference signal set is determined according to a fourth quasi-co-location reference signal set, where the fourth quasi-co-location reference signal set and a control resource satisfying a second predefined feature have a correspondence.

The second quasi-co-location reference signal set is determined according to a fifth quasi-co-location reference signal set notified by first control signaling.

The second quasi-co-location reference signal set is determined according to a sixth quasi-co-location reference signal set, where the sixth quasi-co-location reference signal set and a seventh quasi-co-location reference signal set have a correspondence, the seventh quasi-co-location reference signal set includes a quasi-co-location reference signal set of a demodulation reference signal of the control resource satisfying the second predefined feature in a second time unit.

The second quasi-co-location reference signal set is determined according to configuration information of the control resource in which a control channel scheduling a channel or signal corresponding to a first-type port group is located.

In the embodiment of the present disclosure, the step in which the second quasi-co-location reference signal set is determined according to the fourth quasi-co-location reference signal set, where the fourth quasi-co-location reference signal set and the control resource satisfying a second predefined feature have the correspondence includes at least one of steps described below.

A first quasi-co-location reference signal set of the first-type port group is acquired according to the seventh quasi-co-location reference signal set of the demodulation reference signal of the control channel in the control resource satisfying the second predefined feature in the second time unit.

The fourth quasi-co-location reference signal set is a quasi-co-location reference signal set configured for a frequency bandwidth in which a second-type port group is located in configuration information of the control resource satisfying the second predefined feature.

Configuration information of the control resource satisfying the second predefined feature is configured with at least one of the fourth quasi-co-location reference signal set, where different fourth quasi-co-location reference signal sets correspond to different frequency bandwidths. In the configuration information, the fourth quasi-co-location reference signal set is configured for each frequency bandwidth (such as the CC).

One fourth quasi-co-location reference signal set is configured in the configuration information of the control resource satisfying the second predefined feature, and the fourth quasi-co-location reference signal set is shared with at least one frequency bandwidth having a correspondence with the control resource satisfying the second predefined feature, and/or the fourth quasi-co-location reference signal set is associated with a spatial Rx filter parameter.

In the embodiment of the present disclosure, the step in which the second quasi-co-location reference signal set is determined according to the sixth quasi-co-location reference signal set, where the sixth quasi-co-location reference signal set and the seventh quasi-co-location reference signal set have the correspondence, the seventh quasi-co-location reference signal set includes the quasi-co-location reference signal set of the demodulation reference signal of the control resource satisfying the second predefined feature in the second time unit includes at least one of steps described below.

A first quasi-co-location reference signal set of the first-type port group is acquired according to the seventh quasi-co-location reference signal set.

The sixth quasi-co-location reference signal set is a quasi-co-location reference signal configured for a frequency bandwidth in which the second-type port group is located in the seventh quasi-co-location reference signal set.

At least one sixth quasi-co-location reference signal set configured in the seventh quasi-co-location reference signal set corresponds to at least one frequency bandwidth, where different sixth quasi-co-location reference signal sets correspond to different frequency bandwidths.

In the embodiment of the present disclosure, the step in which the second quasi-co-location reference signal set is determined according to configuration information of the control resource in which a control channel scheduling a channel or signal corresponding to a first-type port group is located includes at least one of steps described below.

A first quasi-co-location reference signal set of the first-type port group is acquired according to an eighth quasi-co-location reference signal set of the demodulation reference signal of the control channel.

The second quasi-co-location reference signal set of a second-type port group is a quasi-co-location reference signal set configured for a frequency bandwidth in which a second-type port group is located in the control resource.

Configuration information of the control resource includes at least one of the second quasi-co-location reference signal set, where different second quasi-co-location reference signal sets correspond to different frequency bandwidths.

The eighth quasi-co-location reference signal set and the second quasi-co-location reference signal set are different quasi-co-location reference signal sets.

In the embodiment of the present disclosure, the control resource satisfying the second predefined feature in the second time unit includes at least one of: a control resource having a lowest identification number in the second time unit; a control resource belonging to a frequency bandwidth having a lowest frequency bandwidth identification number in a set formed by control resources having the lowest identification number in the second time unit; a control resource having the lowest identification number included in the frequency bandwidth having the lowest frequency bandwidth identification number in a set formed by frequency bandwidths satisfying a third predefined feature in the second time unit; a control resource having the lowest identification number in a set formed by control resources satisfying the fourth predefined feature in the second time unit; a control resource belonging to the frequency bandwidth having the lowest frequency bandwidth identification number in a set formed by control resources having the lowest identification number in a set formed by the control resources satisfying the fourth predefined feature in the second time unit; or a control resource having the lowest identification number and satisfying the fourth predefined feature in the frequency bandwidth having the lowest frequency bandwidth identification number in a set formed by the frequency bandwidths satisfying the third predefined feature in the second time unit.

The frequency bandwidth satisfying the third predefined feature includes at least one control resource satisfying the first predefined feature in the second time unit.

In the embodiment of the present disclosure, the first-type port group satisfies at least one of the following features: the first-type port group and the second-type port group being different port groups included in one channel or signal; the first-type port group and the second-type port group belonging to different channels or signals; an intersection between time domain resources occupied by the channel or signal corresponding to the first-type port group and time domain resources occupied by the channel or signal corresponding to the second-type port group being not empty; the first-type port group and the second-type port group belonging to a same frequency bandwidth; a relationship between a first time interval and a predefined threshold being consistent with a relationship between a second time interval and the predefined threshold, where the first time interval is a time interval between the channel or signal corresponding to the first-type port group and the control channel scheduling the first-type port group, and the second time interval is a time interval between the channel or signal corresponding to the second-type port group and the control channel scheduling the second-type port group.

The relationship between the first time interval and the predefined threshold being consistent with the relationship between the second time interval and the predefined threshold means that the first time interval and the second time interval are both greater than or equal to the predefined threshold, or both are less than the predefined threshold.

In the embodiment of the present disclosure, the seventh quasi-co-location reference signal set satisfies at least one of: the seventh quasi-co-location reference signal set and the fourth quasi-co-location reference signal set being different quasi-co-location reference signal sets; the seventh quasi-co-location reference signal set and the fourth quasi-co-location reference signal set corresponding to different control signaling bit fields; the seventh quasi-co-location reference signal set and the fifth quasi-co-location reference signal set being different quasi-co-location reference signal sets; the seventh quasi-co-location reference signal set and the fifth quasi-co-location reference signal set corresponding to different control signaling bit fields; the seventh quasi-co-location reference signal set and the sixth quasi-co-location reference signal set being different quasi-co-location reference signal sets; the seventh quasi-co-location reference signal set and the sixth quasi-co-location reference signal set corresponding to different control signaling bit fields; a difference set between the seventh quasi-co-location reference signal set and the fourth quasi-co-location reference signal set being a non-empty set; a difference set between the seventh quasi-co-location reference signal set and the fifth quasi-co-location reference signal set being the non-empty set; or a difference set between the seventh quasi-co-location reference signal set and the sixth quasi-co-location reference signal set being the non-empty set; the seventh quasi-co-location reference signal set being a quasi-co-location reference signal set of a demodulation reference signal of a control resource in which control information scheduling a channel or signal corresponding to the first-type port group is located; or the control resource satisfying the predefined feature in the second time unit being the control resource in which the control information scheduling the channel or signal corresponding to the first-type port group is located.

In the embodiment of the present disclosure, the step in which the fourth quasi-co-location reference signal set and the control resource satisfying the predefined feature in the second time unit have the correspondence includes at least one of: the fourth quasi-co-location reference signal set being a quasi-co-location reference signal set configured for a second-type port group in configuration information of the control resource satisfying the predefined feature; the fourth quasi-co-location reference signal set being a quasi-co-location reference signal set configured for a frequency bandwidth in which the second-type port group is located in the configuration information of the control resource satisfying the predefined feature.

In the embodiment of the present disclosure, the step in which the second quasi-co-location reference signal set is determined according to configuration information of the control resource in which the control channel scheduling the channel or signal corresponding to the first-type port group is located includes: the quasi-co-location reference signal set configured for the second-type port group in the configuration information of the control resource where the control channel is located is the second quasi-co-location reference signal set.

In the embodiment of the present disclosure, the second time unit includes any one of: a time unit closest to a channel corresponding to a second-type port group in time units satisfying a second predefined feature; a time unit closest to a measurement channel resource corresponding to the second-type port group in the time units satisfying the second predefined feature; a time unit closest to the second-type port group in the time units satisfying the second predefined feature; or a time unit in which control signaling for scheduling the channel or signal is located. In the embodiment of the present disclosure, the time units satisfying the second predefined feature includes one of: a time unit including control resources in a predefined component carrier; a time unit including control resources in a predefined component carrier group; a time unit including at least L control resources, where L is a positive integer greater than or equal to 1; a time unit including control resources in a predefined control resource group; or a time unit including control resources satisfying a fourth predefined feature, where the control resources satisfying the fourth predefined feature satisfy at least one of: the control resource being associated with the fourth quasi-co-location reference signal set; the sixth quasi-co-location reference signal set being associated with the seventh quasi-co-location reference signal set of the demodulation reference signal of the control resource; a center carrier of a component carrier in which the control resource is located being greater than a predefined threshold; the demodulation reference signal of the control resource and one quasi-co-location reference signal satisfying a quasi-co-location relationship with respect to a spatial Rx filter parameter; the demodulation reference signal of the control resource being configured with a quasi-co-location reference signal with respect to the spatial Rx filter parameter; the control resource and the second-type port group lying within a same frequency bandwidth; the control resource belonging to a predefined frequency bandwidth; the control resource being associated with at least one candidate control channel monitored by a first communication node in the time units, where the first communication node is a receiving end of the second-type port group.

A frequency bandwidth may be a bandwidth corresponding to one CC or a bandwidth corresponding to one BWP.

In the embodiment of the present disclosure, where first parameter information is determined according to second control signaling and/or an agreed rule, and according to the first parameter information, at least one of the following is determined: the quasi-co-location reference signal set; whether the second-type port group is included in one time unit; a number of port groups included in one time unit; a number of port groups satisfying a predefined feature included in one time unit.

For example, G PDSCHs need to be buffered in one slot, and the number of port groups included in the one slot is determined according to the number of demodulation reference signal groups included in each PDSCH of the G PDSCHs, and the number of port groups satisfying the predefined feature and included in the one slot. For example, an interval between these port groups and the DCI scheduling these port groups is less than K, for example, an interval between each PDSCH in the G PDSCHs and the DCI scheduling the PDSCH may be less than K. Of course, the G PDSCHs may include PDSCHs whose scheduling time interval is less than K, and may also include PDSCHs whose scheduling time interval is greater than K.

In the embodiment of the present disclosure, the first parameter information includes at least one of: a maximum number of port groups included in each channel or signal in G channels or signals; a maximum number of port groups included in each channel or signal in the G channels or signals in response to a time interval between control information scheduling the channel or signal and the channel or signal being less than the predefined threshold; a method for determining the quasi-co-location reference signal set of each port group of each channel or signal in the G channels or signals; the quasi-co-location reference signal set of each port group of each channel or signal in the G channels or signals; a method for determining the quasi-co-location reference signal set of each port group of each channel or signal in the G channels or signals in response to the time interval between the control information scheduling the channel or signal and the channel or signal being less than the predefined threshold; the quasi-co-location reference signal set of each port group of each channel or signal in the G channels or signals in response to the time interval between the control information scheduling the channel or signal and the channel or signal being less than the predefined threshold; a maximum number of port groups satisfying the predefined feature included in the one time unit; a maximum number of port groups included in the one time unit; where an intersection between time domain resource occupied by each channel or signal in the G channels or signals and the one time unit is not empty, and G is a positive integer greater than or equal to 1.

In the embodiment of the present disclosure, the number of port groups included in the channel or the signal satisfies at least one of the following features: the maximum number of port groups included in the channel or signal being related to a number of control resources; in response to a time interval between the control information scheduling the channel or signal and the channel or signal being less than the predefined threshold, the maximum number of port groups included in the channel or signal being related to the number of control resources; the maximum number of port groups included in the channel or signal being related to a number of control resource groups; in response to a time interval between the control information scheduling the channel or signal and the channel or signal being less than the predefined threshold, the maximum number of port groups included in the channel or signal being related to the number of control resource groups.

In the embodiment of the present disclosure, the second control signaling includes at least one of: non-physical layer signaling information; higher layer signaling information; configuring signaling information of the channel corresponding to the second-type port group; configuring signaling information of a measurement reference signal resource corresponding to the second-type port group; configuration information of a control resource in which the control information scheduling the channel corresponding to the second-type port group; configuration information of a control resource satisfying a predefined feature included in a time unit closest to the channel corresponding to the second-type port group; configuration information of a control resource in which control information scheduling the measurement reference signal resource corresponding to the second-type port group; or configuration information of a control resource satisfying a predefined feature included in a time unit closest to the measurement reference signal resource corresponding to the second-type port group.

In the embodiment of the present disclosure, where the port groups satisfying the predefined feature satisfy at least one of: a port group belonging to a predefined frequency bandwidth in the one time unit; an interval between the port group and the control signaling for scheduling the port group being less than the predefined threshold; an interval between the channel or signal corresponding to the port group and the control signaling for scheduling the port group being less than the predefined threshold; a port group in which the frequency bandwidth is greater than the predefined threshold; or a port group associated with the spatial Rx filter parameter of the quasi-co-location reference signal existing.

In the embodiment of the present disclosure, the number of port groups included in the one time unit or the number of port groups satisfying the predefined feature included in the one time unit satisfy at least one of the following features: a maximum number of port groups being related to a number of control resources; a maximum number of port groups being related to a number of control resources; a maximum number of port groups being related to a number of control resources included in the time unit; or a maximum number of port groups being related to a number of control resource groups included in the time unit.

In the embodiment of the present disclosure, where the second-type port group satisfies at least one of: the time interval between the channel or signal and the control signaling for scheduling the channel or signal being less than the predefined threshold; the time interval between the channel or signal and the control channel scheduling the channel or signal being less than the predefined threshold; the control signaling for scheduling the channel or signal not including notification information of the quasi-co-location reference signal set of the second-type port group; the signal being a periodic signal; the signal being a semi-periodic signal; or the channel being a semi-periodic scheduling channel; where the channel or signal is a channel or signal corresponding to at least one port group in the second-type port group.

The method for determining the second QCL reference signal set of the second-type port group in the embodiment of the present disclosure is similar to the method for determining the QCL reference signal set of the P-type port groups in the above embodiment, and will not be repeated here.

Referring to FIG. 8, another embodiment of the present disclosure provides a method for determining a quasi-co-location reference signal set, the method includes steps described below. In step 800, the quasi-co-location reference signal set is determined.

In step 801, a channel or signal on corresponding resources is transmitted according to the quasi-co-location reference signal set.

In the embodiment of the present disclosure, the step in which one resource corresponds to A quasi-co-location reference signal sets includes:

The resources and reference signals in each reference signal set in the A quasi-co-location reference signal sets have a quasi-co-location relationship with respect to a type of quasi-co-location parameters, and A is an integer greater than or equal to 1.

The one resource includes any of: one demodulation reference signal port resource, one measurement reference signal port resource, one control resource, and one data channel resource.

In the embodiment of the present disclosure, the channel or signal is transmitted on the corresponding resource according to the quasi-co-location reference signal set; or the channel or signal is received on the corresponding resource according to the quasi-co-location reference signal set.

In the embodiment of the present disclosure, the step in which one resource corresponds to A quasi-co-location reference signal sets includes: the A quasi-co-location reference signal sets including a first quasi-co-location reference signal set and a second quasi-co-location reference signal set; where a difference set between a first quasi-co-location parameter set associated with the first quasi-co-location reference signal set and a second quasi-co-location parameter set associated with the second quasi-co-location reference signal set is an empty set.

Where the first quasi-co-location parameter set and the second quasi-co-location parameter set include at least one of the following parameters: a Doppler shift, a Doppler spread, an average delay, a delay spread, and a Spatial Rx parameter.

In the embodiment of the present disclosure, A1 frequency domain resource sets of the one resource correspond to A1 quasi-co-location reference signal sets.

A2 time domain resource sets of the one resource correspond to A2 quasi-co-location reference signal sets.

A1 and A2 are positive integers less than or equal to a value of A.

In the method shown in FIG. 9, there is an ideal Backhaul between a TRP1 and a TRP2. In order to increase the PDCCH robustness, the TRP1 and the TRP2 may both transmit the same DCI, so the following solutions are presented.

Solution 1 A DMRS of one PDCCH is associated with multiple QCL reference signal sets, and a difference set between the QCL parameter sets associated with the multiple QCL reference signal sets is empty, that is, the QCL parameter sets associated with the multiple QCL reference signal sets are same. In this case, two beams are used for transmitting the same PDCCH on the same time frequency resource.

Table 1

| DMRS group | | |
|---|---|---|
| DMRS group | CSI-RS1-{ } | |

As shown in Table 1, one DMRS group corresponds to two QCL reference signal sets.

Solution 2: different time domains of one CORESET correspond to different QCL reference signal sets. For example, the same CORESET corresponds to different QCL reference signal sets in different slots, or the same CORESET corresponds to different QCL reference signal sets in different time domain symbol sets of the same slot. In this case, the same PDCCH is transmitted by different beams on different time domain resources.

Solution 3: different frequency domains of one CORESET correspond to different QCL reference signal sets. For example, a first physical resource block (PRB) set of the same CORESET corresponds to a first QCL reference signal set, and a second PRB set of the same CORESET corresponds to a second QCL reference signal set. In this case, the same PDCCH is transmitted by different beams on different frequency domain resources.

Solution 4: two CORESETs are configured, each CORESET corresponds to one QCL reference signal set, and then the two CORESETs is configured to have different transmissions for the same PDCCH.

Optionally, it may be agreed to use a same aggregation degree for transmission in the two CORESETs for the same PDCCH.

Different QCL reference signal sets are corresponded in different slots of a CORESET, or different QCL reference signal sets are mapped in different time domain symbol sets in the same slot of the same CORESET.

In the present disclosure, one port group may also be called a quasi-co-location port group. The reference signals in one port group satisfy the QCL relationship, but the reference signals in different port groups do not satisfy the QCL relationship.

In the embodiment of the present disclosure, when the time interval between the channel or signal and the control signaling for scheduling the channel or signal is less than the predefined threshold, or the control signaling for scheduling the channel or signal does not include notification information of the QCL reference signal set of the port group, or when the channel is an SPS-PDSCH or the signal is a periodic signal, a half-period signal, the above method is used for solving the signal receiving problem and improving the success rate for receiving the signal.

Referring to FIG. 10, another embodiment of the present disclosure provides an apparatus for determining a quasi-co-location reference signal set, the apparatus includes a selection module and a first determination module.

The selection module is used for selecting N2 control resources from control resources included in N1 time units; where N1 and N2 are integers greater than or equal to 1.

The first determination module is used for determining at least M quasi-co-location reference signal sets of M port groups according to the N2 control resources, where M is an integer greater than or equal to 1.

In the embodiment of the present disclosure, the M port groups satisfy at least one of the following features: the M port groups lying within a same occasion; the M port groups lying within a same time unit; M1 channels or signals corresponding to the M port groups lying within a same occasion; M1 channels or signals corresponding to the M port groups lying within a same time unit; the M port groups being M demodulation reference signal (DMRS) port groups corresponding to M1 data channels; or the M port groups being M measurement reference signal port groups corresponding to at least one measurement reference resource; M1 is a positive integer less than or equal to M.

In the embodiment of the present disclosure, the N1 time units includes at least one of: a time unit in which a channel or signal corresponding to at least one of the M port groups is located; a time unit preceding a time unit in which the channel or signal is located; a time unit in which control signaling for scheduling the channel or signal is located; N1 time units first to Nlth closest to the channel or signal in time units including at least L1 control resources, where L1 is a positive integer less than or equal to N2; a time unit closest to the channel or signal in a time unit set including at least N2 control resources; time units included in a time unit set closest to the channel or signal in time unit sets including the at least N2 control resources and in which demodulation reference signals of any two control resources in the at least N2 control resources are not satisfied with a quasi-co-location relationship with respect to a spatial receive parameter; and a time unit in which a time interval between the time unit and the channel or signal is less than or equal to a time interval between the control signaling for scheduling the channel or signal and the channel or signal; a time unit disposed between the time unit in which the control signaling for scheduling the channel or signal is located and the time unit in which the channel or signal is located; or a time unit whose distance from the channel or signal is less than a predefined threshold.

In the embodiment of the present disclosure, the N1 time units includes at least one of: time units included in a time unit set closest to a channel or signal in time unit sets including at least N2 control resources; time units included in a time unit set closest to the channel or signal in time unit sets including at least N2 control resources satisfying a first predefined feature; or N1 time units first to Nlth closest to the channel or signal in the time units including at least L1 control resources satisfying the first predefined feature, where L1 is a positive integer less than or equal to N2; where the control resources satisfying the first predefined feature include at least one of the following: a control resource where a center carrier of the component carrier in which the control resource is located is greater than a predefined threshold; a control resource where the demodulation reference signal and a quasi-co-location reference signal satisfy the quasi-co-location relationship with respect to a spatial Rx filter parameter; a control resource in which the demodulation reference signal configures a quasi-co-location reference signal with respect to the spatial Rx filter parameter; a control resource lying within a same frequency bandwidth as the port groups; demodulation reference signals of different control resources in the N2 control resources or the L1 control resources not satisfying the quasi-co-location relationship with respect to the spatial Rx filter parameter; a control resource belonging to a predefined frequency bandwidth or a predefined frequency bandwidth group; control resources belonging to a control resource group; control resources belonging to a frequency bandwidth or a frequency bandwidth group; or at least associating with one control resource in candidate control channels monitored by a first communication node in the time units, where the first communication node is a receiving node of the port groups.

In the embodiment of the present disclosure, the selection module is specifically used for: selecting the N2 control resources from the control resources included in the N1 time units according to configuration information of a channel or signal; selecting the N2 control resources from the control resources included in the N1 time units according to configuration information of the control resource in which a control channel for scheduling the channel or signal is located; or selecting the N2 control resources satisfying a second predefined feature from the control resources included in the N1 time units.

The channel or signal is a channel or signal corresponding to at least one port group in the M port groups.

In the embodiment of the present disclosure, the selection module is specifically used for selecting N2 control resources satisfying the second predefined feature from the control resources included in the N1 time units by using any of: selecting N2 control resources having Lth lowest to (L+N2-1)-th lowest control resource identifiers from the control resources included in the N1 time units; selecting the N2 control resources having Lth lowest to (L+N2-1)-th lowest control resource identifiers from the control resources in which the demodulation reference signals do not satisfy the quasi-co-location relationship with respect to the spatial Rx filter parameter included in the N1 time units, where L is an integer greater than or equal to 1.

In the embodiment of the present disclosure, the first determination module is also used for: determining a quasi-co-location reference signal set of any one port group of the M port groups according to configuration information of at least one control resource in the N2 control resources, where M is a positive integer less than or equal to N2; or determining the quasi-co-location reference signal set of any one port group of the M port groups according to a quasi-co-location reference signal set of demodulation reference signals of at least one control resource in the N2 control resources.

In the embodiment of the present disclosure, the channel or signal corresponding to at least one port group of the M port groups satisfies at least one of: a time interval between the channel or signal and a control channel scheduling the channel or signal being less than a predefined threshold; the control signaling for scheduling the channel or signal not including notification information of the quasi-co-location reference signal sets of the port groups; the control signaling for scheduling the channel or signal not including notification information of the quasi-co-location reference signal sets of the port groups; the signal being a periodic signal; the signal being a semi-periodic signal; or the channel being a semi-persistent scheduling channel. In the embodiment of the present disclosure, where the N1 time units include M2 time unit groups, and the M port groups correspond to the M2 time unit groups, where M2 is a positive integer greater than or equal to 1; and/or the M port groups correspond to M3 control resource groups, and M3 is a positive integer greater than or equal to 1.

In the embodiment of the present disclosure, where an intersection between the time units included in different time unit groups is not empty.

In the embodiment of the present disclosure, quasi-co-location reference signal sets of the port groups corresponding to the time unit groups are determined according to N4 control resources selected from the time unit groups.

Where N4 is a positive integer less than or equal to N2, and N4 corresponding to different time unit groups have a same value or different values.

In the embodiment of the present disclosure, where the time unit groups include N3 time units first closest to N3-th closest to a channel or signal in the time units satisfying a first feature, where N3 is an integer greater than or equal to 1; where the time units satisfying the first feature include at least L2 control resources in the control resource groups, and L2 is an integer greater than or equal to 1; the channel or signal includes the port groups corresponding to the time unit groups;

where the control resource groups include at least one of: the control resource groups corresponding to the port groups corresponding to the time unit groups; the control resource groups corresponding to the port groups included in the channel or signal; and the control resource groups corresponding to at least one port group.

In the embodiment of the present disclosure, the selection module is specifically used for: selecting N4 control resources from the control resources belonging to the control resource groups and included in the N3 time units, where the control resource groups correspond to at least one port group in the port groups.

The first determination module is specifically used for: determining quasi-co-location reference signal sets of the port groups corresponding to the control resource groups according to the N4 control resources.

Where N3 is a positive integer less than or equal to N1, N4 is a positive integer less than or equal to N2, and L2 is a positive integer less than or equal to N4, N4 corresponding to different port groups have a same value or different values, and N3 corresponding to different port groups have a same value or different values.

In the embodiment of the present disclosure, the selection module is specifically used for: selecting N2 control resources having Lth lowest to (L+N2-1)-th lowest control resource identifiers from the control resources belonging to the control resource group and included in N1 time units; selecting N2 control resources having Lth lowest to (L+N2-1)-th lowest control resource identifiers from the control resources in which demodulation reference signals do not satisfy a quasi-co-location relationship with respect to a spatial Rx filter parameter from the control resources belonging to the control resource group and included in N1 time units, where L is an integer greater than or equal to 1.

In the embodiment of the present disclosure, the M port groups corresponding to M3 control resource groups includes at least one of: any one port group in the M port groups corresponding to at least one control resource group; any one control resource group in the M3 control resource groups corresponding to at least one port group; determining a correspondence between the M port groups and the M3 control resource groups according to signaling information; determining a correspondence between the M port groups and the M3 control resource groups according to an agreed rule; determining a control resource group corresponding to one port group according to the signaling information; determining a control resource group corresponding to one port group according to the agreed rule; a control resource group corresponding to one port group being a control resource group to which the control resources in which control information scheduling a channel or signal is located belong, where the channel or signal includes the port group; a control resource group corresponding to one port group being a control resource group of control resources in a predefined component carrier; a control resource group corresponding to one port group being a control resource group including control resources in a predefined component carrier group; a control resource group corresponding to one port group being a control resource group including control resources satisfying a first feature; where the control resources satisfying the first feature are associated with a second quasi-co-location reference signal set; a difference set between the second quasi-co-location reference signal set and a third quasi-co-location reference signal set of demodulation reference signals of the control resources satisfying the first feature is not empty, and/or the second quasi-co-location reference signal set and the third quasi-co-location reference signal set correspond to different control signaling bit fields; or a control resource group corresponding to one port group being a control resource group including control resources satisfying a second feature; where a seventh quasi-co-location reference signal set of demodulation reference signals of the control resources satisfying the second feature is associated with a sixth quasi-co-location reference signal set; a difference set between the seventh quasi-co-location reference signal set and the sixth quasi-co-location reference signal set, and/or the seventh quasi-co-location reference signal set and the sixth quasi-co-location reference signal set correspond to different control signaling bit fields.

In the embodiment of the present disclosure, the control resource group satisfies at least one of: different control resources in different control resource groups capable of being simultaneously received by a communication node; different control resources in a same control resource group incapable of being simultaneously received by the communication node; X1 control resources in one control resource group capable of being simultaneously received by the communication node; where x1 is a positive integer less than or equal to x2, and x2 is a number of control resources included in the control resource groups; M being a positive integer less than or equal to M2; M being a positive integer less than or equal to M3; M2 being equal to M3.

The communication node is a communication node receiving the control resource groups.

In the embodiment of the present disclosure, the control resource group satisfies the following features: an intersection of resources occupied by control channels in different control resource groups being empty.

In the embodiment of the present disclosure, the channel or signal corresponding to at least one port group of the M port groups satisfies at least one of: a time interval between the channel or signal and a control channel scheduling the channel or signal being less than a predefined threshold; the control signaling for scheduling the channel or signal not including notification information of the quasi-co-location reference signal sets of the port groups; the control signaling for scheduling the channel or signal not including notification information of the quasi-co-location reference signal sets of the port groups; the signal being a periodic signal; the signal being a semi-periodic signal; or the channel being a semi-persistent scheduling channel. A specific implementation process of the apparatus for determining the QCL reference signal set is the same as the method for determining the QCL reference signal set in the above embodiment, and will not be repeated here.

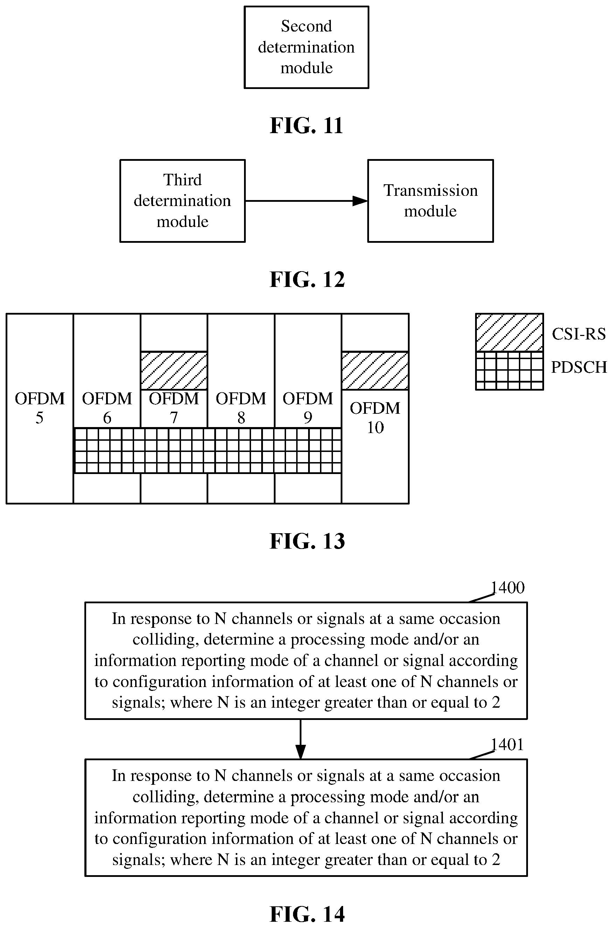

Referring to FIG. 11, another embodiment of the present disclosure provides an apparatus for determining a quasi-co-location reference signal set, the apparatus includes a second determination module.

The second determination module is used for determining at least P quasi-co-location reference signal sets of P-type port groups, and P is an integer greater than or equal to 2.

In the embodiment of the present disclosure, the P-type port group includes a first-type port group and a second-type port group.

The second determination module is specifically used for: determining a first quasi-co-location reference signal set of the first-type port group; and determining a second quasi-co-location reference signal set of the second-type port group.

In the embodiment of the present disclosure, the second determination module is also used for: determining the first quasi-co-location reference signal set of the first-type port group by using a first determination method; determining The second quasi-co-location reference signal set of the second-type port group by using a second determination method.

In the embodiment of the present disclosure, the second determination module is also used for: determining the first quasi-co-location reference signal set of the first-type port group according to a first-type parameter; determining the second quasi-co-location reference signal set of the second-type port group according to a second-type parameter.

The first-type parameter and the second-type parameter satisfy at least one of: a difference set between the first-type parameter and the second-type parameter being not empty; or the first-type parameter being a quasi-co-location reference signal set of a demodulation reference signal of one control resource, and the second-type parameter not including the quasi-co-location reference signal set of the demodulation reference signal of the one control resource.

In the embodiment of the present disclosure, the second determination module is specifically used for determining the first quasi-co-location reference signal set of the first-type port group by using: determining the first quasi-co-location reference signal set according to a third quasi-co-location reference signal set; where the third quasi-co-location reference signal set is acquired according to a quasi-co-location reference signal set of a demodulation reference signal of a control resource satisfying a predefined feature in a first time unit; or the third quasi-co-location reference signal set is acquired according to a quasi-co-location reference signal set of a demodulation reference signal of a control resource in which control information scheduling a channel or signal corresponding to the first-type port group is located.

In the embodiment of the present disclosure, the second determination module is specifically used for determining the second quasi-co-location reference signal set of the second-type port group by using: determining the second quasi-co-location reference signal set according to a fourth quasi-co-location reference signal set, where the fourth quasi-co-location reference signal set and a control resource satisfying a predefined feature in a second time unit have a correspondence; determining he second quasi-co-location reference signal set according to a fifth quasi-co-location reference signal set notified by first control signaling; determining the second quasi-co-location reference signal set according to a sixth quasi-co-location reference signal set, where the sixth quasi-co-location reference signal set and a seventh quasi-co-location reference signal set have a correspondence, the seventh quasi-co-location reference signal set includes the quasi-co-location reference signal set of the demodulation reference signal of the control resource satisfying the predefined feature in the second time unit; and determining the second quasi-co-location reference signal set according to configuration information of the control resource in which a control channel scheduling a channel or signal corresponding to a first-type port group is located.

In the embodiment of the present disclosure, the seventh quasi-co-location reference signal set satisfies at least one of: the seventh quasi-co-location reference signal set and the fourth quasi-co-location reference signal set being different quasi-co-location reference signal sets; the seventh quasi-co-location reference signal set and the fourth quasi-co-location reference signal set corresponding to different control signaling bit fields; the seventh quasi-co-location reference signal set and the fifth quasi-co-location reference signal set being different quasi-co-location reference signal sets; the seventh quasi-co-location reference signal set and the fifth quasi-co-location reference signal set corresponding to different control signaling bit fields; the seventh quasi-co-location reference signal set and the sixth quasi-co-location reference signal set being different quasi-co-location reference signal sets; the seventh quasi-co-location reference signal set and the sixth quasi-co-location reference signal set corresponding to different control signaling bit fields; a difference set between the seventh quasi-co-location reference signal set and the fourth quasi-co-location reference signal set being a non-empty set; a difference set between the seventh quasi-co-location reference signal set and the fifth quasi-co-location reference signal set being the non-empty set; or a difference set between the seventh quasi-co-location reference signal set and the sixth quasi-co-location reference signal set being the non-empty set; the seventh quasi-co-location reference signal set being a quasi-co-location reference signal set of a demodulation reference signal of a control resource in which control information scheduling a channel or signal corresponding to the first-type port group is located; or the control resource satisfying the predefined feature in the second time unit being the control resource in which the control information scheduling the channel or signal corresponding to the first-type port group is located.

In the embodiment of the present disclosure, the first control signaling includes any one of: higher layer control signaling; physical layer control signaling in which a time interval between the physical layer control signaling and a channel or signal corresponding to a second-type port group is greater than or equal to a predefined threshold; physical layer control signaling in which a time interval between the physical layer control signaling and a measurement reference signal resource corresponding to the second-type port group is greater than or equal to the predefined threshold; or physical layer control signaling in which a time interval between the physical layer control signaling and the second-type port group is greater than or equal to the predefined threshold.

In the embodiment of the present disclosure, the second time unit includes any one of: a time unit closest to a channel corresponding to a second-type port group in time units satisfying a second predefined feature; a time unit closest to a measurement channel resource corresponding to the second-type port group in the time units satisfying the second predefined feature; a time unit closest to the second-type port group in the time units satisfying the second predefined feature; or a time unit in which control signaling for scheduling the channel or signal is located. In the embodiment of the present disclosure, the time units satisfying the second predefined feature includes any one of: a time unit including control resources in a predefined component carrier; a time unit including control resources in a predefined component carrier group; a time unit including at least L control resources, where L is a positive integer greater than or equal to 1; a time unit including control resources in a predefined control resource group; or a time unit including control resources with the predefined feature, where the control resource with the predefined feature is associated with the fourth quasi-co-location reference signal set, or the sixth quasi-co-location reference signal set is associated with the seventh quasi-co-location reference signal set of the demodulation reference signal of the control resource with the predefined feature.

In the embodiment of the present disclosure, the second determination module is also used for: determining the port group to be the first-type port group according to the second control signaling and/or the predefined rule; determining port group to be the second-type port group according to the second control signaling and/or the predefined rule.

In the embodiment of the present disclosure, the second determination module is further used for determining the at least P quasi-co-location reference signal sets of the P-type port groups according to at least one piece of the following parameter information: a maximum number of port groups included in the channel or signal; a maximum number of port groups included in one channel or signal in response to a time interval between control information scheduling the channel or signal and the channel or signal being less than a predefined threshold; a method for determining the quasi-co-location reference signal set of each port group of the channel or signal; the quasi-co-location reference signal set of each port group of one channel or signal; a method for determining the quasi-co-location reference signal set of each port group of one channel or signal in response to the time interval between the control information scheduling the channel or signal and the channel or signal being less than the predefined threshold; or the quasi-co-location reference signal set of each port group of one channel or signal in response to the time interval between the control information scheduling the channel or signal and the channel or signal being less than the predefined threshold.

In the embodiment of the present disclosure, the second determination module is further used for determining the at least one quasi-co-location reference signal set of at least one port group of the P-type port groups according to at least one piece of the following parameter information: a maximum number of port groups included in the channel or signal; a maximum number of port groups included in one channel or signal in response to a time interval between control information scheduling the channel or signal and the channel or signal being less than a predefined threshold; a method for determining the quasi-co-location reference signal set of each port group of the channel or signal; the quasi-co-location reference signal set of each port group of one channel or signal; a method for determining the quasi-co-location reference signal set of each port group of one channel or signal in response to the time interval between the control information scheduling the channel or signal and the channel or signal being less than the predefined threshold; or the quasi-co-location reference signal set of each port group of one channel or signal in response to the time interval between the control information scheduling the channel or signal and the channel or signal being less than the predefined threshold.

In the embodiment of the present disclosure, the second determination module is further used for determining the parameter information according to signaling information or a predefined rule, and the signaling information includes at least one of: non-physical layer signaling information; higher layer signaling information; configuring signaling information of the channel corresponding to the port group; configuring signaling information of a measurement reference signal resource corresponding to the port group; configuration information of a control resource in which the control information scheduling the channel corresponding to the port group; configuration information of a control resource satisfying a predefined feature included in a time unit closest to the channel corresponding to the port group; configuration information of a control resource in which control information scheduling the measurement reference signal resource corresponding to the port group; or configuration information of a control resource satisfying a predefined feature included in a time unit closest to the measurement reference signal resource corresponding to the port group.

In the embodiment of the present disclosure, the port group satisfies at least one of the following features: the maximum number of port groups included in one channel or signal being related to a number of control resources; in response to a time interval between the control information scheduling the channel or signal and the channel or signal being less than the predefined threshold, the maximum number of port groups included in one channel or signal being related to the number of control resources; the maximum number of port groups included in one channel or signal being related to a number of control resource groups; or in response to a time interval between the control information scheduling the channel or signal and the channel or signal being less than the predefined threshold, the maximum number of port groups included in one channel or signal being related to the number of control resource groups.

In the embodiment of the present disclosure, the P-type port groups correspond to P demodulation reference signal port groups of one or more data channels; or the P-type port groups correspond to P measurement reference signal port groups of one or more measurement reference signal resources; or part of port groups in the P-type port groups correspond to demodulation reference signal groups of one or more data channels, and part of port groups corresponding to one or more measurement reference signal port groups.

In the embodiment of the present disclosure, where the port group satisfies at least one of: the time interval between the channel or signal and the control signaling for scheduling the channel or signal being less than the predefined threshold; the time interval between the channel or signal and the control channel scheduling the channel or signal being less than the predefined threshold; the control signaling for scheduling the channel or signal not including notification information of the quasi-co-location reference signal sets of the port groups; the signal being a periodic signal; the signal being a semi-periodic signal; or the channel being a semi-periodic scheduling channel; channels corresponding to the P-type port groups being received on a same time unit; the measurement reference signal resources corresponding to the P-type port groups being received on a same time unit; the channels corresponding to the P-type port groups being received at a same occasion; the measurement reference signal resources corresponding to the P-type port groups being received at the same occasion; the channel or signal is a channel or signal corresponding to at least one port group in the port groups.

A specific implementation process of the apparatus for determining the QCL reference signal set is the same as the method for determining the QCL reference signal set in the above embodiment, and will not be repeated here.

Another embodiment of the present disclosure provides an apparatus for determining a QCL reference signal set, the apparatus includes a sixth determination module.

The sixth determination module is used for determining a second quasi-co-location reference signal set corresponding to a second-type port group.

In the embodiment of the present disclosure, the sixth determination module is specifically used for determining the second quasi-co-location reference signal set of the second-type port group by using: determining the second quasi-co-location reference signal set according to a fourth quasi-co-location reference signal set, where the fourth quasi-co-location reference signal set and a control resource satisfying a second predefined feature have a correspondence; determining the second quasi-co-location reference signal set according to a fifth quasi-co-location reference signal set notified by first control signaling; determining second quasi-co-location reference signal set according to a sixth quasi-co-location reference signal set, where the sixth quasi-co-location reference signal set and a seventh quasi-co-location reference signal set have a correspondence, the seventh quasi-co-location reference signal set includes a quasi-co-location reference signal set of a demodulation reference signal of the control resource satisfying the second predefined feature in a second time unit; determining the second quasi-co-location reference signal set according to configuration information of the control resource in which a control channel scheduling a channel or signal corresponding to a first-type port group is located.

In the embodiment of the present disclosure, the step in which the second quasi-co-location reference signal set is determined according to the fourth quasi-co-location reference signal set, where the fourth quasi-co-location reference signal set and the control resource satisfying a second predefined feature have the correspondence includes at least one of steps described below.

A first quasi-co-location reference signal set of the first-type port group is acquired according to the seventh quasi-co-location reference signal set of the demodulation reference signal of the control channel in the control resource satisfying the second predefined feature in the second time unit.

The fourth quasi-co-location reference signal set is a quasi-co-location reference signal set configured for a frequency bandwidth in which a second-type port group is located in configuration information of the control resource satisfying the second predefined feature. Configuration information of the control resource satisfying the second predefined feature is configured with at least one of the fourth quasi-co-location reference signal set, where different fourth quasi-co-location reference signal sets correspond to different frequency bandwidths. One fourth quasi-co-location reference signal set is configured in the configuration information of the control resource satisfying the second predefined feature, and the fourth quasi-co-location reference signal set is shared with at least one frequency bandwidth having a correspondence with the control resource satisfying the second predefined feature, and/or the fourth quasi-co-location reference signal set is associated with a spatial Rx filter parameter.

In the embodiment of the present disclosure, the step in which the second quasi-co-location reference signal set is determined according to the sixth quasi-co-location reference signal set, where the sixth quasi-co-location reference signal set and the seventh quasi-co-location reference signal set have the correspondence, the seventh quasi-co-location reference signal set includes the quasi-co-location reference signal set of the demodulation reference signal of the control resource satisfying the second predefined feature in the second time unit includes at least one of steps described below.

A first quasi-co-location reference signal set of the first-type port group is acquired according to the seventh quasi-co-location reference signal set.

The sixth quasi-co-location reference signal set is a quasi-co-location reference signal configured for a frequency bandwidth in which the second-type port group is located in the seventh quasi-co-location reference signal set.

At least one sixth quasi-co-location reference signal set is configured in the seventh quasi-co-location reference signal set, where different sixth quasi-co-location reference signal sets correspond to different frequency bandwidths.

In the embodiment of the present disclosure, the step in which the second quasi-co-location reference signal set is determined according to configuration information of the control resource in which a control channel scheduling a channel or signal corresponding to a first-type port group is located includes at least one of steps described below.

A first quasi-co-location reference signal set of the first-type port group is acquired according to an eighth quasi-co-location reference signal set of the demodulation reference signal of the control channel.

The second quasi-co-location reference signal set of a second-type port group is a quasi-co-location reference signal set configured for a frequency bandwidth in which a second-type port group is located in the control resource.

Configuration information of the control resource includes at least one of the second quasi-co-location reference signal set, where different second quasi-co-location reference signal sets correspond to different frequency bandwidths.

The eighth quasi-co-location reference signal set and the second quasi-co-location reference signal set are different quasi-co-location reference signal sets.

In the embodiment of the present disclosure, the control resource satisfying the second predefined feature in the second time unit includes at least one of: a control resource having a lowest identification number in the second time unit; a control resource belonging to a frequency bandwidth having a lowest frequency bandwidth identification number in a set formed by control resources having the lowest identification number in the second time unit; a control resource having the lowest identification number included in the frequency bandwidth having the lowest frequency bandwidth identification number in a set formed by frequency bandwidths satisfying a third predefined feature in the second time unit; a control resource having the lowest identification number in a set formed by control resources satisfying the fourth predefined feature in the second time unit; a control resource belonging to the frequency bandwidth having the lowest frequency bandwidth identification number in a set formed by control resources having the lowest identification number in a set formed by the control resources satisfying the fourth predefined feature in the second time unit; or a control resource having the lowest identification number and satisfying the fourth predefined feature in the frequency bandwidth having the lowest frequency bandwidth identification number in a set formed by the frequency bandwidths satisfying the third predefined feature in the second time unit.

In the embodiment of the present disclosure, the first-type port group satisfies at least one of the following features: the first-type port group and the second-type port group being different port groups included in one channel or signal; the first-type port group and the second-type port group belonging to different channels or signals; an intersection between time domain resources occupied by the channel or signal corresponding to the first-type port group and time domain resources occupied by the channel or signal corresponding to the second-type port group being not empty; the first-type port group and the second-type port group belonging to a same frequency bandwidth; a relationship between a first time interval and a predefined threshold being consistent with a relationship between a second time interval and the predefined threshold, where the first time interval is a time interval between the channel or signal corresponding to the first-type port group and the control channel scheduling the first-type port group, and the second time interval is a time interval between the channel or signal corresponding to the second-type port group and the control channel scheduling the second-type port group.

In the embodiment of the present disclosure, the seventh quasi-co-location reference signal set satisfies at least one of:

the seventh quasi-co-location reference signal set and the fourth quasi-co-location reference signal set being different quasi-co-location reference signal sets;

the seventh quasi-co-location reference signal set and the fourth quasi-co-location reference signal set corresponding to different control signaling bit fields; the seventh quasi-co-location reference signal set and the fifth quasi-co-location reference signal set being different quasi-co-location reference signal sets; the seventh quasi-co-location reference signal set and the fifth quasi-co-location reference signal set corresponding to different control signaling bit fields; the seventh quasi-co-location reference signal set and the sixth quasi-co-location reference signal set being different quasi-co-location reference signal sets; the seventh quasi-co-location reference signal set and the sixth quasi-co-location reference signal set corresponding to different control signaling bit fields; a difference set between the seventh quasi-co-location reference signal set and the fourth quasi-co-location reference signal set being a non-empty set; a difference set between the seventh quasi-co-location reference signal set and the fifth quasi-co-location reference signal set being the non-empty set; or a difference set between the seventh quasi-co-location reference signal set and the sixth quasi-co-location reference signal set being the non-empty set; the seventh quasi-co-location reference signal set being a quasi-co-location reference signal set of a demodulation reference signal of a control resource in which control information scheduling a channel or signal corresponding to the first-type port group is located; or the control resource satisfying the predefined feature in the second time unit being the control resource in which the control information scheduling the channel or signal corresponding to the first-type port group is located.

In the embodiment of the present disclosure, the step in which the fourth quasi-co-location reference signal set and the control resource satisfying the predefined feature in the second time unit have the correspondence includes at least one of: the fourth quasi-co-location reference signal set being a quasi-co-location reference signal set configured for a second-type port group in configuration information of the control resource satisfying the predefined feature; the fourth quasi-co-location reference signal set being a quasi-co-location reference signal set configured for a frequency bandwidth in which the second-type port group is located in the configuration information of the control resource satisfying the predefined feature.

In the embodiment of the present disclosure, the step in which the second quasi-co-location reference signal set is determined according to configuration information of the control resource in which the control channel scheduling the channel or signal corresponding to the first-type port group is located includes that: the quasi-co-location reference signal set configured for the second-type port group in the configuration information of the control resource where the control channel is located is the second quasi-co-location reference signal set.

In the embodiment of the present disclosure, the second time unit includes any one of: a time unit closest to a channel corresponding to a second-type port group in time units satisfying a second predefined feature; a time unit closest to a measurement channel resource corresponding to the second-type port group in the time units satisfying the second predefined feature; a time unit closest to the second-type port group in the time units satisfying the second predefined feature; or a time unit in which control signaling for scheduling the channel or signal is located. In the embodiment of the present disclosure, the time units satisfying the second predefined feature includes any one of: a time unit including control resources in a predefined component carrier; a time unit including control resources in a predefined component carrier group; a time unit including at least L control resources, where L is a positive integer greater than or equal to 1; a time unit including control resources in a predefined control resource group; or a time unit including control resources satisfying a fourth predefined feature, where the control resources satisfying the fourth predefined feature satisfy at least one of: the control resource being associated with the fourth quasi-co-location reference signal set; the sixth quasi-co-location reference signal set being associated with the seventh quasi-co-location reference signal set of the demodulation reference signal of the control resource; a center carrier of a component carrier in which the control resource is located being greater than a predefined threshold; the demodulation reference signal of the control resource and one quasi-co-location reference signal satisfying a quasi-co-location relationship with respect to a spatial Rx filter parameter; the demodulation reference signal of the control resource being configured with a quasi-co-location reference signal with respect to the spatial Rx filter parameter; the control resource and the second-type port group lying within a same frequency bandwidth; the control resource belonging to a predefined frequency bandwidth; the control resource being associated with at least one candidate control channel monitored by a first communication node in the time units, where the first communication node is a receiving end of the second-type port group.

In the embodiment of the present disclosure, where first parameter information is determined according to second control signaling and/or an agreed rule, and according to the first parameter information, at least one of the following is determined: the quasi-co-location reference signal set; whether the second-type port group is included in one time unit; a number of port groups included in one time unit; a number of port groups satisfying a predefined feature included in one time unit.

In the embodiment of the present disclosure, the first parameter information includes at least one of: a maximum number of port groups included in each channel or signal in G channels or signals; a maximum number of port groups included in each channel or signal in the G channels or signals in response to a time interval between control information scheduling the channel or signal and the channel or signal being less than the predefined threshold; a method for determining the quasi-co-location reference signal set of each port group of each channel or signal in the G channels or signals; the quasi-co-location reference signal set of each port group of each channel or signal in the G channels or signals; a method for determining the quasi-co-location reference signal set of each port group of each channel or signal in the G channels or signals in response to the time interval between the control information scheduling the channel or signal and the channel or signal being less than the predefined threshold; the quasi-co-location reference signal set of each port group of each channel or signal in the G channels or signals in response to the time interval between the control information scheduling the channel or signal and the channel or signal being less than the predefined threshold; a maximum number of port groups satisfying the predefined feature included in the one time unit; a maximum number of port groups included in the one time unit; where an intersection between time domain resource occupied by each channel or signal in the G channels or signals and the one time unit is not empty, and G is a positive integer greater than or equal to 1.

In the embodiment of the present disclosure, the number of port groups included in one channel or signal satisfies at least one of the following features: the maximum number of port groups included in the channel or signal being related to a number of control resources; in response to a time interval between the control information scheduling the channel or signal and the channel or signal being less than the predefined threshold, the maximum number of port groups included in the channel or signal being related to the number of control resources; the maximum number of port groups included in the channel or signal being related to a number of control resource groups; in response to a time interval between the control information scheduling the channel or signal and the channel or signal being less than the predefined threshold, the maximum number of port groups included in the channel or signal being related to the number of control resource groups.

In the embodiment of the present disclosure, the second control signaling includes at least one of: non-physical layer signaling information; higher layer signaling information; configuring signaling information of the channel corresponding to the second-type port group; configuring signaling information of a measurement reference signal resource corresponding to the second-type port group; configuration information of a control resource in which the control information scheduling the channel corresponding to the second-type port group; configuration information of a control resource satisfying a predefined feature included in a time unit closest to the channel corresponding to the second-type port group; configuration information of a control resource in which control information scheduling the measurement reference signal resource corresponding to the second-type port group; or configuration information of a control resource satisfying a predefined feature included in a time unit closest to the measurement reference signal resource corresponding to the second-type port group.

In the embodiment of the present disclosure, where the port groups satisfying the predefined feature satisfy at least one of: a port group belonging to a predefined frequency bandwidth in the one time unit; an interval between the port group and the control signaling for scheduling the port group being less than the predefined threshold; an interval between the channel or signal corresponding to the port group and the control signaling for scheduling the port group being less than the predefined threshold; a port group in which the frequency bandwidth is greater than the predefined threshold; or a port group associated with the spatial Rx filter parameter of the quasi-co-location reference signal existing.

In the embodiment of the present disclosure, the number of port groups included in the one time unit or the number of port groups satisfying the predefined feature included in the one time unit satisfy at least one of the following features: a maximum number of port groups being related to a number of control resources; a maximum number of port groups being related to a number of control resources; a maximum number of port groups being related to a number of control resources included in the time unit; or a maximum number of port groups being related to a number of control resource groups included in the time unit.

In the embodiment of the present disclosure, where the second-type port group satisfies at least one of: the time interval between the channel or signal and the control signaling for scheduling the channel or signal being less than the predefined threshold; the time interval between the channel or signal and the control channel scheduling the channel or signal being less than the predefined threshold; the control signaling for scheduling the channel or signal not including notification information of the quasi-co-location reference signal set of the second-type port group; the signal being a periodic signal; the signal being a semi-periodic signal; or the channel being a semi-periodic scheduling channel; where the channel or signal is a channel or signal corresponding to at least one port group in the second-type port group.

A specific implementation process of the apparatus for determining the QCL reference signal set is the same as the method for determining the QCL reference signal set in the above embodiment, and will not be repeated here.

Referring to FIG. 12, another embodiment of the present disclosure provides an apparatus for determining a quasi-co-location reference signal set, the apparatus includes a third determination module and a transmission module.

The third determination module is used for determining a quasi-co-location reference signal set. The transmission module is used for transmitting a channel or signal on corresponding resources according to the quasi-co-location reference signal set.

One resource corresponds to A quasi-co-location reference signal sets.

The resources and reference signals in each reference signal set in the A quasi-co-location reference signal sets have a quasi-co-location relationship with respect to a type of quasi-co-location parameters, and A is an integer greater than or equal to 1.

In the embodiment of the present disclosure, where the resources include one of: a demodulation reference signal port resource, a measurement reference signal port resource, a control resource, and a data channel resource.

In the embodiment of the present disclosure, the step in which one resource corresponds to A quasi-co-location reference signal sets includes: the A quasi-co-location reference signal sets including a first quasi-co-location reference signal set and a second quasi-co-location reference signal set; where a difference set between a first quasi-co-location parameter set associated with the first quasi-co-location reference signal set and a second quasi-co-location parameter set associated with the second quasi-co-location reference signal set is an empty set.

In the embodiment of the present disclosure, A1 frequency domain resource sets of the one resource correspond to A1 quasi-co-location reference signal sets; A2 time domain resource sets of the one resource correspond to A2 quasi-co-location reference signal sets; where A1 and A2 are positive integers less than or equal to a value of A.

Another embodiment of the present disclosure provides an apparatus for determining a QCL parameter, including a processor and a computer-readable storage medium, where the computer-readable storage medium stores instructions, where when executed by the processor, the instructions implement the any method for determining the quasi-co-location reference signal set described above.

Another embodiment of the present disclosure provides a computer-readable storage medium. The computer-readable storage medium stores a computer program which, when executed by a processor, implement steps of any method for determining the quasi-co-location reference signal set described above.

Another embodiment of the present disclosure provides a channel measurement method. The method includes: not including a time domain symbol set in which a measurement reference signal is located at a channel measurement occasion corresponding to channel state information fed back by a communication node; and/or not measuring a second measurement reference signal in the time domain symbol set.

The time domain symbol set includes the time domain symbol in which the channel or signal is located, and the channel state information corresponds to the measurement reference signal.

The channel includes at least one of: a data channel or a control channel.

The signal includes at least one of: a first measurement reference signal, a demodulation reference signal, or a phase tracking reference signal.

The time domain symbol set includes at least two time domain symbols occupied by the second measurement reference signal in at least one time unit; a difference between the time domain symbol set and the time domain symbol in which the channel or signal is located is not empty. Where not measuring the second measurement reference signal in the time domain symbol set includes at least one of: not receiving the second measurement reference signal in the time domain symbol set; not feeding back the channel state information at a first occasion, where a feedback period corresponding to a first occasion includes the time domain symbol set.

The channel or signal and the second measurement reference signal satisfy at least one of the following features: on the time domain symbol, the channel or signal and the second measurement reference signal not satisfying the quasi-co-location relationship with respect to a spatial Rx parameter.

A channel measurement time domain restriction in a channel state feedback configuration corresponding to the second measurement reference signal being disabled; i.e., timeRestrictionForChannelMeasurements being disabled;

in response to being enabled, channel state information (CSI) in one CSI feedback being obtained according to a CSI-RS in one period of periodic CSI-RS; in response to being disabled, the CSI in one CSI feedback being obtained according to the CSI-RS in multiple periods of periodic CSI-RS; a transmission beam corresponding to each second measurement reference signal resource in a measurement reference signal set in which the second measurement reference signal is located remaining unchanged; different measurement reference signal resources in the measurement reference signal set in which the second measurement reference signal is located satisfying the QCL relationship; on the time domain symbol, a priority of a first type of quasi-co-location parameters of the channel or signal being higher than a first type of quasi-co-location parameters of the second measurement reference signal; on the time domain symbol, receiving the channel or signal on the time domain symbol by the first type of quasi-co-location parameters of the channel or signal; on the time domain symbol, acquiring the first type of quasi-co-location parameters of the second measurement reference signal by the first type of quasi-co-location parameters of the channel or signal; on the time domain symbol, the priority of the quasi-co-location reference signal set of the channel or signal with respect to the first type of quasi-co-location parameters being higher than that of the quasi-co-location reference signal set of the second measurement reference signal with respect to the first type of quasi-co-location parameters; on the time domain symbol, obtaining the quasi-co-location reference signal set of the second measurement reference signal with respect to the first type of quasi-co-location parameters according to the quasi-co-location reference signal set of the first channel or first signal with respect to the first type of quasi-co-location parameters; a time interval between first control signaling for scheduling the channel or signal and the channel or signal being greater than or equal to a predefined threshold; a time interval between second control signaling for scheduling the second measurement reference signal and the second measurement reference signal being less than or equal to a predefined threshold; on the time domain symbol, the first type of quasi-co-location parameters of the channel or signal and the first type of quasi-co-location parameters of the second measurement reference signal being different; on the time domain symbol, the quasi-co-location reference signal set of the channel or signal with respect to the first type of quasi-co-location parameters being different from the quasi-co-location reference signal set of the second measurement reference signal with respect to the first type of quasi-co-location parameters; the second measurement reference signal being a measurement reference signal scheduled by higher layer signaling; the channel or signal being a channel or signal scheduled by physical layer control signaling; the second measurement reference signal being a periodic measurement reference signal; the second measurement reference signal being a half-periodic measurement reference signal.

The second measurement reference signal is a tracking reference signal (TRS).

The first type of parameters includes at least one of the following: a Doppler shift, a Doppler spread, an average delay, a delay spread or a Spatial Rx parameter.

For example, a terminal may only emit one receiving beam at one occasion. When multiple channels or signals at the same occasion or in the same time domain symbol collide, it is necessary to determine which channel or signal has a higher priority.

When beams of two channels or signal collide, QCL reference signals of the two signals obtained according to the configuration information or a predefined rule does not satisfy the QCL relationship with respect to the Spatial Rx parameter.

For example, when beams between a periodic channel state information reference signal (CSI-RS) and a PDSCH/CORESET/AP-CSI-RS are different, the beam of the PDSCH/CORESET/AP-CSI-RS is used for receiving the channel or signal on the time domain symbol, there is no need to receive or measure the CSI-RS in this case due to the change of the receiving beam. A measurement occasion corresponding to the channel state information fed back by the terminal does not include the CSI-RS on the time domain symbol, where the channel state information is acquired according to the CSI-RS.

Furthermore, if one CSI-RS resource occupies multiple time domain symbols in one slot, as long as one time domain symbol collides with the PDSCH/CORESET/AP-CSI-RS, this CSI-RS is not received or measured in the multiple time domain symbols, and the CSI-RS on the multiple time domain symbols is not included at the measurement occasion corresponding to the CSI fed back by the terminal. As shown in FIG. 13, one CSI-RS resource occupies orthogonal frequency division multiplexing (OFDM) 7 and OFDM10 in one slot. Only the CSI-RS and the PDSCH on the OFDM7 collide, and then this CSI-RS are not received/measured on the {OFDM7,OFDM10}, the CSI-RS on the {OFDM7,OFDM10} is not included at the measurement occasion corresponding to the CSI fed back by the terminal.

Further, if there is one collided time domain symbol in the channel state information feedback period, the channel state information is not fed back at a feedback occasion corresponding to this report/feedback period, and it is not necessary to receive/measure this CSI-RS in this report/feedback period.

Optionally, an interval between the PDSCH/AP-CSI-RS and the PDCCH scheduling the PDSCH/AP-CSI-RS is greater than or equal to this predefined threshold.

Optionally, the CSI-RS corresponds to at least one piece of the following configuration information: channel measurement time domain restriction information of channel state feedback configuration information corresponding to the reference signal being at a disabled state; repetition information in the reference signal set in which the reference signal is located being configured to be on; usage configuration of the reference signal being the TRS (TRS info=ON).

Where the channel measurement time domain restriction information of the channel state feedback configuration information corresponding to the reference signal is at the disabled state, it means that the channel measurement occasion corresponding to the channel state information is not restricted, that is, the channel state information implemented once according to the terminal may be an average value of multiple CSI-RS periods. Enabling means that the channel measurement occasion corresponding to the channel state information is restricted. The terminal the channel state information implemented once by the terminal can only be obtained from the CSI-RS measurement in an agreed number of CSI-RS periods. When the channel measurement time domain restriction is not enabled, when the CSI-RS collides with other downlink channels or signals, and a priority of the Spatial Rx parameter of other downlink channels or signals is higher than priority of the Spatial Rx parameter of the CSI-RS, the measurement occasion corresponding to the fed back channel state information does not include the CSI-RS in the time domain symbol set, or a channel state indicator (CSI, Channel state indicator) corresponding to the CSI-RS is not fed back at the feedback occasion.

The repetition information in the reference signal set in which the reference signal is located is configured to be on. For example, if on is configured in the CSI-RS resource set, the CSI-RS resources included in this CSI-RS resource set satisfy the QCL relationship, and/or the CSI-RS resources included in this CSI-RS resource set correspond to a same beam, and/or feedback information correspond to this CSI-RS resource set does not include CSI-RS resource indicator (CRI), that is, the terminal does not report the selection of the resources in this set. When repetition is on, the terminal needs to perform a receiving beam search according to the CSI-RS resources in this set, especially when the CSI-RS resources included in one slot in this set exceeds a predefined threshold, the terminal needs to switch the receiving beam on different time domain symbols, and the PDSCH does not support the DMRS on each different time domain symbol, so it is necessary to limit the measurement occasion corresponding to the channel state information fed back at this time to exclude the CSI-RS in the time domain symbol set, or limit to not feed back the CSI corresponding to the CSI-RS at the feedback occasion, or limit the CSI-RS resource and the PDSCH to be frequency-division multiplexed in a predefined position in one slot and others give priority to the receiving beams of the PDSCH. Usage configuration of the reference signal is configured as the TRS. The TRS is a special CSI-RS. Some configurations of this CSI-RS are limited. The time offset and frequency offset correction of other signals may be done according to this CSI-RS, or this CSI-RS may be used as the QCL reference signal for other signals/channels.

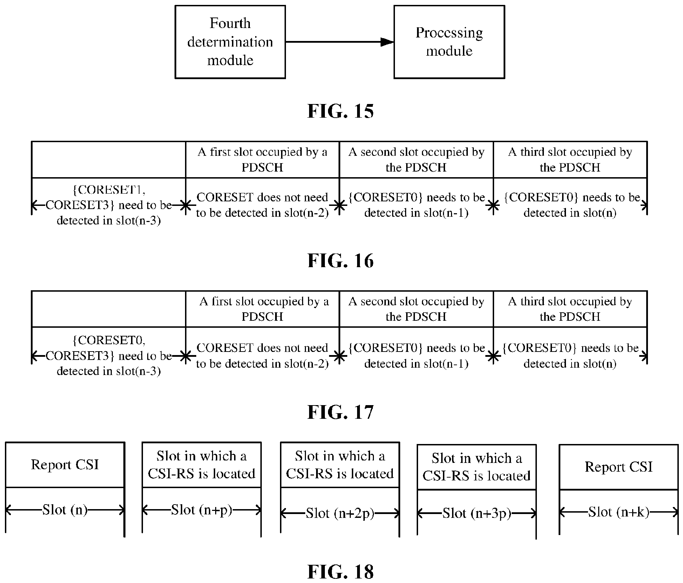

Further, if the measurement reference signal collides with the PDSCH, which may be different PDSCHs, in a predefined number of time units in a feedback period, a channel state corresponding to the measurement reference signal is not fed back at this feedback occasion. As shown in FIG. 18, a feedback period is k, a transmission period of the CSI-RS, is p, there are multiple CSI-RS periods in one feedback period, and one of the feedback periods is slot(n+1)~slot(n+k) in FIG. 18, there are 3 CSI-RS periods in one feedback period in FIG. 18, if on two or more periods of these 4 CSI-RS periods, the CSI-RS and PDSCH collide and a priority of the Spatial Rx parameter of the PDSCH is higher than a priority of the Spatial Rx parameter of the CSI-RS, then the CSI is not reported on slot(n+k).For example, only one slot in {slot(n+p), slot(n+2p), slot(n+3p)} has the above collide, and the CSI is also reported on the slot(n+k), if two or more slots in {slot( n+p), slot(n+2p), slot(n+3p)} has the above collide, the CSI-RS is not reported.

Further, if in the CSI-RS resource set in which the CSI-RS resource is located, there is an agreed number of CSI-RS resources that collide with the PDSCH, then the entire CSI for the CSI-RS resource set is not reported in the feedback period.

In another embodiment of the present disclosure, when beams between the PDCCH and the PDCCH on the same time or multiple time domain symbols collide, a priority of the QCL parameters and/or QCL reference signal set between two PDCCHs is determined according to at least one piece of the following: a CORESETID of a CORESET where the PDCCH is located, whether the PDCCH is a dedicated PDCCH or a public/group PDCCH, a period of a search space corresponding to the PDCCH.

The QCL reference signal set is at least associated with the spatial Rx parameter, or the QCL parameter includes at least the spatial Rx parameter.

For example, a CORESET with a lower CORESETID has a higher priority, and/or a public control channel sharing the PDCCH/group has a higher priority than a dedicated control channel, and/or a PDCCH with a longer period has a higher priority. The QCL reference signal set of the PDCCH with a higher priority is used for receiving the collided PDCCH, or the QCL reference signal set of the PDCCH with a lower priority is the QCL reference signal set of the PDCCH with the higher priority in the collided time domain symbol/time unit set.

Multiple channels/signals at the same occasion indicate that these multiple channels/signals may correspond to different subcarrier intervals, and their time domain symbols are different. For example, an occasion corresponding to a time domain symbol in which a channel/signal is located includes multiple time domain symbols of another channel/signal.

In an embodiment of the present disclosure, when the PDSCH occupies multiple time units, the base station and the terminal agree that an interval between each time unit occupied by the PDCCH and the PDCCH scheduling the PDSCH is greater than or equal to a predefined threshold, so that the beam indicated by the PDCCH may be used for receiving each time unit corresponding to this PDSCH. For example, the PDSCH is aggregated (aggregation), that is, the same PDSCH is repeatedly transmitted in multiple slots, or this PDSCH a semi-persistent scheduling PDSCH. Or the multiple time units occupied by the PDSCH are divided into two time unit groups, an interval between the PDSCH in a first time unit group and DCI scheduling the PDSCH is less than K, an interval between the PDSCH in a second time unit group and DCI scheduling the PDSCH is greater than or equal to K, demodulation reference signal configuration information of the PDSCH in different time unit groups may be different, for example, the number of demodulation reference signal groups included in different time unit groups is different, such as the number of DMRS groups in the first time unit is 1, and the number of DMRS groups in the second time unit group is 2; and/or the quasi-co-location reference signal sets of the DMRS of the PDSCH in different time unit groups are different, such as a quasi-co-location reference signal set of the DMRS in the first time unit is a set 1, and a quasi-co-location reference signal set of the DMRS in the second time unit is a set 2.

In an embodiment of the present disclosure, the QCL reference signal set of PDSCH/AP-CSI-RS is determined according to at least one piece of the following information: whether the PDSCH/AP-CSI-RS and CORESET with the lowest CORESETID in the time unit closest to PDSCH/AP-CSI-RS and including the CORESET are in the same CC, and/or belong to the same serving cell, and/or belong to one BWP); whether the aggregation of the PDSCH is greater than the predefined value.

In the present disclosure, different CCs may also correspond to different serving cells, PDSCH/AP-CSI-RS means the PDSCH and/or the AP-CSI-RS.

Optionally, the interval between the PDSCH/AP-CSI-RS and the PDCCH scheduling the PDSCH/AP-CSI-RS is less than a predefined threshold.

Specifically, for example, the interval between the PDCCH and the PDSCH/AP-CSI-RS is less than a predefined threshold, the PDSCH/AP-CSI-RS and the CORESET having the lowest CORESETID in the time unit closest to the PDSCH/AP-CSI-RS in the time units including the CORESET belong to different CCs, the QCL reference signal of the PDSCH/AP-CSI-RS with respect to the spatial Rx parameter is the QCL reference signal with respect to the spatial Rx parameter of the demodulation reference signal of the CORESET, the QCL reference signal/QCL reference signal set of the PDSCH/AP-CSI-RS with respect to other QCL parameter {Doppler shift, Doppler spread, average delay, delay spread} is acquired according to a TCI field in the DC.

When the TCI field is not included in the DCI, the QCL reference signal/QCL reference signal set of the other QCL parameters {Doppler shift, Doppler spread, average delay, delay spread} of the PDSCH/AP-CSI-RS is acquired by scheduling a first item or a predefined item in a QCL reference signal/QCL reference signal set list configured in higher layer signaling in the frequency bandwidth in which the PDSCH/AP-CSI-RS is located with respect to the other QCL parameters {Doppler shift, Doppler spread, average delay, delay spread}, or is acquired according to the quasi-co-location reference signal set of the control resource with the predefined identification number in the frequency bandwidth in which the PDSCH/AP-CSI-RS is located, or is acquired according to the quasi-co-location reference signal set of the control resource with the lowest identification number in the time unit closest to the PDSCH/AP-CSI-RS in time units including the control resource of the frequency bandwidth in which the PDSCH/AP-CSI-RS is located.

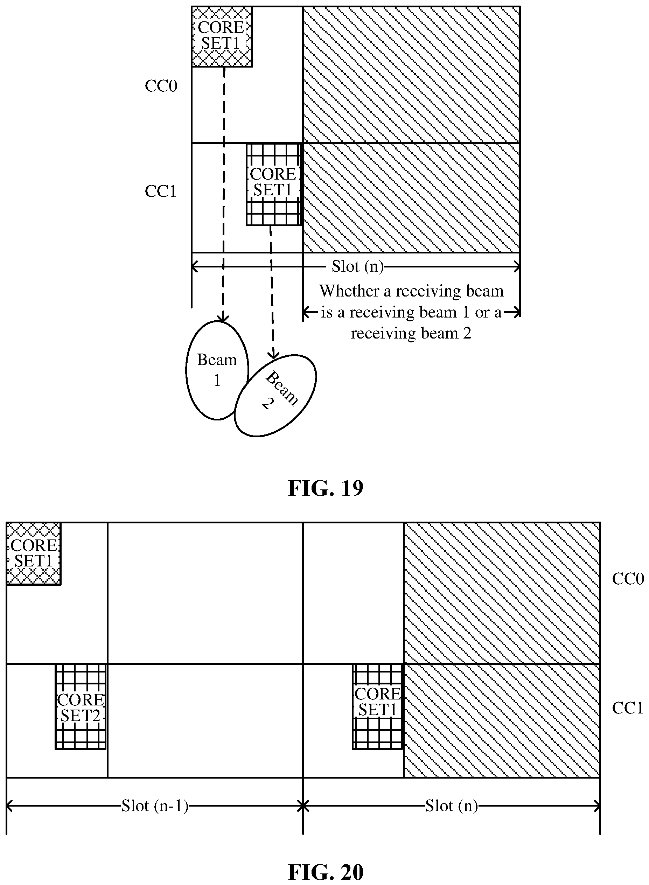

Alternatively, when the interval between the PDSCH/AP-CSI-RS and the DCI is less than K, the quasi-co-location reference signal associated with the spatial Rx filter parameter of the PDSCH is acquired according to the quasi-co-location reference signal associated with the spatial Rx filter parameter of the control resource with the second predefined feature in the time unit closest to the PDSCH or the AP-CSI-RS in the time units of the control resource satisfying the second predefined feature included in the CC/BWP in which the PDSCH is located. In this way, when there are multiple CCs, multiple PDSCHs in the multiple CCs need to be cached in the same slot (n) (a distance between these PDSCHs and the DCI scheduling these PDSCHs is less than K), then each PDSCH of the multiple PDSCHs is associated with one CORESET in the CC where the PDSCH is located. The terminal needs to emit receiving beams of these multiple CORESETs to cache these PDSCHs. When one occasion of the terminal may emit a limit number of receiving beams, the demodulation reference signal of multiple control resources (i.e., the Z control resources) satisfies the quasi-co-location relationship with respect to the spatial Rx filter parameter. Alternatively, multiple quasi-co-location reference signal terminals of the spatial Rx filter parameter associated with the multiple control resources may receive simultaneously. Further, the multiple quasi-co-location reference signal terminals capable of simultaneously receiving indicates that group information associated with the multiple quasi-co-location reference signals satisfies an agreed condition, such as belonging to a same group or belonging to different groups. As shown in FIG. 19, whether a slash area of slot (n) should use a receiving beam 1 obtained by a quasi-co-location reference signal of a lowest CORESET1 in a CC0 with respect to the spatial Rx filter parameter to cache data or use a receiving beam 2 obtained by a quasi-co-location reference signal of a lowest CORESET1 in a CC1 with respect to the spatial Rx filter parameter, in this case, one method is to require the receiving beam 1 and the receiving beam 2 to be a same receiving beam, i.e., a lowest CORESET in the time unit closest to the slot (n) in the CC0 and a lowest CORESET in the time unit closest to the slot (n) in the CC1 satisfy the quasi-co-location relationship with respect to the spatial Rx filter parameter, or the two receiving beam terminals may receive simultaneously. In FIG. 19, the Z control resources are located in the same time unit. In FIG. 19, the time unit closest to slot (n) in the time unit including the control resources in the CC0 is slot (n-1), the time unit closest to slot (n) in the time unit including the control resources in the CC1 is slot (n), i.e., the Z control resources are located in different time units, in short, each of the Z control resources in FIGS. 19 to 20 is associated with one CC.

When an interval between the PDCCHs for scheduling the PDSCH/AP-CSI-RS is greater than or equal to the predefined threshold, and the PDCCH does not include the TCI field, the QCL reference signal of the PDSCH/AP-CSI-RS with respect to the spatial Rx parameter is the QCL reference signal of the demodulation reference signal of the PDCCH with respect to the spatial Rx parameter, and the QCL reference signal/QCL reference signal set of the DSCH/AP-CSI-RS with respect to other QCL parameters {Doppler shift, Doppler spread, average delay, delay spread} is acquired according to the first item/predefined item of the TCI field configured in the CC/BWP in which the PDSCH/AP-CSI-RS is located, or is acquired according to the quasi-co-location reference signal set of the control resource having the predefined identification number of the CC/BWP in which the DSCH/AP-CSI-RS is located. The quasi-co-location reference signal of the PDSCH/AP-CSI-RS associated with the spatial Rx parameter (that is, the spatial Rx filter parameter) may also be acquired according to the quasi-co-location reference signal set of the control resource of the first item/predefined item/predefined identification number.

The above predefined item / predefined identification number is acquired according to at least one piece of the following information: an index of a time unit in which the channel or signal is located; an index of a time unit in which a control channel for scheduling the channel or signal is located; an index of the control resource in which the control channel for scheduling the channel or signal is located; an index of a candidate control resource corresponding to the control channel for scheduling the channel or signal; an index of the control resource satisfying the second predefined feature in the time unit closest to the channel or signal and includes a frequency bandwidth control resource in which the channel or signal is located; where the control resource satisfying the second predefined feature is the control resource having the lowest identification number in the frequency bandwidth in which the channel or signal is located in the time unit; the number of items included in the quasi-co-location reference signal set list; the total number of control resources configured in the frequency bandwidth in which the channel or signal is located.

For example, a predefined item = mod (a time unit index/a control resource index, the number of items included in the quasi-co-location reference signal set list), where mod denotes a remainder, or a predefined identification number = mod (the time unit index/control resource index, the total number of control resources configured in the frequency bandwidth in which the channel or signal is located).

The interval between the PDCCH and the PDSCH/AP-CSI-RS is less than a predefined threshold, the PDSCH/AP-CSI-RS and the CORESET having the lowest CORESETID in the time unit closest to the PDSCH/AP-CSI-RS in the time units including the CORESET belong to the same CC, the QCL reference signals of all QCL parameters of the PDSCH/AP-CSI-RS are acquired according to the QCL reference signal set of the demodulation reference signal of the lowest CORESET in the slot closest to the PDSCH/AP-CSI-RS in slots including the CORESET.

In another embodiment of the present disclosure, when the interval between the PDCCH and the PDSCH/AP-CSI-RS is less than a predefined threshold, and the PDSCH/AP-CSI-RS and the CORESET having the lowest CORESETID in the time unit closest to the PDSCH/AP-CSI-RS in the time units including the CORESET belong to the same CC, and an aggregation of the PDSCH is less than 2, the QCL reference signal of the PDSCH/AP-CSI-RS with respect to the spatial Rx parameter is the QCL reference signal of the demodulation reference signal with the lowest CORESET with respect to the spatial Rx parameter in the slot closest to the PDSCH/AP-CSI-RS in the slots including the CORESET, the QCL reference signal/QCL reference signal set of the PDSCH/AP-CSI-RS with respect to the other QCL parameters {Doppler shift, Doppler spread, average delay, delay spread} is acquired according to the TCI field in the DCI. When the PDCCH and the PDSCH belong to the same CC and the aggregation of the PDSCH is greater than or equal to 2, an interval between the PDSCH and the PDCCH scheduling the PDSCH is required to be greater than or equal to a predefined threshold K.

In this embodiment, when an aggregation factor pdsch-AggregationFactor (i.e., the above aggregation) of the PDSCH is greater than 1, the PDSCH occupies multiple consecutive slots, and transmits information repeatedly in the multiple consecutive occupied slots, and the terminal does not want to receive a configuration that does not satisfies at least one of features described below.

Feature one: an interval between the channel of each aggregated time unit and the control signaling scheduling the channel is greater than or a predefined threshold.

Feature two: the quasi-co-location reference signal set of the channel is acquired according to information indicated in control signaling scheduling the channel.

Feature three: a quasi-co-location reference signal set of a demodulation reference signal of the channel is acquired according to a quasi-co-location reference signal set of a demodulation reference signal of the control channel in which the control signaling scheduling the channel. Feature four: a quasi-co-location reference signal set of a demodulation reference signal of a control resource having a lowest control resource identifier included in different time units of X time units being same.

Feature five: the control resource having the lowest control resource identifier included in different time unit of the X time units is same.

The time units closest to each time unit occupied by the channel in the time units including the control resources form the X time units.

The first three features ensure that the terminal demodulates the PDCCH scheduling PDSCH when receiving the PDSCH, and acquires the quasi-co-location reference signal set of the PDSCH according to a PDCCH indication or the QCL reference signal set of the PDCCH scheduling the PDSCH.

In feature four, as shown in FIG. 16, the PDSCH occupies {slot(n-2), slot(n-1), slot(n)}, a time unit closest to the slot(n) in the time units including the CORESET is the slot (n), and the slot(n) has a CORESETO with the lowest CORESETID; a time unit closest to the slot(n-1) in the time units including the CORESET is the slot(n-1), and the slot(n-1) has the CORESETO with the lowest CORESETID; and a time unit closest to the slot(n-2) in the time units including the CORESET is the slot(n-3), and the slot(n-3) has a CORESET1 with the lowest CORESETID, the quasi-co-location reference signal sets of the demodulation reference signals of the CORESETO and the CORESET1 are required to be same. For example, the CORESETO and the CORESET1 correspond to the same TCI, and/or the quasi-co-location reference signal sets associated with the same QCL parameter of the demodulation reference signals of the CORESETO and the CORESET1 satisfy the QCL relationship, and/or the demodulation reference signals of the CORESETO and the CORESET1 satisfy the QCL relationship.

As shown in FIG. 17, the PDSCH occupies {slot(n-2), slot(n-1), slot(n)}, the time unit closest to the slot(n) in the time units including the CORESET is the slot(n), the slot(n) has the CORESETO with the lowest CORESETID, the time unit closest to slot(n-1) in the time units including the CORESET is the slot(n-1), the slot(n-1) has the CORESETO with the lowest CORESETID, the time unit closest to the slot(n-3) in the time units including the CORESET is the slot(n-2), the slot(n-3) has the CORESETO with the lowest CORESETID.

Another embodiment of the present disclosure provides a channel measurement apparatus. The apparatus includes a receiving module.

The receiving module is used for not including a time domain symbol set in which a measurement reference signal is located at a channel measurement occasion corresponding to channel state information fed back by a communication node; and/or not measuring a second measurement reference signal in the time domain symbol set; that is, receiving the second measurement reference signal outside a first time domain symbol set; and the channel state information corresponding to the measurement reference signal.

The time domain symbol set includes a time domain symbol in which the channel or signal is located.

The channel includes at least one of: a data channel or a control channel.

The signal includes at least one of: a first measurement reference signal, a demodulation reference signal, and a phase tracking reference signal.

In an embodiment of the present disclosure, the time domain symbol set includes at least two time domain symbols occupied by the second measurement reference signal in at least one time unit; a difference between the time domain symbol set and the time domain symbol in which the channel or signal is located is not empty.

In the embodiment of the present disclosure, not measuring the second measurement reference signal in the time domain symbol set includes at least one of: not receiving the second measurement reference signal in the time domain symbol set; not feeding back the channel state information at a first occasion, where a feedback period corresponding to a first occasion includes the time domain symbol set.

In the embodiment of the present disclosure, the channel or signal and the second measurement reference signal satisfy at least one of the following features: on the time domain symbol, the channel or signal and the second measurement reference signal not satisfying the quasi-co-location relationship with respect to a spatial Rx parameter; a channel measurement time domain restriction in a channel state feedback configuration corresponding to the second measurement reference signal being disabled; a transmission beam corresponding to each second measurement reference signal resource in a measurement reference signal set in which the second measurement reference signal is located remaining unchanged; different measurement reference signal resources in the measurement reference signal set in which the second measurement reference signal is located satisfying the quasi-co-location relationship; on the time domain symbol, a priority of a first type of quasi-co-location parameters of the channel or signal being higher than a first type of quasi-co-location parameters of the second measurement reference signal; on the time domain symbol, receiving the channel or signal on the time domain symbol by the first type of quasi-co-location parameters of the channel or signal; on the time domain symbol, acquiring the first type of quasi-co-location parameters of the second measurement reference signal by the first type of quasi-co-location parameters of the channel or signal; on the time domain symbol, the priority of the quasi-co-location reference signal set of the channel or signal with respect to the first type of quasi-co-location parameters being higher than that of the quasi-co-location reference signal set of the second measurement reference signal with respect to the first type of quasi-co-location parameters; on the time domain symbol, obtaining the quasi-co-location reference signal set of the second measurement reference signal with respect to the first type of quasi-co-location parameters according to the quasi-co-location reference signal set of the channel or signal with respect to the first type of quasi-co-location parameters; a time interval between first control signaling for scheduling the channel or signal and the channel or signal being greater than or equal to a predefined threshold; a time interval between second control signaling for scheduling the second measurement reference signal and the second measurement reference signal being less than or equal to a predefined threshold; on the time domain symbol, the first type of quasi-co-location parameters of the channel or signal and the first type of quasi-co-location parameters of the second measurement reference signal being different; on the time domain symbol, the quasi-co-location reference signal set of the channel or signal with respect to the first type of quasi-co-location parameters being different from the quasi-co-location reference signal set of the second measurement reference signal with respect to the first type of quasi-co-location parameters; the second measurement reference signal being a measurement reference signal scheduled by higher layer signaling; the channel or signal being a channel or signal scheduled by physical layer control signaling; the second measurement reference signal being a periodic measurement reference signal; the second measurement reference signal being a half-periodic measurement reference signal; or the second measurement reference signal being a tracking measurement reference signal.

In the embodiment of the present disclosure, the first type of quasi-co-location parameters include at least one of: a Doppler shift, a Doppler spread, an average delay, a delay spread or a Spatial Rx parameter.

Another embodiment of the present disclosure provides a channel measurement apparatus, including a processor and a computer-readable storage medium, where the computer-readable storage medium stores instructions which, when executed by the processor, implement any channel measurement method described above.

Another embodiment of the present disclosure provides a computer-readable storage medium. The computer-readable storage medium stores a computer program which, when executed by a processor, implement steps of any channel measurement method described above.

Another embodiment of the present disclosure provides a signaling transmission method. The method includes: receiving configuration information of $S$ serving cells;

The configuration information indicates that an $i$-th serving cell includes $C_i$ control resources; $i = 1,2...S$, $S$ is a positive integer greater than or equal to 1, and $C_i$ is an integer greater than or equal to 0.

An identification number $j$ of the control resource of the $i$-th serving cell satisfies

$$j \in \{0,1,\dots I_{max} - 1\};$$

where, $I_{max} \geq 2^{\lceil log_2(\Sigma_{i=1}^{S} C_i)\rceil}$ .

The identification number j of the control resource of the i-th serving cell is:

$$j = j_{i,start} + j_{i,local};$$

where $j_{i,start}$ is a start identification number of $C_i$ control resources included in the $i$-th serving cell, $j_{i,local}$ is an index of the control resource of the $i$-th serving cell, $j_{i,start} \in \{0,1, \dots I_{max} - 1\}$, $j_{i,local} = 0,1,..., C_i - 1$.

Another embodiment of the present disclosure provides a signaling transmission apparatus. The apparatus includes a receiving module.

The receiving module is used for receiving configuration information of $S$ serving cells.

The configuration information indicates that an $i$-th serving cell includes $C_i$ control resources; $i = 1,2... S$, $S$ is a positive integer greater than or equal to 1, and $C_i$ is an integer greater than or equal to 0.

In an embodiment of the present disclosure, an identification number $j$ of the control resource of the $i$-th serving cell satisfies

$$j \in \{0,1,\dots I_{max} - 1\};$$

where $I_{max} \geq 2^{\lceil log_2(\Sigma_{i=1}^{S} C_i)\rceil}$ $I_{max}$

In the embodiment of the present disclosure, the identification number j of the control resource of the $i$-th serving cell is:

$$j = j_{i,start} + j_{i,local};$$

where $j_{i,start}$ is a start identification number of $C_i$ control resources included in the $i$-th serving cell, $j_{i,local}$ is an index of the control resource of the $i$-th serving cell, $j_{i,start} \in \{0,1, ... I_{max} - 1\}$ , $j_{i,local} = 0,1,..., C_i - 1$.

For example, CORESETs are globally numbered when there are multiple CCs so as to ensure that the CORESETIDs included in different CCs in a same time unit are different, so that when an interval between the channel or signal and the control channel for scheduling the channel or signal is less than a predefined threshold, the quasi-co-location reference signal set of the channel or signal is obtained according to a TCI state configured in a lowest CORESETID in the control resource. In this case, when a terminal in one slot needs to detect the CORESETs in at least two CCs, the CORESETs of the at least two CCs should be numbered globally, so that even if the terminal in one slot needs to detect the CORESETs in at least two CCs, the lowest CORESETID in the slot may be determined. For example, CORESETIDs are global numbers in the at least two CCs, or a start CORESETID is given to one serving cell (that is, one CC), and a CORESET number of the CORESET in this serving cell is equal to a sum of partial numbers of at least two CORESETs included by the start CORESETID and the CORESET in this serving cell.

In the present disclosure, a quasi-co-location reference signal may also be called a quasi-co reference signal, and a quasi-co-location parameter may also be called a quasi-co parameter.

In the present disclosure, the quasi-co-location reference signal set of the demodulation reference signal of the control resource may also be called as the quasi-co-location reference signal set of the control resource, such as the quasi-co-location reference signal included in the TCI state configured in the CORESET.

In the present disclosure, the step in which a second quasi-co-location reference signal set of the channel or signal is acquired according to a first quasi-co-location reference signal set includes that: the second quasi-co-location reference signal set of the channel or signal is the first quasi-co-location reference signal set; or a third quasi-co-location reference signal set is obtained according to the first quasi-co-location reference signal set, and the first quasi-co-location reference signal set is the third quasi-co-location reference signal set.

In the present disclosure, the quasi-co-location reference signal set for acquiring the channel or signal according to one piece of information includes at least one of: a quasi-co-location reference signal set acquisition parameter of the channel or signal including the one piece of information; a value of the one piece of information being different, and a method for acquiring the quasi-co-location reference signal set of the channel or signal being different.

In the present disclosure, the quasi-co-location reference signal set of the channel or signal is configured through the TCI state, one TCI state includes one or more quasi-co-location reference signal sets, and one port group of the channel or signal corresponds to one quasi-co-location reference signal set. Of course, the present disclosure does not exclude that one port group of the channel or signal corresponds to at least two quasi-co-location reference signal sets.

In the present disclosure, one bandwidth part is one BWP.

In the present disclosure, acquiring the quasi-co-location reference signal set of the channel or signal according to the first quasi-co-location reference signal set may also be called as acquiring the quasi-co-location reference signal set of the channel or signal according to the TCI state.

Another embodiment of the present disclosure provides a signaling transmission apparatus, including a processor and a computer-readable storage medium, where the computer-readable storage medium stores instructions which, when executed by the processor, implement any signaling transmission method described above.

Another embodiment of the present disclosure provides a computer-readable storage medium. The computer-readable storage medium stores a computer program which, when executed by a processor, implement steps of any signaling transmission method described above.

Referring to FIG. 14, another embodiment of the present disclosure provides a signal processing method, the method includes steps described below.

In step 1400, in response to N channels or signals at a same occasion colliding, a processing mode and/or an information reporting mode of a channel or signal is determined according to configuration information of at least one of N channels or signals; where N is an integer greater than or equal to 2.

In step 1401, the channel or signal is processed in the determined processing mode, and/or information is reported in the determined information reporting mode.

In the embodiment of the present disclosure, where the processing mode includes at least one of: a measurement mode, a quasi-co-location parameter priority, and a priority of quasi-co-location reference signal set.

The processing the channel or signal in the determined processing mode includes at least one of: performing a signal measurement, not performing the signal measurement, and receiving the channel or signal by a determined quasi-co-location parameter.

In the embodiment of the present disclosure, the step in which the information reporting mode is determined includes: information reporting or not performing the information reporting. In the embodiment of the present disclosure, the signal includes a measurement reference signal, and the processing mode for determining the channel or signal according to the configuration information of at least one of the N channels or signals includes at least one of: determining a set of X signal measurement modes, and selecting a signal measurement mode from the set of measurement modes according to configuration information of the measurement reference signal, where X>1; determining a set of Y information reporting modes, and selecting an information reporting mode from the set of information reporting modes according to the configuration information of the measurement reference signal, where Y>1.

In the embodiment of the present disclosure, the configuration information of the measurement reference signal includes any one or more of the following: time domain behavior information of the measurement reference signal, where the time domain behavior information includes at least one of: period, half-period, aperiod; channel measurement time domain restriction information of channel state feedback configuration information corresponding to the measurement reference signal; repetition information in a reference signal resource set in which the measurement reference signal is located; or usage configuration of the measurement reference signal (TRS info=ON).

In the embodiment of the present disclosure, a case of N channels or signals at a same occasion colliding includes at least one of: the N channels or signals not satisfying a quasi-co-location relationship with respect to a spatial Rx parameter; the N channels or signals not satisfying the quasi-co-location relationship with respect to a quasi-co-location reference signal of the spatial Rx parameter; the N channels or signals incapable of being simultaneously received by a first communication node; where the first communication node is a communication node for receiving the reference signal; one channel or signal in the N channels or signals associated with a quasi-co-location reference signal set of one or more quasi-co-location parameters being updated to another channel or signal in the N channels or signals associated with the quasi-co-location reference signal set of one or more quasi-co-location parameters.

In the embodiment of the present disclosure, the set of X signal measurement modes includes at least one of: not receiving the measurement reference signal on a time domain symbol set; not measuring the measurement reference signal on the time domain symbol set; receiving the measurement reference signal on the time domain symbol set; or measuring the measurement reference signal on the time domain symbol set.

The set of Y information reporting modes includes at least one of: reporting channel state information, where a channel measurement occasion corresponding to the reported channel state information does not include a first time domain symbol set; or reporting the channel state information, where the channel measurement occasion corresponding to the reported channel state information not includes the time domain symbol set; reporting the channel state information at a first reporting occasion, and a reporting period corresponding to the first reporting occasion includes time domain symbols in the time domain symbol set; not reporting the channel state information at the first reporting occasion, and the reporting period corresponding to the first reporting occasion includes the time domain symbols in the time domain symbol set; where an intersection between the time domain symbol set where the reference signal is located and the collided time domain symbol is not empty.

The time domain symbol set may include time domain symbols in addition to the collided time domain symbol.

In the embodiment of the present disclosure, the configuration information of at least one of the N channels or signals includes at least one of: whether an aggregation factor of the channel is greater than a predefined value; whether the channel is a dedicated channel, a public channel or a group channel; a detection period of the N channels; whether the channel or signal and a control resource satisfying a predefined feature in a time unit closest to the channel or signal belong to a same component carrier; or whether the channel or signal and a control channel scheduling the channel or signal belong to the same component carrier; whether the channel or signal and the control resource satisfying the predefined feature in the time unit closest to the channel or signal belong to a same bandwidth part (BWP); or whether the channel or signal and a control channel for scheduling the channel or signal belong to the same bandwidth part.

In the embodiment of the present disclosure, when the channel is a control channel, the priority of the QCL reference signal set of the N channels satisfies at least one of the following features: a priority of a control resource having a lower control resource identifier in control resources where the control channel is located being higher than a priority of a control resource having a higher control resource identifier in the control resources where the control channel is located; a priority of a shared control channel or a public control channel being higher than a priority of a dedicated control channel; a priority of a control channel with a long period of a search space corresponding to the control channel is higher than a priority of a control channel with a short period of the search space corresponding to the control channel, where N is an integer greater than 1.

In the embodiment of the present disclosure, where a quasi-co-location reference signal set of a control channel with a high priority receives the control channel with the high priority; the control channel with a low priority is scheduled to be not detected at a collision occasion; or the QCL reference signal set of the control channel with the low priority is updated to the QCL reference signal set of the control channel with the high priority in a collided time domain symbol/time unit.

In the embodiment of the present disclosure, the N channels or signals satisfy at least one of the following features: the N channels or signals being on a same time domain symbol, subcarrier intervals corresponding to time domain symbols where the N channels or signals are located being different; or the N channels or signals being in a same time unit.

Referring to FIG. 15, another embodiment of the present disclosure provides a signal processing apparatus, including a fourth determination module and a processing module.

The fourth determination module is used for determining a processing mode of a channel or signal according to configuration information of at least one of N channels or signals in response to the N channels or signals at a same occasion colliding; where N is an integer greater than or equal to 2.

The processing module is used for processing the channel or signal in the determined processing mode, and/or determine an information reporting mode.

In the embodiment of the present disclosure, where the processing mode includes at least one of: a measurement mode, a quasi-co-location parameter priority, and a priority of quasi-co-location reference signal set.

The processing the channel or signal in the determined processing mode includes at least one of: performing a signal measurement, not performing the signal measurement, and receiving the channel or signal by a determined quasi-co-location reference signal set.

In the embodiment of the present disclosure, when the channel is a control channel, the priority of the quasi-co-location reference signal set of the N channels satisfies at least one of the following features: a priority of a control resource having a lower control resource identifier in control resources where the control channel is located being higher than a priority of a control resource having a higher control resource identifier in the control resources where the control channel is located; a priority of a shared control channel or a public control channel being higher than a priority of a dedicated control channel; a priority of a control channel with a long period of a search space corresponding to the control channel being higher than a priority of a control channel with a short period of the search space corresponding to the control channel, where N is an integer greater than 1.

In the embodiment of the present disclosure, where a quasi-co-location reference signal set of a control channel with a high priority receives the control channel with the high priority; and/or the control channel with a low priority is scheduled to be not detected at a collision occasion; or the quasi-co-location reference signal set of the control channel with the low priority is updated to the quasi-co-location reference signal set of the control channel with the high priority in a collided time domain symbol/time unit.

In the embodiment of the present disclosure, the processing module is specifically used for determining an information reporting mode by using the following modes: performing information reporting or not performing information reporting.

In the embodiment of the present disclosure, the signal includes a measurement reference signal, and the processing mode for determining the channel or signal according to the configuration information of at least one of the N channels or signals includes at least one of the following: determining a set of X signal measurement modes, and selecting a signal measurement mode from the set of measurement modes according to configuration information of the measurement reference signal, where X>1; or determining a set of Y information reporting modes, and selecting an information reporting mode from the set of information reporting modes according to the configuration information of the measurement reference signal, where Y>1.

In the embodiment of the present disclosure, the configuration information of the measurement reference signal includes any one or more of the following: time domain behavior information of the measurement reference signal; channel measurement time domain restriction information of channel state feedback configuration information corresponding to the measurement reference signal; repetition information in a reference signal resource set in which the measurement reference signal is located; usage configuration of the measurement reference signal.

In the embodiment of the present disclosure, a case of N channels or signals at a same occasion colliding includes at least one of: the N channels or signals not satisfying a quasi-co-location relationship with respect to a spatial Rx parameter; the N channels or signals not satisfying the quasi-co-location relationship with respect to a quasi-co-location reference signal of the spatial Rx parameter; the N channels or signals incapable of being simultaneously received by a first communication node; where the first communication node is a communication node for receiving the reference signal; one channel or signal in the N channels or signals associated with a quasi-co-location reference signal set of one or more quasi-co-location parameters being updated to another channel or signal in the N channels or signals associated with the quasi-co-location reference signal set of one or more quasi-co-location parameters.

In the embodiment of the present disclosure, the set of X signal measurement modes includes at least one of: not receiving the measurement reference signal on a time domain symbol set; not measuring the measurement reference signal on the time domain symbol set; receiving the measurement reference signal on the time domain symbol set; or measuring the measurement reference signal on the time domain symbol set.

In the embodiment of the present disclosure, the set of Y information reporting modes includes at least one of: reporting channel state information, where a channel measurement occasion corresponding to the reported channel state information does not include the time domain symbol set; reporting the channel state information, where the channel measurement occasion corresponding to the reported channel state information not includes the time domain symbol set; reporting the channel state information at a first reporting occasion, and a reporting period corresponding to the first reporting occasion includes time domain symbols in the time domain symbol set; not reporting the channel state information at the first reporting occasion, and the reporting period corresponding to the first reporting occasion includes the time domain symbols in the time domain symbol set; where an intersection between the time domain symbol set where the reference signal is located and the collided time domain symbol is not empty.

In the embodiment of the present disclosure, the configuration information of at least one of the N channels or signals includes at least one of: whether an aggregation factor of the channel is greater than a predefined value; whether the channel is a dedicated channel, a public channel or a group channel; a detection period of the N channels; whether the channel or signal and a control resource satisfying a predefined feature in a time unit closest to the channel or signal belong to a same component carrier; or whether the channel or signal and a control channel scheduling the channel or signal belong to the same component carrier; whether the channel or signal and the control resource satisfying the predefined feature in the time unit closest to the channel or signal belong to a same bandwidth part; or whether the channel or signal and a control channel scheduling the channel or signal belong to the same bandwidth part.

In the embodiment of the present disclosure, the N channels or signals satisfy at least one of the following features: the N channels or signals being on a same time domain symbol; subcarrier intervals corresponding to time domain symbols where the N channels or signals are located being different; or the N channels or signals being in a same time unit.

Another embodiment of the present disclosure provides a signaling processing apparatus, including a processor and a computer-readable storage medium, where the computer-readable storage medium stores instructions which, when executed by the processor, implement any signal processing method described above.

Another embodiment of the present disclosure provides a computer-readable storage medium. The computer-readable storage medium stores a computer program which, when executed by a processor, implement steps of any signal processing method described above.

Another embodiment of the present disclosure provides a method for determining a quasi-co-location reference signal set, the method includes a step described below.

The quasi-co-location reference signal set of a channel or signal is acquired according to at least one piece of the following information: whether an aggregation factor of the channel is greater than a predefined value; whether the channel or signal and a control resource satisfying a predefined feature in a time unit closest to the channel or signal belong to a same frequency bandwidth; or whether a control channel scheduling the channel or signal and the channel or signal belong to the same frequency bandwidth; or an agreed rule.

In the embodiment of the present disclosure, the frequency bandwidth includes at least one of: a frequency bandwidth corresponding to a carrier member, and a bandwidth part.

In the embodiment of the present disclosure, the step in which the quasi-co-location reference signal set of the channel or signal is determined according to whether the channel or signal and the control resource satisfying the predefined feature in the time unit closest to the channel or signal belong to the same frequency bandwidth includes at least one of: in response to the channel or signal and the control resource satisfying the predefined feature in the time unit closest to the channel or signal belong to the same frequency bandwidth, determining a quasi-co-location reference signal of quasi-co-location parameters in a first-type quasi-co-location parameter set associated with the channel or signal according to a quasi-co-location reference signal set of a demodulation reference signal of the control resource satisfying the predefined feature; in response to the channel or signal and the control resource satisfying the predefined feature in the time unit closest to the channel or signal belong to different frequency bandwidths, determining a quasi-co-location reference signal associated with a spatial Rx parameter of the channel or signal according to a quasi-co-location reference signal associated with the spatial Rx parameter of the demodulation reference signal of the control resource satisfying the predefined feature, acquiring a quasi-co-location reference signal of quasi-co-location parameters in a second-type quasi-co-location parameter set associated with the channel or signal according to quasi-co-location reference signal information indicated by second signaling information, where second signaling is physical layer dynamic control signaling (such as DCI), or higher layer signaling; in response to the channel or signal and the control resource satisfying the predefined feature in the time unit closest to the channel or signal belong to different frequency bandwidths, determining the quasi-co-location reference signal associated with the spatial Rx parameter of the channel or signal according to the quasi-co-location reference signal associated with the spatial Rx parameter of the demodulation reference signal of the control resource satisfying the predefined feature, acquiring the quasi-co-location reference signal of the quasi-co-location parameters in the second-type quasi-co-location parameter set associated with the channel or signal according to a quasi-co-location reference signal set of a demodulation reference signal of a physical control channel scheduling the channel or signal.

The first-type quasi-co-location parameter set includes the following quasi-co-location parameters: the Doppler frequency shift, the Doppler spread, the average delay, the delay spread or the Spatial Rx parameter.

A second-type quasi-co-location parameter set includes the following quasi-co-location parameters: the Doppler frequency shift, the Doppler spread, the average delay, the delay spread.

In the embodiment of the present disclosure, in response to being the higher layer signaling, the second signaling information satisfies at least one of: the physical layer dynamic control signaling scheduling the channel or signal not including an indication field indicating the quasi-co-location reference signal set of the channel or signal; acquiring the quasi-co-location reference signal of the quasi-co-location parameters in the second-type quasi-co-location parameter set associated with the channel or signal according to a first-item quasi-co-location reference signal set in a quasi-co-location reference signal set list configured in the higher layer signaling; acquiring the quasi-co-location reference signal of the quasi-co-location parameters in the second-type quasi-co-location parameter set associated with the channel or signal according to a first-item quasi-co-location reference signal set in a quasi-co-location reference signal set list of a data channel included in configuration information of a bandwidth part with a predefined feature in a component carrier in which the channel or signal is located; or acquiring the quasi-co-location reference signal of the quasi-co-location parameters in the second-type quasi-co-location parameter set associated with the channel or signal according to a first-item quasi-co-location reference signal set in a quasi-co-location reference signal set list included in configuration information of the component carrier in which the channel or signal is located.

In the embodiment of the present disclosure, in response to being the higher layer signaling, the second signaling information satisfies at least one of: acquiring the quasi-co-location reference signal of the quasi-co-location parameters in the second-type quasi-co-location parameter set associated with the channel or signal according to a first-item quasi-co-location reference signal set in a quasi-co-location reference signal set list included in configuration information of the frequency bandwidth in which the channel or signal is located; acquiring a quasi-co-location reference signal in the second-type quasi-co-location parameter set associated with the channel or signal according to a fourth quasi-co-location reference signal set associated with a control resource in which the control channel scheduling the channel or signal is located, where the fourth quasi-co-location reference signal set and a seventh quasi-co-location reference signal set of the demodulation reference signal of the control resource are different sets.

In the embodiment to the present disclosure, the step in which the quasi-co-location reference signal set is determined according to whether the aggregation factor of the channel is greater than the predefined value includes: in response to the aggregation factor of the channel being greater than the predefined value, at least one of: acquiring the quasi-co-location reference signal set of the channel according to information indicated in control signaling scheduling the channel; acquiring a quasi-co-location reference signal set of a demodulation reference signal of the channel according to a quasi-co-location reference signal set of a demodulation reference signal of the control channel scheduling the channel; acquiring the quasi-co-location reference signal set of the demodulation reference signal of the channel according to a fourth quasi-co-location reference signal set associated with a control resource where the control channel scheduling the channel is located, where the fourth quasi-co-location reference signal set and a seventh quasi-co-location reference signal set of a demodulation reference signal of the control resource are different sets.

In the embodiment to the present disclosure, the step in which the quasi-co-location reference signal set is determined according to whether the aggregation factor of the channel is greater than the predefined value and the agreed rule includes: in response to the aggregation factor of the channel being greater than the predefined value, not expecting, by a communication node, to receive configuration information not satisfying at least one of the following features (that is, the communication node expects to receive the configuration information satisfying at least one of the following features): an interval between the channel in each time unit occupied by the channel and the control channel scheduling the channel being greater than or a predefined threshold; a quasi-co-location reference signal set of a demodulation reference signal of a control resource having a lowest control resource identifier included in each time unit of X time units being same; the control resource having the lowest control resource identifier included in each time unit of the X time units being same; the demodulation reference signal of the control resource having the lowest control resource identifier included in each time unit of X time units satisfying a quasi-co-location relationship; where the X time units correspond to Y time units occupied by an aggregated channel, where one time unit of the X time units is a time unit closest to one or more time units in the Y time units occupied by the channel in the time units including the control resource; where X is a positive integer less than or equal to Y, and the communication node is a communication node receiving the channel.

In the embodiment of the present disclosure, the channel or signal satisfies at least one of the following features: a distance between a physical layer control channel scheduling the channel or signal and the channel or signal being less than the predefined threshold; the physical layer control channel scheduling the channel or signal not including indication information indicating the quasi-co-location reference signal set of the channel or signal.

In the embodiment of the present disclosure, the step in which the quasi-co-location reference signal set of the channel or signal is determined according to whether the control channel scheduling the channel or signal and the channel or signal belong to the same frequency bandwidth includes at least one of: in response to the control channel scheduling the channel or signal and the channel or signal belonging to the same frequency bandwidth, obtaining a quasi-co-location parameter reference signal set of the channel or signal with respect to a first-type quasi-co-location parameter set according to a quasi-co-location reference signal set of a demodulation reference signal of the control channel; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring a quasi-co-location reference signal of a quasi-co-location parameter of the channel or signal with respect to a second-type quasi-co-location parameter set according to a first quasi-co-location reference signal set in a quasi-co-location reference signal set list configured in higher layer signaling; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring a quasi-co-location reference signal of a quasi-co-location parameter of the channel or signal with respect to the second-type quasi-co-location parameter set according to a first-item quasi-co-location reference signal set in a quasi-co-location reference signal set list of a data channel included in configuration information of a bandwidth part with a predefined feature in a component carrier in which the channel or signal is located; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring the quasi-co-location reference signal of the quasi-co-location parameter of the channel or signal with respect to the second-type quasi-co-location parameter set according to a first-item quasi-co-location reference signal set in a quasi-co-location reference signal set list included in the component carrier in which the channel or signal is located; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring the quasi-co-location reference signal of the quasi-co-location parameter of the channel or signal with respect to the second-type quasi-co-location parameter set according to a fourth quasi-co-location reference signal set associated with a control resource where the control channel is located, where the fourth quasi-co-location reference signal set and the seventh quasi-co-location reference signal set of the demodulation reference signal of the control resource are different sets; or in response to the control channel scheduling the channel or signal and the channel or signal belonging to the different component carriers, acquiring the quasi-co-location reference signal set of the channel or signal according to higher layer signaling information.

In the embodiment of the present disclosure, in response to the control channel scheduling the channel or signal and the channel or signal belonging to the different frequency bandwidths, and/or in response to the control channel scheduling the channel or signal not including a quasi-co-location reference signal indication field, the quasi-co-location reference signal set of the channel or signal is acquired according to at least one of: acquiring the quasi-co-location reference signal set of the channel or signal according to a predefined item in a quasi-co-location reference signal set list configured in the frequency bandwidth in which the channel or signal is located; acquiring the quasi-co-location reference signal set of the channel or signal according to quasi-co-location reference signal set information configured for the frequency bandwidth in which the channel or signal is located in the control channel for scheduling the channel or signal; acquiring the quasi-co-location reference signal set of the channel or signal according to a quasi-co-location reference signal set of a demodulation reference signal of a control resource with a predefined identification number in the frequency bandwidth in which the channel or signal is located; or acquiring the quasi-co-location reference signal set of the channel or signal according to a quasi-co-location reference signal set of a demodulation reference signal of the control resource satisfying the second predefined feature in a time unit closest to the channel or signal in time units of control resources satisfying the first predefined feature.

The control resource satisfying the second predefined feature is the control resource with a lowest identification number in the frequency bandwidth in which the channel or signal is located in the time unit.

In the embodiment of the present disclosure, an index of the predefined item in the quasi-co-location reference signal set list, and/or the predefined identification number are acquired according to at least one of: an index of a time unit in which the channel or signal is located; an index of a time unit in which a control channel for scheduling the channel or signal is located; an index of the control resource in which the control channel for scheduling the channel or signal is located; where a control resource may be one CORESET, one search space, or one search space set; an index of a candidate control resource corresponding to the control channel for scheduling the channel or signal; the identification number of the control resource satisfying the second predefined feature in the time unit of the control resources closest to the channel or signal and the control resources included a frequency bandwidth control resource in which the channel or signal is located; the number of items included in the quasi-co-location reference signal set list; the total number of control resources configured in the frequency bandwidth in which the channel or signal is located.

One control resource may be one CORESET, one search space, or one search space set.

The control resource satisfying the second predefined feature is the control resource having the lowest identification number in the frequency bandwidth in which the channel or signal is located in the time unit.

In the embodiment of the present disclosure, where the control channel does not include indication information indicating the quasi-co-location reference signal set of the channel or signal; and/or a time interval between the control channel and the channel or signal is greater than or equal to a predefined threshold.

In the embodiment of the present disclosure, the method further includes a step described below. In response to a first control resource and the channel or signal belonging to different frequency bandwidths, the quasi-co-location reference signal set of the channel or signal is acquired according to whether indication information of the quasi-co-location reference signal information exists in the control channel for scheduling the channel or signal.

The first control resource includes at least one of the following control resources: the control resource satisfying the predefined feature in the time unit closest to the channel or signal, and the control channel for scheduling the channel or signal.

In the embodiment of the present disclosure, the step in which the quasi-co-location reference signal set of the channel or signal is acquired according to whether indication information of the quasi-co-location reference signal information exists in the control channel for scheduling the channel or signal includes at least one of steps described below.

In response to the indication information of the quasi-co-location reference signal information existing in the control channel for scheduling the channel or signal, a quasi-co-location reference signal set of the channel or signal with respect to a second-type of quasi-co-location parameters is acquired according to the indication information of the quasi-co-location reference signal information.

In response to the indication information of the quasi-co-location reference signal information not existing in the control channel for scheduling the channel or signal, the quasi-co-location reference signal set of the channel or signal with respect to the second-type of quasi-co-location parameters is acquired according to the predefined item in the quasi-co-location reference signal set list configured in the frequency bandwidth in which the channel or signal is located.

In response to the indication information of the quasi-co-location reference signal information not existing in the control channel for scheduling the channel or signal, the quasi-co-location reference signal set of the channel or signal with respect to the second-type of quasi-co-location parameters is acquired according to a quasi-co-location reference signal of a predefined control resource in the frequency bandwidth in which the channel or signal is located.

In the embodiment of the present disclosure, in response to the aggregation factor of the channel being greater than the predefined value, the method includes at least one of: in response to satisfying a first predefined condition, not expecting to receive the control channel scheduling the channel and satisfying the following feature: a time interval between the control channel scheduling the channel and the channel in one or more time units of A time units being less than a predefined threshold; in response to satisfying the first predefined condition, expecting to receive the control channel scheduling the channel and satisfying the following feature: the time interval between the control channel scheduling the channel and the channel or signal in each time unit of the A time units being greater than or equal to the predefined threshold; in response to satisfying a second predefined condition, the time interval between the control channel scheduling the channel and the channel in each time unit of the A time units being not restricted; the quasi-co-location reference signal sets of the demodulation reference signals of the channels in the A time units are same, where the A time units are the time units occupied by the channel, and A is equal to the aggregation factor.

In the embodiment of the present disclosure, a first predefined condition includes one of: at least one first quasi-co-location reference signal set existing in all configured quasi-co-location reference signal sets, and one or more reference signals in the first quasi-co-location reference signal set being associated with a spatial Rx parameter; at least one first quasi-co-location reference signal set existing in all quasi-co-location reference signal sets configured in the frequency bandwidth in which the channel or signal is located; or at least one first quasi-co-location reference signal set existing in all quasi-co-location reference signal sets configured in a frequency bandwidth group in which the channel or signal is located.

In the embodiment of the present disclosure, a second predefined condition includes one of: all configured quasi-co-location reference signal sets not including a quasi-co-location reference signal associated with a spatial Rx parameter; all quasi-co-location reference signal sets configured in a frequency bandwidth in which the channel or signal is located not including the quasi-co-location reference signal associated with the spatial Rx parameter; all quasi-co-location reference signal sets configured in a frequency bandwidth group in which the channel or signal is located not including the quasi-co-location reference signal associated with the spatial Rx parameter.

All configured quasi-co-location reference signal sets refers to all quasi-co-location reference signal sets configured to the local. For example, all configured quasi-co-location reference signal sets may be quasi-co-location reference signal sets configured for the channel or signal, or quasi-co-location reference signal sets configured for other information.

In the embodiment of the present disclosure, where including one or more quasi-co-location reference signal sets in a transmission configuration indication state (TCI state); and/or including one or more quasi-co-location reference signal sets in the TCI state; and/or the frequency bandwidth corresponding to a serving cell.

In the embodiment of the present disclosure, the step in which the quasi-co-location reference signal set of the channel or signal is acquired according to the agreed rule includes a step described below.

in response to a third predefined condition being satisfied, the quasi-co-location reference signal set of the channel or signal is acquired according to one of: a quasi-co-location reference signal set of a demodulation reference signal of the control channel for scheduling the channel or signal; quasi-co-location reference signal set configuration information of the control resource satisfying predefined feature in the time unit in which the control channel for scheduling the channel or signal is located; quasi-co-location reference signal set configuration information of the control resource satisfying predefined feature in a first time unit (which may also be called as a frontmost time unit) in which the channel or signal is located; or a quasi-co-location reference signal set indicated in the control channel for scheduling the channel or signal.

In the embodiment of the present disclosure, a third predefined condition includes one of: an aggregation factor of the channel being greater than a predefined value; a time interval between the control channel for scheduling the channel or signal and the channel or signal being greater than or equal to a predefined threshold; the control channel scheduling the channel or signal not including indication information of the quasi-co-location reference signal set of the channel or signal; the time interval between the control channel for scheduling the channel or signal and the channel or signal being less than the predefined threshold; transmitting (including sending or receiving) signaling information, the signaling information indicates a method for acquiring the quasi-co-location reference signal set of the channel or signal. The acquisition method here refers to one of the four methods for acquiring the quasi-co-location reference signal set of the channel or signal in response to the third predefined condition being satisfied.

In the embodiment of the present disclosure, the method further includes that:
a first communication node does not expect to receive configuration information not satisfying at least one of: Z control resources satisfying a quasi-co-location relationship with respect to a spatial Rx parameter, where different control resources in the Z control resources belong to different frequency bandwidths; in response to the control channel scheduling the channel or signal and the channel or signal belonging to different frequency bandwidths, higher layer configuration information of the frequency bandwidth in which the channel or signal is located including at least one piece of quasi-co-location reference signal indication information; in response to the control channel scheduling the channel or signal and the channel or signal belonging to different frequency bandwidths, the control channel scheduling the channel or signal including quasi-co-location reference signal indication information of the channel or signal; where the first communication node is a receiving node of the channel or signal.

In the embodiment of the present disclosure, the Z control resource groups satisfy at least one of: the Z control resources lying in a same time unit; the Z control resources corresponding to Z types of channels or signals, where the Z types of channels or signals satisfy at least one of: acquiring the quasi-co-location reference signal of an i-th type channel or i-th signal according to a quasi-co-location reference signal of an i-th control resource, where i is an integer greater than or equal to 1 and less than or equal to Z; the $i$-th type channel or $i$-th signal and an $i$-th control resource belonging to a same frequency bandwidth; the i-th control resource being a channel resource satisfying a second predefined feature in a time unit closest to the i-th type channel or signal in the time unit of the control resource satisfying a first predefined feature; or the Z types of channels or signals lying in a same time unit.

In the embodiment of the present disclosure, the step in which the quasi-co-location reference signal set of the channel or signal is determined according to the agreed rule includes: in response to an interval between the control channel scheduling the channel or signal and the channel or signal being less than the predefined value, acquiring the quasi-co-location reference signal set of the channel or signal according to a quasi-co-location reference signal set of a demodulation reference signal of the control resource satisfying a second predefined feature in the time unit closest to the channel or signal in a time unit set including at least one control resource satisfying the second predefined feature.

In the embodiment of the present disclosure, the control resource satisfying the first predefined feature includes at least one of: a control resource where a center carrier of the component carrier in which the control resource is located is greater than a predefined threshold; a control resource where the demodulation reference signal and a quasi-co-location reference signal satisfy the quasi-co-location relationship with respect to a spatial Rx filter parameter; a control resource in which the demodulation reference signal configures a quasi-co-location reference signal with respect to the spatial Rx filter parameter; a control resource lying within a same frequency bandwidth as the channel or signal; a control resource belonging to a frequency bandwidth or a predefined frequency bandwidth group; where one frequency bandwidth may be a bandwidth corresponding to one CC or may be a bandwidth corresponding to one BWP; a control value channel belonging to a predefined control resource group; at least associating with one control resource in candidate control channels monitored by a first communication node in the time units, where the first communication node is a receiving node of the channel or signal. In the embodiment of the present disclosure, the control resource satisfying the second predefined feature includes at least one of: a control resource having a lowest identification number in a set formed by control resources with the first predefined feature included in the closest time unit; a control resource belonging to a frequency bandwidth having a lowest frequency bandwidth identification number in a set formed by control resources having the lowest identification number in a set formed by the control resources with the first predefined feature in the closest time unit; or a control resource having a lowest identification number belonging to the frequency bandwidth having the lowest frequency bandwidth identification number in a set formed by the control resources with the first predefined feature included in the closest time unit.

In the embodiment of the present disclosure, the step in which the quasi-co-location reference signal set of the channel or signal is determined according to whether the aggregation factor of the channel is greater than the predefined value includes at least one of: the aggregation factor of the channel being greater than or equal to the predefined value, and A time units occupied by the channel being divided into G time unit groups, and each time unit group corresponding to at least one of: configuration information of a set of demodulation reference signals; or configuration information of a set of quasi-co-location reference signal sets.

That is, the demodulation reference signal configuration information corresponding to different time unit groups may be different, for example, the number of demodulation reference signal groups included in different time unit groups may be different.

In the embodiment of the present disclosure, the channel or signal satisfies at least one of: the time interval between the control channel and the channel or signal being greater than or equal to the predefined threshold; a distance between a physical layer control channel scheduling the channel or signal and the channel or signal being less than the predefined threshold; the control channel scheduling the channel or signal not including indication information indicating the quasi-co-location reference signal set of the channel or signal; or the channel being a semi-persistent channel.

In the present disclosure, transmitting includes sending or receiving.

Another embodiment of the present disclosure provides a method for determining a quasi-co-location reference signal set, the method includes:

determining at least one piece of the following information according to whether a predefined condition is satisfied: whether to determine a quasi-co-location reference signal set of a channel or signal according to first information; whether configuration information of the channel or

signal is restricted; the quasi-co-location reference signal set of the channel or signal;

where first information includes at least one piece of the following information: whether an aggregation factor of the channel is greater than a predefined value; whether the channel or signal and a control resource satisfying a predefined feature in a time unit closest to the channel or signal belong to a same frequency bandwidth; or whether a control channel scheduling the channel or signal and the channel or signal belong to the same frequency bandwidth.

In the embodiment of the present disclosure, the predefined condition includes one of: all configured quasi-co-location reference signal sets not including a quasi-co-location reference signal associated with a spatial receive parameter; all quasi-co-location reference signal sets configured in a frequency bandwidth not including the quasi-co-location reference signal associated with the spatial Rx parameter; all quasi-co-location reference signal sets configured in a frequency bandwidth in which the channel or signal is located not including the quasi-co-location reference signal associated with the spatial Rx parameter; all quasi-co-location reference signal sets configured in a frequency bandwidth group in which the channel or signal is located not including the quasi-co-location reference signal associated with the spatial Rx parameter.

In the embodiment of the present disclosure, the step of determining whether to determine the quasi-co-location reference signal set of the channel or signal according to the first information according to whether the predefined condition is satisfied includes: in response to satisfying the predefined condition, not determining the quasi-co-location reference signal set of the channel or signal according to the first information; in response to not satisfying the predefined condition, determining the quasi-co-location reference signal set of the channel or signal according to the first information; in response to not satisfying the predefined condition, determining a method for acquiring the quasi-co-location reference signal set of the channel or signal according to the first information; or in response to satisfying the predefined condition, not determining the method for acquiring the quasi-co-location reference signal set of the channel or signal according to the first information.

In the embodiment of the present disclosure, the step of determining whether configuration information of the channel or signal is restricted according to whether the predefined condition is satisfied satisfies at least one of the following features: in response to not satisfying the predefined condition, not expecting, by a communication node, to receive the control channel scheduling the channel or signal and satisfying the following feature: a time interval between the control channel or signal scheduling the channel or signal and the channel or signal in one or more time units of A time units being less than a predefined threshold; in response to not satisfying the predefined condition, expecting, by the communication node, to receive the control channel scheduling the channel or signal and satisfying the following feature: a time interval between the control channel or signal scheduling the channel or signal and the channel or signal in each time unit of the A time units being greater than or equal to the predefined threshold; in response to not satisfying the predefined condition, the time interval between the channel or signal in each time unit of the A time units and the control channel or signal scheduling the channel or signal being not restricted; in response to not satisfying the predefined condition, not expecting, by the communication node, to receive configuration information satisfying the following feature: at least two channels or signals at a same occasion not satisfying a quasi-co-location relationship with respect to the spatial receive parameter; in response to satisfying the predefined condition, no restriction between the quasi-co-location reference signal sets of at least two channels or signals at the same occasion being provided; in response to satisfying the predefined condition, quasi-co-location reference signals of a same type of quasi-co-location parameters of the at least two channels or signals at the same occasion satisfying or not satisfying the quasi-co-location relationship; in response to not satisfying the predefined condition, not expecting, by the communication node, to receive the configuration information satisfying the following feature: the quasi-co-location reference signals of the same type of quasi-co-location parameters of the at least two channels or signals at the same occasion not satisfying the quasi-co-location relationship with respect to the spatial Rx parameter; where the A time units are A time units occupied by the channel or signal, A is an integer greater than or equal to 1, the communication node is a communication node receiving the channel or signal or a signal.

The configuration information includes the control channel.

In the embodiment of the present disclosure, the step of determining the quasi-co-location reference signal set of the channel or signal according to whether a predefined condition is satisfied includes at least one of: in response to satisfying the predefined condition, the control channel scheduling the channel or signal not including the quasi-co-location reference signal set of the channel or signal, regardless of the time interval between the control channel scheduling the channel or signal and the channel or signal being less than or greater than or equal to the predefined threshold, acquiring the quasi-co-location reference signal set of the channel or signal according to the quasi-co-location reference signal set of the demodulation reference signal of the control channel scheduling the channel or signal; in response to not satisfying the predefined condition, the control channel scheduling the channel or signal not including the quasi-co-location reference signal set of the channel or signal, and a time interval between the control channel for scheduling the channel or signal and the channel or signal being less than the predefined threshold, acquiring the quasi-co-location reference signal set of the channel or signal according to configuration information of a quasi-co-location reference signal set of control resources with the predefined feature in a time unit closest to the channel or signal and including the control resources; in response to not satisfying the predefined condition, the control channel scheduling the channel or signal not including the quasi-co-location reference signal set of the channel or signal, and the time interval between the control channel scheduling the channel or signal and the channel or signal being greater than or equal to the predefined threshold, acquiring the quasi-co-location reference signal set of channel or signal according to the quasi-co-location reference signal set of the demodulation reference signal of the control channel scheduling the channel or signal.

In the embodiment of the present disclosure, the method includes at least one of: including one or more quasi-co-location reference signal sets in a transmission configuration indication state; including one or more quasi-co-location reference signal sets in a transmission configuration indication state; the frequency bandwidth corresponding to a serving cell; or the frequency bandwidth being one bandwidth part.

For example, at high frequencies, since the terminal may only emit a limited number of radio frequency beams at one occasion and/or the terminal may only emit beams indicated in the PDCCH after decoding the PDCCH, it is necessary to acquire the quasi-co-location reference signal set or the method for acquiring the quasi-co-location reference signal set according to the first information, or the configuration information of the channel or signal needs to be restricted, and the terminal adopts an omnidirectional receiving, and does not need to acquire the quasi-co-location reference signal set or the method for acquiring the quasi-co-location reference signal set according to the first information, or the configuration information of the channel or signal does not need to be restricted.

For example, at high frequencies, the DCI and the aggregation factor are greater than 1, and the interval between the DCI and the PDSCH needs to be greater than the predefined threshold; at low frequencies, the DCI and the aggregation factor are greater than 1, there is no limit to the interval between the DCI and the PDSCH; at high frequencies, it is necessary to determine the QCL reference signal set of the channel or signal according to whether the DCI and the PDSCH are in the same frequency bandwidth, i.e., determine the method for acquiring the QCL reference signal set of the channel or signal. Belonging to the same bandwidth is one acquisition method, not belonging to the same bandwidth is another acquisition method; at low frequencies, regardless of whether the DCI and the PDSCH belong to the same frequency bandwidth, the DCI and the PDSCH are acquired according to one acquisition method.

At high frequencies, it is necessary to determine the QCL reference signal set of the channel or signal according to whether the PDSCH and the CORESET with the lowest CORESETID in the slot closest to the PDSCH/AP-CSI-RS are in the same frequency bandwidth; i.e., determine the method for acquiring the QCL reference signal set of the channel or signal. Belonging to the same bandwidth is one acquisition method, not belonging to the same bandwidth is another acquisition method. At low frequencies, regardless of whether the CORESET and the PDSCH belong to the same frequency bandwidth, the CORESET and the PDSCH are acquired according to one acquisition method.

Similarly, multiple channels or signals at low frequencies may be frequency division multiplexed. Even if the QCL relationship is not satisfied, multiple channels or signals at high frequencies may only be frequency division multiplexed when the Spatial Rx parameter satisfies the QCL relationship.

The distinction between high frequencies and low frequencies may be distinguished by whether the predefined condition is met. When at low frequencies, one of the following predefined conditions is satisfied: all TCIs configured for the UE do not include the quasi-co-location reference signal associated with the spatial Rx parameter (that is, the spatial Rx filter parameter, or a Type-D quasi-co parameter).For example, all TCIs of all CCs configured for the UE are not included.

Alternatively, all TCIs corresponding to the frequency bandwidth of the channel or signal do not include the quasi-co-location reference signal associated with the spatial Rx parameter (that is, the spatial Rx filter parameter, or the Type-D quasi-co parameter), where one frequency bandwidth may be one CC, and/or one serving cell, or one BWP. For example, all TCI states included in the TCI states in the PDSCH in all BWPs included in the serving cell in which the channel or signal is located do not include a TCI state associated with the spatial Rx parameter. Or the BWP in which the channel or signal is located includes all TCI states included in the TCI states in the PDSCH, excluding the TCI state associated with the spatial Rx parameters.

Alternatively, all TCIs corresponding to the frequency bandwidth of the channel or signal do not include the quasi-co-location reference signal associated with the spatial Rx parameter (that is, the spatial Rx filter parameter, or the Type-D quasi-co parameter), where one frequency bandwidth may be one CC, and/or one serving cell, or one BWP.

Of course, satisfying one of the above conditions may also be a special configuration at high frequencies.

Another embodiment of the present disclosure provides an apparatus for determining a quasi-co-location reference signal set, the apparatus includes a fifth determination module.

The fifth determination module is used for acquiring the quasi-co-location reference signal set of a channel or signal according to at least one piece of information: whether an aggregation factor of the channel is greater than a predefined value; whether the channel or signal and a control resource satisfying a predefined feature in a time unit closest to the channel or signal belong to a same frequency bandwidth; or whether a control channel scheduling the channel or signal and the channel or signal belong to the same frequency bandwidth; or an agreed rule.

In the embodiment of the present disclosure, the frequency bandwidth includes at least one of: a frequency bandwidth corresponding to a carrier member, and a bandwidth part.

In the embodiment of the present disclosure, the step in which the quasi-co-location reference signal set of the channel or signal is determined according to whether the channel or signal and the control resource satisfying the predefined feature in the time unit closest to the channel or signal belong to the same frequency bandwidth includes at least one of: in response to the channel or signal and the control resource satisfying the predefined feature in the time unit closest to the channel or signal belong to the same frequency bandwidth, determining a quasi-co-location reference signal of quasi-co-location parameters in a first-type quasi-co-location parameter set associated with the channel or signal according to a quasi-co-location reference signal set of a demodulation reference signal of the control resource satisfying the predefined feature; in response to the channel or signal and the control resource satisfying the predefined feature in the time unit closest to the channel or signal belong to different frequency bandwidths, determining a quasi-co-location reference signal associated with a spatial Rx parameter of the channel or signal according to a quasi-co-location reference signal associated with the spatial Rx parameter of the demodulation reference signal of the control resource satisfying the predefined feature, acquiring a quasi-co-location reference signal of quasi-co-location parameters in a second-type quasi-co-location parameter set associated with the channel or signal according to quasi-co-location reference signal information indicated by second signaling information, where second signaling is physical layer dynamic control signaling (such as DCI), or higher layer signaling;

in response to the channel or signal and the control resource satisfying the predefined feature in the time unit closest to the channel or signal belong to different frequency bandwidths, determining the quasi-co-location reference signal associated with the spatial Rx parameter of the channel or signal according to the quasi-co-location reference signal associated with the spatial Rx parameter of the demodulation reference signal of the control resource satisfying the predefined feature, acquiring the quasi-co-location reference signal of the quasi-co-location parameters in the second-type quasi-co-location parameter set associated with the channel or signal according to a quasi-co-location reference signal set of a demodulation reference signal of a physical control channel scheduling the channel or signal.

The first-type quasi-co-location parameter set includes the following quasi-co-location parameters: the Doppler frequency shift, the Doppler spread, the average delay, the delay spread or the Spatial Rx parameter.

A second-type quasi-co-location parameter set includes the following quasi-co-location parameters: the Doppler frequency shift, the Doppler spread, the average delay, the delay spread.

In the embodiment of the present disclosure, in response to being the higher layer signaling, the second signaling information satisfies at least one of: the physical layer dynamic control signaling scheduling the channel or signal not including an indication field indicating the quasi-co-location reference signal set of the channel or signal; acquiring the quasi-co-location reference signal of the quasi-co-location parameters in the second-type quasi-co-location parameter set associated with the channel or signal according to a first-item quasi-co-location reference signal set in a quasi-co-location reference signal set list configured in the higher layer signaling; acquiring the quasi-co-location reference signal of the quasi-co-location parameters in the second-type quasi-co-location parameter set associated with the channel or signal according to a first-item quasi-co-location reference signal set in a quasi-co-location reference signal set list of a data channel included in configuration information of a bandwidth part with a predefined feature in a component carrier in which the channel or signal is located; or acquiring the quasi-co-location reference signal of the quasi-co-location parameters in the second-type quasi-co-location parameter set associated with the channel or signal according to a first-item quasi-co-location reference signal set in a quasi-co-location reference signal set list included in configuration information of the component carrier in which the channel or signal is located.

In the embodiment of the present disclosure, in response to being the higher layer signaling, the second signaling information satisfies at least one of: acquiring the quasi-co-location reference signal of the quasi-co-location parameters in the second-type quasi-co-location parameter set associated with the channel or signal according to a first-item quasi-co-location reference signal set in a quasi-co-location reference signal set list included in configuration information of the frequency bandwidth in which the channel or signal is located; acquiring a quasi-co-location reference signal in the second-type quasi-co-location parameter set associated with the channel or signal according to a fourth quasi-co-location reference signal set associated with a control resource in which the control channel scheduling the channel or signal is located, where the fourth quasi-co-location reference signal set and a seventh quasi-co-location reference signal set of the demodulation reference signal of the control resource are different sets.

In the embodiment to the present disclosure, the step in which the quasi-co-location reference signal set is determined according to whether the aggregation factor of the channel is greater than the predefined value includes:
in response to the aggregation factor of the channel being greater than the predefined value, at least one of: acquiring the quasi-co-location reference signal set of the channel according to information indicated in control signaling scheduling the channel; acquiring a quasi-co-location reference signal set of a demodulation reference signal of the channel according to a quasi-co-location reference signal set of a demodulation reference signal of the control channel scheduling the channel; acquiring the quasi-co-location reference signal set of the demodulation reference signal of the channel according to a fourth quasi-co-location reference signal set associated with a control resource where the control channel scheduling the channel is located, where the fourth quasi-co-location reference signal set and a seventh quasi-co-location reference signal set of a demodulation reference signal of the control resource are different sets.

In the embodiment to the present disclosure, the step in which the quasi-co-location reference signal set is determined according to whether the aggregation factor of the channel is greater than the predefined value and the agreed rule includes: in response to the aggregation factor being greater than the predefined value, not expecting, by a communication node, to receive configuration information not satisfying at least one of the following features: an interval between the channel in each time unit occupied by the channel and the control channel scheduling the channel being greater than or a predefined threshold; a quasi-co-location reference signal set of a demodulation reference signal of a control resource having a lowest control resource identifier included in each time unit of X time units being same; the control resource having the lowest control resource identifier included in each time unit of the X time units being same; the demodulation reference signal of the control resource having the lowest control resource identifier included in each time unit of X time units satisfying a quasi-co-location relationship; where the X time units correspond to Y time units occupied by an aggregated channel, where one time unit of the X time units is a time unit closest to one or more time units in the Y time units occupied by the channel in the time units including the control resource; where X is a positive integer less than or equal to Y, and the communication node is a communication node receiving the channel.

In the embodiment of the present disclosure, the channel or signal satisfies at least one of the following features: a distance between a physical layer control channel scheduling the channel or signal and the channel or signal being less than the predefined threshold; the physical layer control channel scheduling the channel or signal not including indication information indicating the quasi-co-location reference signal set of the channel or signal.

In the embodiment of the present disclosure, the step in which the quasi-co-location reference signal set of the channel or signal is determined according to whether the control channel scheduling the channel or signal and the channel or signal belong to the same frequency bandwidth includes at least one of: in response to the control channel scheduling the channel or signal and the channel or signal belonging to the same frequency bandwidth, obtaining a quasi-co-location parameter reference signal set of the channel or signal with respect to a first-type quasi-co-location parameter set according to a quasi-co-location reference signal set of a demodulation reference signal of the control channel; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring a quasi-co-location reference signal of a quasi-co-location parameter of the channel or signal with respect to a second-type quasi-co-location parameter set according to a first quasi-co-location reference signal set in a quasi-co-location reference signal set list configured in higher layer signaling; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring a quasi-co-location reference signal of a quasi-co-location parameter of the channel or signal with respect to the second-type quasi-co-location parameter set according to a first-item quasi-co-location reference signal set in a quasi-co-location reference signal set list of a data channel included in configuration information of a bandwidth part with a predefined feature in a component carrier in which the channel or signal is located; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring the quasi-co-location reference signal of the quasi-co-location parameter of the channel or signal with respect to the second-type quasi-co-location parameter set according to a first-item quasi-co-location reference signal set in a quasi-co-location reference signal set list included in the component carrier in which the channel or signal is located; in response to the control channel scheduling the channel or signal and the channel or signal belonging to the different frequency bandwidths, obtaining the quasi-co-location reference signal associated with the spatial Rx parameter of the channel or signal according to the quasi-co-location reference signal associated with the spatial Rx parameter of the demodulation reference signal of the control channel, and acquiring the quasi-co-location reference signal of the quasi-co-location parameter of the channel or signal with respect to the second-type quasi-co-location parameter set according to a fourth quasi-co-location reference signal set associated with a control resource where the control channel is located, where the fourth quasi-co-location reference signal set and the seventh quasi-co-location reference signal set of the demodulation reference signal of the control resource are different sets; or in response to the control channel scheduling the channel or signal and the channel or signal belonging to the different component carriers, acquiring the quasi-co-location reference signal set of the channel or signal according to higher layer signaling information.

In the embodiment of the present disclosure, the method includes that: the control channel does not include indication information indicating the quasi-co-location reference signal set of the channel or signal; and/or a time interval between the control channel and the channel or signal is greater than or equal to a predefined threshold.

In the embodiment of the present disclosure, the fifth determination module is also used for: in response to the control channel scheduling the channel or signal and the channel or signal belonging to the different frequency bandwidths, and/or in response to the control channel scheduling the channel or signal not including the quasi-co-location reference signal indication field, acquiring the quasi-co-location reference signal set of the channel or signal according to at least one of: acquiring the quasi-co-location reference signal set of the channel or signal according to a predefined item in a quasi-co-location reference signal set list configured in the frequency bandwidth in which the channel or signal is located; acquiring the quasi-co-location reference signal set of the channel or signal according to quasi-co-location reference signal set information configured for the frequency bandwidth in which the channel or signal is located in the control channel for scheduling the channel or signal; acquiring the quasi-co-location reference signal set of the channel or signal according to a quasi-co-location reference signal set of a demodulation reference signal of a control resource with a predefined identification number in the frequency bandwidth in which the channel or signal is located; or acquiring the quasi-co-location reference signal set of the channel or signal according to a quasi-co-location reference signal set of a demodulation reference signal of the control resource satisfying the second predefined feature in a time unit closest to the channel or signal in time units of control resources satisfying the first predefined feature.

In the embodiment of the present disclosure, an index of the predefined item in the quasi-co-location reference signal set list, and/or the predefined identification number are acquired according to at least one of: an index of a time unit in which the channel or signal is located; an index of a time unit in which a control channel for scheduling the channel or signal is located; an index of the control resource in which the control channel for scheduling the channel or signal is located; an index of a candidate control resource corresponding to the control channel for scheduling the channel or signal; the identification number of the control resource satisfying the second predefined feature in the time unit of the control resources closest to the channel or signal and the control resources included a frequency bandwidth control resource in which the channel or signal is located; the number of items included in the quasi-co-location reference signal set list; the total number of control resources configured in the frequency bandwidth in which the channel or signal is located.

In the embodiment of the present disclosure, the fifth determination module is also used for: in response to a first control resource and the channel or signal belonging to different frequency bandwidths, acquiring the quasi-co-location reference signal set of the channel or signal according to whether indication information of the quasi-co-location reference signal information exists in the control channel for scheduling the channel or signal.

The first control resource includes at least one of the following control resources: the control resource satisfying the predefined feature in the time unit closest to the channel or signal, and the control channel for scheduling the channel or signal.

In the embodiment of the present disclosure, the step in which the quasi-co-location reference signal set of the channel or signal is acquired according to whether indication information of the quasi-co-location reference signal information exists in the control channel for scheduling the channel or signal includes at least one of steps described below.

In response to the indication information of the quasi-co-location reference signal information existing in the control channel for scheduling the channel or signal, a quasi-co-location reference signal set of the channel or signal with respect to a second-type of quasi-co-location parameters is acquired according to the indication information of the quasi-co-location reference signal information.

In response to the indication information of the quasi-co-location reference signal information not existing in the control channel for scheduling the channel or signal, the quasi-co-location reference signal set of the channel or signal with respect to the second-type of quasi-co-location parameters is acquired according to the predefined item in the quasi-co-location reference signal set list configured in the frequency bandwidth in which the channel or signal is located.

In response to the indication information of the quasi-co-location reference signal information not existing in the control channel for scheduling the channel or signal, the quasi-co-location reference signal set of the channel or signal with respect to the second-type of quasi-co-location parameters is acquired according to a quasi-co-location reference signal of a predefined control resource in the frequency bandwidth in which the channel or signal is located.

In the embodiment of the present disclosure, in response to the aggregation factor of the channel being greater than the predefined value, the method includes at least one of: in response to satisfying a first predefined condition, not expecting to receive the control channel scheduling the channel and satisfying the following feature: a time interval between the control channel scheduling the channel and the channel in one or more time units of A time units being less than a predefined threshold; in response to satisfying the first predefined condition, expecting to receive the control channel scheduling the channel and satisfying the following feature: the time interval between the control channel scheduling the channel and the channel or signal in each time unit of the A time units being greater than or equal to the predefined threshold; in response to satisfying a second predefined condition, the time interval between the control channel scheduling the channel and the channel in each time unit of the A time units being not restricted; the quasi-co-location reference signal sets of the demodulation reference signals of the channels in the A time units are same; where the A time units are the time units occupied by the channel, and A is equal to the aggregation factor.

In the embodiment of the present disclosure, a first predefined condition includes one of: at least one first quasi-co-location reference signal set existing in all configured quasi-co-location reference signal sets, and one or more reference signals in the first quasi-co-location reference signal set being associated with a spatial Rx parameter; at least one first quasi-co-location reference signal set existing in all quasi-co-location reference signal sets configured in the frequency bandwidth in which the channel or signal is located; or at least one first quasi-co-location reference signal set existing in all quasi-co-location reference signal sets configured in a frequency bandwidth group in which the channel or signal is located.

In the embodiment of the present disclosure, a second predefined condition includes one of: all configured quasi-co-location reference signal sets not including a quasi-co-location reference signal associated with a spatial Rx parameter; all quasi-co-location reference signal sets configured in a frequency bandwidth in which the channel or signal is located not including the quasi-co-location reference signal associated with the spatial Rx parameter; all quasi-co-location reference signal sets configured in a frequency bandwidth group in which the channel or signal is located not including the quasi-co-location reference signal associated with the spatial Rx parameter.

In the embodiment of the present disclosure, the method includes: including one or more quasi-co-location reference signal sets in a transmission configuration indication state; including one or more quasi-co-location reference signal sets in the TCI state; the frequency bandwidth corresponding to a serving cell.

In the embodiment of the present disclosure, the fifth determination module is specifically used for acquiring the quasi-co-location reference signal set of the channel or signal according to the agreed rule by using a method described below.

In response to a third predefined condition being satisfied, the quasi-co-location reference signal set of the channel or signal is acquired according to one of: a quasi-co-location reference signal set of a demodulation reference signal of the control channel for scheduling the channel or signal; quasi-co-location reference signal set configuration information of the control resource satisfying predefined feature in the time unit in which the control channel for scheduling the channel or signal is located; quasi-co-location reference signal set configuration information of the control resource satisfying predefined feature in a first time unit in which the channel or signal is located; or a quasi-co-location reference signal set indicated in the control channel for scheduling the channel or signal.

In the embodiment of the present disclosure, a third predefined condition includes one of: an aggregation factor of the channel being greater than a predefined value; a time interval between the control channel for scheduling the channel or signal and the channel or signal being greater than or equal to a predefined threshold; the control channel scheduling the channel or signal not including indication information of the quasi-co-location reference signal set of the channel or signal; the time interval between the control channel for scheduling the channel or signal and the channel or signal being less than the predefined threshold; transmitting signaling information, the signaling information indicates a method for acquiring the quasi-co-location reference signal set of the channel or signal.

In the embodiment of the present disclosure, a first communication node does not expect to receive configuration information not satisfying at least one of: Z control resources satisfying a quasi-co-location relationship with respect to a spatial Rx parameter, where different control resources in the Z control resources belong to different frequency bandwidths; in response to the control channel scheduling the channel or signal and the channel or signal belonging to different frequency bandwidths, higher layer configuration information of the frequency bandwidth in which the channel or signal is located including at least one piece of quasi-co-location reference signal indication information; in response to the control channel scheduling the channel or signal and the channel or signal belonging to different frequency bandwidths, the control channel scheduling the channel or signal including quasi-co-location reference signal indication information of the channel or signal, where the first communication node is a receiving node of the channel or signal.

In the embodiment of the present disclosure, the Z control resource groups satisfy at least one of: the Z control resources lying in a same time unit; the Z control resources corresponding to Z types of channels or signals, where the Z types of channels or signals satisfy at least one of: acquiring the quasi-co-location reference signal of an ith type channel or signal according to a quasi-co-location reference signal of an ith control resource; where i is an integer greater than or equal to 1 and less than or equal to Z; the ith type channel or signal and an ith control resource belonging to a same frequency bandwidth; the ith control resource being a channel resource satisfying a second predefined feature in a time unit closest to the ith type channel or signal in the time unit of the control resource satisfying a first predefined feature; or the Z types of channels or signals lying in a same time unit.

In the embodiment of the present disclosure, the step in which the quasi-co-location reference signal set of the channel or signal is determined according to the agreed rule includes: in response to an interval between the control channel scheduling the channel or signal and the channel or signal being less than the predefined value, acquiring the quasi-co-location reference signal set of the channel or signal according to a quasi-co-location reference signal set of a demodulation reference signal of the control resource satisfying a second predefined feature in the time unit closest to the channel or signal in a time unit set including at least one control resource satisfying the second predefined feature.

In the embodiment of the present disclosure, the control resource satisfying the first predefined feature includes at least one of: a control resource where a center carrier of the component carrier in which the control resource is located is greater than a predefined threshold; a control resource where the demodulation reference signal and a quasi-co-location reference signal satisfy the quasi-co-location relationship with respect to a spatial Rx filter parameter; a control resource in which the demodulation reference signal configures a quasi-co-location reference signal with respect to the spatial Rx filter parameter; a control resource lying within a same frequency bandwidth as the channel or signal; a control resource belonging to a predefined frequency bandwidth or frequency bandwidth group; a control value channel belonging to a predefined control resource group; at least associating with one control resource in candidate control channels monitored by a first communication node in the time units, where the first communication node is a receiving node of the channel or signal.

In the embodiment of the present disclosure, the control resource satisfying the second predefined feature includes at least one of: a control resource having a lowest identification number in a set formed by control resources with the first predefined feature included in the closest time unit; a control resource belonging to a frequency bandwidth having a lowest frequency bandwidth identification number in a set formed by control resources having the lowest identification number in a set formed by the control resources with the first predefined feature in the closest time unit; or a control resource having a lowest identification number belonging to the frequency bandwidth having the lowest frequency bandwidth identification number in a set formed by the control resources with the first predefined feature included in the closest time unit.

In the embodiment of the present disclosure, the step in which the quasi-co-location reference signal set of the channel or signal is determined according to whether the aggregation factor of the channel is greater than the predefined value includes at least one of: the aggregation factor of the channel being greater than or equal to the predefined value, and A time units occupied by the channel being divided into G time unit groups, and each time unit group corresponding to at least one of: configuration information of a set of demodulation reference signals; or configuration information of a set of quasi-co-location reference signal sets.

In the embodiment of the present disclosure, the channel or signal satisfies at least one of: the time interval between the control channel and the channel or signal being greater than or equal to the predefined threshold; a distance between a physical layer control channel scheduling the channel or signal and the channel or signal being less than the predefined threshold; the control channel scheduling the channel or signal not including indication information indicating the quasi-co-location reference signal set of the channel or signal; or the channel being a semi-persistent channel.

The specific implementation of the fifth determination module is the same as that in the above embodiment, and will not be repeated here.

Another embodiment of the present disclosure provides an apparatus for determining a quasi-co-location reference signal set, the apparatus includes a determination module.

The determination module is used for determining, according to whether a predefined condition is satisfied, at least one of: whether to determine a quasi-co-location reference signal set of a channel or signal according to first information; whether configuration information of the channel or signal is restricted; the quasi-co-location reference signal set of the channel or signal; where first information includes at least one piece of the following information: whether an aggregation factor of the channel is greater than a predefined value; whether the channel or signal and a control resource satisfying a predefined feature in a time unit closest to the channel or signal belong to a same frequency bandwidth; or whether a control channel scheduling the channel or signal and the channel or signal belong to the same frequency bandwidth.

In the embodiment of the present disclosure, the predefined condition includes one of: all configured quasi-co-location reference signal sets not including a quasi-co-location reference signal associated with a spatial Rx parameter; all quasi-co-location reference signal sets configured in a frequency bandwidth not including the quasi-co-location reference signal associated with the spatial Rx parameter; all quasi-co-location reference signal sets configured in a frequency bandwidth in which the channel or signal is located not including the quasi-co-location reference signal associated with the spatial Rx parameter; all quasi-co-location reference signal sets configured in a frequency bandwidth group in which the channel or signal is located not including the quasi-co-location reference signal associated with the spatial Rx parameter.

In the embodiment of the present disclosure, the determination module implements determining whether to determine the quasi-co-location reference signal set of the channel or signal according to the first information according to whether the predefined condition is satisfied by specifically using at least one of: in response to satisfying the predefined condition, not determining the quasi-co-location reference signal set of the channel or signal according to the first information; in response to not satisfying the predefined condition, determining the quasi-co-location reference signal set of the channel or signal according to the first information; in response to not satisfying the predefined condition, determining a method for acquiring the quasi-co-location reference signal set of the channel or signal according to the first information; or in response to satisfying the predefined condition, not determining the method for acquiring the quasi-co-location reference signal set of the channel or signal according to the first information.

In the embodiment of the present disclosure, the step of determining whether configuration information of the channel or signal is restricted according to whether a predefined condition is satisfied satisfies at least one of the following features: in response to not satisfying the predefined condition, not expecting, by a communication node, to receive the control channel scheduling the channel or signal and satisfying the following feature: a time interval between the control channel or signal scheduling the channel or signal and the channel or signal in one or more time units of A time units being less than a predefined threshold; in response to not satisfying the predefined condition, expecting, by the communication node, to receive the control channel scheduling the channel or signal and satisfying the following feature: a time interval between the control channel or signal scheduling the channel or signal and the channel or signal in each time unit of the A time units being greater than or equal to the predefined threshold; in response to not satisfying the predefined condition, the time interval between the channel or signal in each time unit of the A time units and the control channel or signal scheduling the channel or signal being not restricted; in response to not satisfying the predefined condition, not expecting, by the communication node, to receive configuration information satisfying the following feature: N channels or signals at a same occasion not satisfying a quasi-co-location relationship with respect to the spatial Rx parameter; in response to satisfying the predefined condition, no restriction between the quasi-co-location reference signal sets of N channels or signals at the same occasion being provided; in response to satisfying the predefined condition, quasi-co-location reference signals of a same type of quasi-co-location parameters of the N channels or signals at the same occasion satisfying or not satisfying the quasi-co-location relationship; in response to not satisfying the predefined condition, not expecting, by the communication node, to receive the configuration information satisfying the following feature: the quasi-co-location reference signals of the same type of quasi-co-location parameters of the N channels or signals at the same occasion not satisfying the quasi-co-location relationship with respect to the spatial Rx parameter; where the A time units are A time units occupied by the channel or signal, A is an integer greater than or equal to 1, the communication node is a communication node receiving the channel or signal or a signal, and N is a positive integer greater than 1.

In the embodiment of the present disclosure, the step of determining the quasi-co-location reference signal set of the channel or signal according to whether a predefined condition is satisfied includes at least one of: in response to satisfying the predefined condition, and the control channel scheduling the channel or signal not including the quasi-co-location reference signal set of the channel or signal, acquiring the quasi-co-location reference signal set of the channel or signal according to a quasi-co-location reference signal set of a demodulation reference signal of the control channel scheduling the channel or signal; in response to not satisfying the predefined condition, the control channel scheduling the channel or signal not including the quasi-co-location reference signal set of the channel or signal, and a time interval between the control channel for scheduling the channel or signal and the channel or signal being less than the predefined threshold, acquiring the quasi-co-location reference signal set of the channel or signal according to configuration information of a quasi-co-location reference signal set of control resources with the predefined feature in a time unit closest to the channel or signal and including the control resources; in response to not satisfying the predefined condition, the control channel scheduling the channel or signal not including the quasi-co-location reference signal set of the channel or signal, and the time interval between the control channel scheduling the channel or signal and the channel or signal being greater than or equal to the predefined threshold, acquiring the quasi-co-location reference signal set of channel or signal according to the quasi-co-location reference signal set of the demodulation reference signal of the control channel scheduling the channel or signal.

In the embodiment of the present disclosure, the method includes at least one of: including one or more quasi-co-location reference signal sets in a transmission configuration indication state; including one or more quasi-co-location reference signal sets in a transmission configuration indication state; the frequency bandwidth corresponding to a serving cell; or the frequency bandwidth being one bandwidth part.

The specific implementation of the determination module is the same as that in the above embodiment, and will not be repeated here.

Another embodiment of the present disclosure provides an apparatus for determining a quasi-co-location reference signal set, including a processor and a computer-readable storage medium, where the computer-readable storage medium stores instructions, where when executed by the processor, the instructions implement the any method for determining the quasi-co-location reference signal set described above.

Another embodiment of the present disclosure provides a computer-readable storage medium. The computer-readable storage medium stores a computer program which, when executed by a processor, implement steps of any method for determining the quasi-co-location reference signal set described above.

Another embodiment of the present disclosure provides a method for transmitting a channel state feedback capability, including: whether a channel measurement feedback capability transmitted by a first communication node is a first capability or a second capability, in response to the channel measurement feedback capability being the first capability, determining whether to ignore control information that triggers channel state feedback according to a magnitude relationship between a product of min(E,F) and a first time interval and a second time interval; in response to the channel measurement feedback capability being the second capability, determining whether to ignore the control information that triggers the channel state feedback according to a magnitude relationship between the second time interval and a third time interval corresponding to any one of channel state feedback.

The second time interval is an interval between a control channel that triggers the channel measurement feedback and a channel where channel state feedback information is located, and the value of E is the number of channel state feedback simultaneously calculated by the first communication node within a given period, F is the number of channel feedback (including channel measurement feedback and channel state feedback) triggered by the control channel at the same time, and the third time interval and/or the first time interval are obtained according to signaling information or an agreed rule.

In the embodiment of the present disclosure, the method includes: in response to the channel measurement feedback capability being the first capability, determining whether to update more than min(E, F) pieces of channel state information according to a magnitude relationship between a sixth time interval C and a product of min(E, F) and a fifth time interval; in response to the channel measurement feedback capability being the second capability, determining whether to update the channel state information according to a magnitude relationship between the sixth time interval and the fourth time interval corresponding to state information of one channel,

The sixth time interval is an interval between a measurement reference signal and the channel where the channel state is located, and the fifth time interval and/or the fourth time interval are obtained according to signaling information or an agreed rule.

In the embodiment of the present disclosure, the method includes: in response to the channel measurement feedback capability being the first capability, and the second time interval being less than the product of min(E, F) and the first time interval, ignoring the control information that triggers the channel state feedback; in response to the channel measurement feedback capability being the first capability, and the second time interval being greater than or equal to the product of min(E, F) and the first time interval, not ignoring the control information that triggers the channel state feedback; in response to the channel measurement feedback capability being the first capability and the sixth time interval being less than a product of min (E, F) and the fifth time interval, not updating more than min (E, F) pieces of channel state information; in response to the channel measurement feedback capability being the first capability and the sixth time interval being greater than or equal to a product of min (E, F) and the fifth time interval, updating more than min (E, F) pieces of channel state information; in response to the channel measurement feedback capability being the second capability, and the second time interval being less than the third time interval corresponding to any one of channel state feedback, ignoring the control information that triggers the channel state feedback; in response to the channel measurement feedback capability being the second capability, and the second time interval being greater than or equal to the third time interval corresponding to at least one channel state feedback, not ignoring the control information that triggers the channel state feedback; in response to the channel measurement feedback capability being the second capability, and the sixth time interval being less than the fourth time interval corresponding to one channel state feedback, determining not to update the one piece of channel state information; or in response to the channel measurement feedback capability being the second capability, and the sixth time interval being less than the fourth time interval corresponding to one channel state feedback, determining not to update the one piece of channel state information;

In the embodiment of the present disclosure, the method satisfies at least one of: the value of E being capability information of the first communication node; the first time interval being the capability information of the first communication node; the fifth time interval being the capability information of the first communication node; the third time interval being the capability information of the first communication node; the seventh time interval being the capability information of the first communication node; the third time interval corresponding to one channel state feedback satisfying that in response to the second time interval being less than the third time interval, the control information that triggers the channel state feedback is ignored; the first time interval corresponding to one channel state feedback satisfying that in response to the second time interval being less than the first time interval, the control information that triggers the channel state feedback is ignored; the fifth time interval corresponding to one channel state feedback satisfying that in response to the sixth time interval being less than the seventh time interval, the channel state feedback information is not updated; or the fourth time interval corresponding to one channel state feedback satisfying that in response to the sixth time interval being less than the fifth time interval, the channel state feedback information is not updated.

Another embodiment of the present disclosure provides an apparatus for transmitting a channel state feedback capability, including: a transmitting module, which is used for transmitting whether channel measurement feedback capability is a first capability or a second capability; a processing module, which is used for in response to the channel measurement feedback capability being the first capability, determining whether to ignore control information that triggers the channel state feedback according to a magnitude relationship between min(E,F) and a product of a first time interval and a second time interval; in response to the channel measurement feedback capability being the second capability, determining whether to ignore the control information that triggers the channel state feedback according to the magnitude relationship between the second time interval and a third time interval corresponding to any one of channel state feedback.

The second time interval is an interval between a control channel that triggers the channel measurement feedback and a channel where channel state feedback information is located, and the value of E is the number of channel state feedback simultaneously calculated by the first communication node within a given period, F is the number of channel feedback triggered by the control channel at the same time, and the third time interval and/or the first time interval are obtained according to signaling information or an agreed rule.

In the embodiment of the present disclosure, the processing module is also used for: in response to the channel measurement feedback capability being the first capability, determining whether to update more than min(E, F) pieces of channel state information according to a magnitude relationship between a sixth time interval C and a product of min(E, F) and a fifth time interval; in response to the channel measurement feedback capability being the second capability, determining whether to update the channel state information according to a magnitude relationship between the sixth time interval and the fourth time interval corresponding to state information of one channel.

The sixth time interval is an interval between a measurement reference signal and the channel where the channel state is located, and the fifth time interval and/or the fourth time interval are obtained according to signaling information or an agreed rule.

In the embodiment of the present disclosure, the processing module is also used for: in response to the channel measurement feedback capability being the first capability, and the second time interval being less than the product of min(E, F) and the first time interval, ignoring the control information that triggers the channel state feedback; in response to the channel measurement feedback capability being the first capability and the sixth time interval being less than a product of min (E, F) and the fifth time interval, not updating more than min (E, F) pieces of channel state information; in response to the channel measurement feedback capability being the second capability, and the second time interval being less than the third time interval corresponding to any one of channel state feedback, ignoring the control information that triggers the channel state feedback; in response to the channel measurement feedback capability being the second capability, and the sixth time interval being less than the fourth time interval corresponding to one channel state feedback, determining not to update the one piece of channel state information.

The specific implementation of the apparatus for transmitting the channel state feedback capability is the same as that in the above embodiment, and will not be repeated here.

In the present disclosure, quasi-co-location reference signals in a quasi-co-location reference signal set of a channel and demodulation reference signals of the channel satisfy a quasi-co-location relationship with respect to one or more quasi-co-location parameters, and quasi-co-location reference signals in a quasi-co-location reference signal set of a signal and the signal satisfy the quasi-co-location relationship with respect to one or more quasi-co-location parameters, quasi-co-location reference signals in a quasi-co-location reference signal set of the control resource and the signal satisfy the quasi-co-location relationship with respect to one or more quasi-co-location parameters, the quasi-co-location parameters include at least one of the following parameters: a Doppler frequency shift , a Doppler spread, an average delay, a delay spread or a Spatial Rx parameter.

In the present disclosure, a first-type quasi-co-location parameter set includes the following quasi-co-location parameters: the Doppler frequency shift, the Doppler spread, the average delay, the delay spread or the Spatial Rx parameter.

A second-type quasi-co-location parameter set includes the following quasi-co-location parameters: the Doppler frequency shift, the Doppler spread, the average delay, the delay spread. In the present disclosure, the frequency bandwidth includes at least one of: a bandwidth corresponding to a component carrier (CC), a bandwidth corresponding to a bandwidth part (BWP).

Another embodiment of the present disclosure provides an apparatus for determining a quasi-co-location reference signal set, including a processor and a computer-readable storage medium, where the computer-readable storage medium stores instructions which, when executed by the processor, implement any method for transmitting a channel state feedback ability described above.

Another embodiment of the present disclosure provides a computer-readable storage medium. The computer-readable storage medium stores a computer program which, when executed by a processor, implement steps of a method for transmitting a channel state feedback ability described above.

It will be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be performed jointly by several physical components. Some or all components may be implemented as software executed by processors such as digital signal processors or microcontrollers, hardware, or integrated circuits such as application specific integrated circuits. Such software may be distributed on a computer-readable medium. The computer-readable medium may include a computer storage medium (or a non-transitory medium) and a communication medium (or a transitory medium). As is known to those of ordinary skill in the art, the term "computer storage medium" includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage devices, or any other media used for storing desired information and accessed by a computer. Additionally, as is known to those of ordinary skill in the art, the communication medium generally includes computer-readable instructions, data structures, program modules or other data in modulated data signals such as carriers or other transmission mechanisms, and may include any information delivery medium.

Although the implementation modes disclosed by the embodiments of the present disclosure are as described above, the content thereof is merely implementation modes for facilitating the understanding of the embodiments of the present disclosure and is not intended to limit the present disclosure. The scope of the present patent is still subject to the scope defined by the appended claims.

**Claims**

1.  A method for determining a quasi-co-location reference signal set, comprising:

   determining (200) one control resource set, CORESET, with a lowest index among CORESETs of one CORESET group, wherein the CORESETs are comprised in a latest time unit of a data channel or a Channel State Information - Reference Signal, CSI-RS, resource which comprises at least one CORESET in the one CORESET group, and the latest time unit is a time unit closest to the data channel or the CSI-RS resource among time units comprising at least one CORESET of the one CORESET group; and
   determining (201) one quasi-co-location reference signal set of one port group according to a quasi-co-location reference signal set of demodulation reference signals of the determined CORESET;
   wherein the one port group satisfies at least one of following features:

   the one port group being one demodulation reference signal, DMRS, port group corresponding to the data channel, and a time interval between the data channel and control signaling scheduling the data channel being less than a predefined threshold; or
   the one port group being one Channel state information-reference signal, CSI-RS, port group corresponding to the CSI-RS resource, and a time interval between the CSI-RS resource and control signaling scheduling the measurement reference resource being less than a predefined threshold;
   wherein the CORESETs of the one CORESET group comprised in the latest time unit are CORESETs of the one CORESET group associated with at least one search space set to be monitored in the latest time unit, wherein the one CORESET group comprises a CORESET in which control information scheduling the data channel or the CSI-RS resource is located, the one CORESET group is one of M CORESET groups and the one port group is one of M port groups, wherein M is larger than 1, and each of the M port groups corresponds to one of the M CORESET groups and the M port groups are in one BWP bandwidth part.

2.  The method of claim 1, wherein an identifier, ID, of the one CORESET group where the CORESET in which control information scheduling the data channel or the CSI-RS resource is located and the determined CORESET are located is configured in configuration information of the CORESET; and/or

in condition that configuration information of the CORESET in which control information scheduling the data channel or the CSI-RS resource is located or the determined CORESET does not comprises the ID of the one CORESET group, the CORESET in which control information scheduling the data channel or the CSI-RS resource is located or the determined CORESET belongs to a first CORESET group by default.

3. The method of claim 1, wherein the determining one quasi-co-location reference signal set of one port group according to a quasi-co-location reference signal set of demodulation reference signals of the determined CORESET comprises: determining one quasi-co-location reference signal set of each of the M port groups according to a quasi-co-location reference signal set of demodulation reference signals of one CORESET with a lowest index, among CORESETs of a corresponding CORESET group in a latest time unit of the each port group which comprises at least one CORESET in the corresponding CORESET group, wherein the corresponding CORESET group comprises a CORESET including control information scheduling the corresponding data channel or the corresponding CSI-RS resource is located.

4. The method of claim 1, wherein the M port groups correspond to M latest time units; and/or the M port groups correspond to the M CORESET groups.

5. The method of claim 1, wherein in condition that the time interval between a data channel or a CSI-RS resource and control signaling scheduling the data channel or the CSI-RS resource is less than a predefined threshold, the method further comprises:

determining at least P quasi-co-location reference signal sets of P-type port groups, P is an integer greater than or equal to 2, and the P port groups comprise a first-type port group and a second-type port group;
determining a first quasi-co-location reference signal set of the first-type port group according to a first-type parameter; and
determining a second quasi-co-location reference signal set of the second-type port group according to a second-type parameter;
wherein the first-type parameter is a quasi-co-location reference signal set of a demodulation reference signal of a CORESET, the second-type parameter does not comprise the quasi-co-location reference signal set of the demodulation reference signal of the CORESET.

6. The method of claim 5, further comprising at least one of:

determining the second quasi-co-location reference signal set according to a fifth quasi-co-location reference signal set notified by first control signaling, wherein the first control signaling comprises higher layer control signaling; or
determining the type of a port group according to second control signaling and/or a predefined rule.

7. The method of claim 5, wherein at least one quasi-co-location reference signal set of at least one port group in the P-type port groups is determined according to at least one piece of the following parameter information;

a maximum number of port groups comprised in the data channel or the CSI-RS resource;
a method for determining the quasi-co-location reference signal set of each port group of a data channel or a CSI-RS resource in response to the time interval between the control information scheduling the data channel or the CSI-RS resource and the data channel or the CSI-RS resource being less than the predefined threshold;
wherein the parameter information is determined according to signaling information or a predefined rule, and the signaling information comprises higher layer signaling information which is not physical layer signaling information.

8. The method of claim 1, further comprising:

A quasi-co-location reference signal sets corresponding to one DMRS port;
transmitting the data channel or the CSI-RS resource on the one DMRS port according to the A quasi-co-location reference signal sets;
wherein the one DMRS port and reference signals in each reference signal set in the A quasi-co-location reference signal sets have a quasi-co-location relationship with respect to a type of quasi-co-location parameters, and A is an integer greater than 1;
wherein A frequency domain resource sets of the one DMRS corresponding to the A quasi-co-location reference

**9.** The method of claim 1, further comprising:

in response to N control channels at a same occasion colliding, determining a priority of the N control channels according to configuration information of the N control channels, wherein N is an integer greater than or equal to 2; and
processing the N control channels according to the priority,
wherein the priority of the spatial receive parameter of the N control channels satisfies at least one of the following features:

a priority of a search space set with a lower search space set identifier in search space sets in which one of the N control channels is located is higher than a priority of a search space set with a higher search space set identifier in the search space sets in which another of the N control channels is located;
a priority of a common search space set being higher than a priority of a dedicated search space set, wherein the common search space set comprises one of the N control channels and the dedicated search space set comprises another of the N control channels;
a priority of a search space set with a long period is higher than a priority of a search space set with a short period, wherein each of the N control channels is comprises in one search space set.

**10.** The method of claim 1, wherein in condition that a time interval between a data channel or a CSI-RS resource and control signaling scheduling the data channel or CSI-RS resource is less than a predefined threshold, the method further comprises:
acquiring the quasi-co-location reference signal set of the data channel or CSI-RS resource according to at least one piece of the following information:

whether a control channel scheduling the data channel or CSI-RS resource and the data channel or CSI-RS resource belong to the same frequency bandwidth; or
judging whether a predefined condition is satisfied and determining the quasi-co-location reference signal set of the data channel or the CSI-RS resource according to the judging result, wherein the predefined condition comprises: none of quasi-co-location reference signal sets in a list configured for a frequency bandwidth comprising quasi-co-location reference signals associated with a spatial receiver parameter;
wherein the frequency bandwidth corresponds to one serving cell or one bandwidth part.

**11.** The method of claim 10, wherein in condition that the control channel scheduling the data channel or the CSI-RS resource and the data channel or the CSI-RS resource belong to different frequency bandwidths, the method further comprises:

acquiring the quasi-co-location reference signal set of the data channel or the CSI-RS resource according to higher layer signaling information; and
acquiring the quasi-co-location reference signal set of the data channel or the CSI-RS resource according to a first item of a quasi-co-location reference signal set list configured for a frequency bandwidth where the data channel or CSI-RS resource is located; or
in response to the control channel scheduling the data channel or CSI-RS resource and the data channel or CSI-RS resource belonging to different frequency bandwidths, the control channel scheduling the data channel or CSI-RS resource signal should comprise quasi-co-location reference signal indication information of the data channel or the CSI-RS resource.

**12.** A device for determining a quasi-co-location reference signal set, comprising a processor and a computer-readable storage medium, wherein the computer-readable storage medium stores instructions, wherein when executed by the processor, the instructions implement the method for determining the quasi-co-location reference signal set of any one of claims 1-11.

**Patentansprüche**

**1.** Verfahren zur Bestimmung eines Quasi-Colokalisierungs-Referenzsignalsatzes, umfassend:

Bestimmen (200) eines Steuerressourcensatzes, CORESET, mit einem niedrigsten Index unter CORESETs einer CORESET-Gruppe, wobei die CORESETs in einer letzten Zeiteinheit eines Datenkanals oder einer Kanalzustandsinformations-Referenzsignal(CSI-RS-)Ressource enthalten sind, die mindestens ein CORESET in der einen CORESET-Gruppe umfasst, und die letzte Zeiteinheit eine Zeiteinheit ist, die dem Datenkanal oder der CSI-RS-Ressource unter den Zeiteinheiten am nächsten liegt, die mindestens ein CORESET der einen CORESET-Gruppe umfassen; und Bestimmen (201) eines Quasi-Colokalisierungs-Referenzsignalsatzes einer Portgruppe gemäß einem Quasi-Colokalisierungs-Referenzsignalsatz von Demodulationsreferenzsignalen des bestimmten CORESET;

wobei die eine Portgruppe mindestens eines der folgenden Merkmale erfüllt:

wobei die eine Portgruppe eine Demodulationsreferenzsignal(DMRS-)Portgruppe ist, die dem Datenkanal entspricht, und ein Zeitintervall zwischen dem Datenkanal und der Steuersignalisierung, die den Datenkanal terminiert, kleiner als ein vordefinierter Schwellenwert ist; oder

wobei die eine Portgruppe eine Kanalzustandsinformations-Referenzsignal(CSI-RS-)Portgruppe ist, die der CSI-RS-Ressource entspricht, und ein Zeitintervall zwischen der CSI-RS-Ressource und der Steuersignalisierung, die die Messreferenzressource terminiert, kleiner als ein vordefinierter Schwellenwert ist;

wobei die CORESETs der einen CORESET-Gruppe, die in der letzten Zeiteinheit enthalten sind, CORESETs der einen CORESET-Gruppe sind, die mit mindestens einem Suchraumsatz verbunden sind, der in der letzten Zeiteinheit überwacht werden soll,

wobei die eine CORESET-Gruppe ein CORESET umfasst, in dem sich Steuerinformationen befinden, die den Datenkanal oder die CSI-RS-Ressource terminieren, die eine CORESET-Gruppe eine von M CORESET-Gruppen ist und die eine Portgruppe eine von M Portgruppen ist, wobei M größer als 1 ist und jede der M Port-Gruppen einer der M CORESET-Gruppen entspricht und die M Portgruppen in einem BWP-Bandbreitenteil sind.

2.  Verfahren nach Anspruch 1, wobei eine Kennung (ID) der einen CORESET-Gruppe, in der sich das CORESET, in dem sich Steuerinformationen zur Terminierung des Datenkanals oder der CSI-RS-Ressource befinden, und das bestimmte CORESET befinden, in Konfigurationsinformationen des CORESET konfiguriert ist; und/oder
    unter der Bedingung, dass die Konfigurationsinformation des CORESET, in dem sich die Steuerinformation zur Terminierung des Datenkanals oder der CSI-RS-Ressource befindet, oder das bestimmte CORESET nicht die ID der einen CORESET-Gruppe umfasst, gehört das CORESET, in dem sich die Steuerinformation zur Terminierung des Datenkanals oder der CSI-RS-Ressource befindet, oder das bestimmte CORESET standardmäßig zu einer ersten CORESET-Gruppe.

3.  Verfahren nach Anspruch 1, wobei das Bestimmen eines Quasi-Colokalisierungs-Referenzsignalsatzes einer Portgruppe gemäß einem Quasi-Colokalisierungs-Referenzsignalsatz von Demodulationsreferenzsignalen des bestimmten CORESET umfasst: Bestimmen eines Quasi-Colokalisierungs-Referenzsignalsatzes jeder der M Portgruppen gemäß einem Quasi-Colokalisierungs-Referenzsignalsatz von Demodulationsreferenzsignalen eines CORESET mit einem niedrigsten Index unter CORESETs einer entsprechenden CORESET-Gruppe in einer letzten Zeiteinheit der jeweiligen Portgruppe, die mindestens ein CORESET in der entsprechenden CORESET-Gruppe umfasst, wobei die entsprechende CORESET-Gruppe ein CORESET umfasst, das Steuerinformationen enthält, die den entsprechenden Datenkanal oder die entsprechende CSI-RS-Ressource terminieren, befindet.

4.  Verfahren nach Anspruch 1, wobei die M Portgruppen den M letzten Zeiteinheiten entsprechen; und/oder die M Portgruppen den M CORESET-Gruppen entsprechen.

5.  Verfahren nach Anspruch 1, wobei das Verfahren unter der Bedingung, dass das Zeitintervall zwischen einem Datenkanal oder einer CSI-RS-Ressource und einer Steuersignalisierung, die den Datenkanal oder die CSI-RS-Ressource terminiert, kleiner ist als ein vordefinierter Schwellenwert, ferner umfasst:

Bestimmen von mindestens P Quasi-Colokalisierungs-Referenzsignalsätzen von P-Typ-Portgruppen, wobei P eine ganze Zahl größer oder gleich 2 ist und die P Portgruppen eine Portgruppe eines ersten Typs und eine Portgruppe eines zweiten Typs umfassen;
Bestimmen eines ersten Quasi-Colokalisierungs-Referenzsignalsatzes der Portgruppe des ersten Typs gemäß einem Parameter des ersten Typs; und
Bestimmen eines zweiten Quasi-Colokalisierungs-Referenzsignalsatzes der Portgruppe des zweiten Typs gemäß einem Parameter des zweiten Typs;
wobei der Parameter des ersten Typs ein Quasi-Colokalisierungs-Referenzsignalsatz eines Demodulationsreferenzsignals eines CORESET ist, der Parameter des zweiten Typs den Quasi-Colokalisierungs-Referenzsignalsatz des Demodulationsreferenzsignals des CORESET nicht umfasst.

6. Vorrichtung nach Anspruch 5, ferner umfassend mindestens eines der Folgenden:

   Bestimmen des zweiten Quasi-Colokalisierungs-Referenzsignalsatzes gemäß einem fünften Quasi-Colokalisierungs-Referenzsignalsatz, der durch eine erste Steuersignalisierung mitgeteilt wird, wobei die erste Steuersignalisierung eine Steuersignalisierung der höheren Schicht umfasst; oder
   Bestimmen des Typs einer Portgruppe gemäß der zweiten Steuersignalisierung und/oder einer vordefinierten Regel.

7. Verfahren nach Anspruch 5, wobei mindestens ein Quasi-Colokalisierungs-Referenzsignalsatz von mindestens einer Portgruppe in den P-Typ-Portgruppen gemäß mindestens einer der folgenden Parameterinformationen bestimmt wird;

   eine Höchstzahl von Portgruppen, die im Datenkanal oder in der CSI-RS-Ressource enthalten sind;
   ein Verfahren zum Bestimmen des Quasi-Colokalisierungs-Referenzsignalsatzes jeder Portgruppe eines Datenkanals oder einer CSI-RS-Ressource als Reaktion darauf, dass das Zeitintervall zwischen den Steuerinformationen, die den Datenkanal oder die CSI-RS-Ressource terminieren, und dem Datenkanal oder der CSI-RS-Ressource kleiner ist als der vordefinierte Schwellenwert;
   wobei die Parameterinformation entsprechend der Signalisierungsinformation oder einer vordefinierten Regel bestimmt wird und die Signalisierungsinformation eine Signalisierungsinformation der höheren Schicht umfasst, die keine Signalisierungsinformation der physikalischen Schicht ist.

8. Verfahren nach Anspruch 1, ferner umfassend:

   A Quasi-Colokalisierungs-Referenzsignalsätze, die einem DMRS-Port entsprechen;
   Übertragen des Datenkanals oder der CSI-RS-Ressource auf dem einen DMRS-Port gemäß den A Quasi-Colokalisierungs-Referenzsignalsätz;
   wobei der eine DMRS-Port und die Referenzsignale in jedem Referenzsignalsatz in den A Quasi-Colokalisierungs-Referenzsignalsätzen eine Quasi-Colokalisierungsbeziehung in Bezug auf einen Typ von Quasi-Colokalisierungsungsparametern aufweisen und A eine ganze Zahl größer als 1 ist;
   wobei A Frequenzbereich-Ressourcensätze des einen DMRS den A Quasi-Colokalisierungs-Referenzsignalsätzen entsprechen oder A Zeitbereich-Ressourcensätze des einen DMRS den A Quasi-Colokalisierungs-Referenzsignalsätzen entsprechen.

9. Verfahren nach Anspruch 1, ferner umfassend:

   als Reaktion auf das Zusammentreffen von N Steuerkanälen bei einer gleichen Gelegenheit, Bestimmen einer Priorität der N Steuerkanäle gemäß der Konfigurationsinformation der N Steuerkanäle, wobei N eine ganze Zahl größer oder gleich 2 ist; und
   Verarbeiten der N Steuerkanäle entsprechend der Priorität, wobei die Priorität des räumlichen Empfangsparameters der N Steuerkanäle mindestens eines der folgenden Merkmale erfüllt:

      eine Priorität eines Suchraummengensatzes mit einer niedrigeren Suchraummengensatzkennung in Suchraummengensätzen, in denen sich einer der N Steuerkanäle befindet, ist höher als eine Priorität eines Suchraummengensatzes mit einer höheren Suchraummengensatzkennung in den Suchraummengensätzen, in denen sich ein anderer der N Steuerkanäle befindet;
      eine Priorität eines gemeinsamen Suchraummengensatzes ist höher als eine Priorität eines dedizierten Suchraummengensatzes, wobei der gemeinsame Suchraummengensatz einen der N Steuerkanäle und der dedizierte Suchraummengensatz einen anderen der N Steuerkanäle umfasst;
      eine Priorität eines Suchraummengensatzes mit einer langen Periode ist höher als eine Priorität einer Suchraummengensatzes mit einer kurzen Periode, wobei jeder der N Steuerkanäle in einem Suchraummengensatz enthalten ist.

10. Verfahren nach Anspruch 1, wobei das Verfahren unter der Bedingung, dass ein Zeitintervall zwischen einem Datenkanal oder einer CSI-RS-Ressource und einer Steuersignalisierung, die den Datenkanal oder die CSI-RS-Ressource terminiert, kleiner ist als ein vordefinierter Schwellenwert, ferner umfasst:

Erfassen des Quasi-Colokalisierungs-Referenzsignalsatzes des Datenkanals oder der CSI-RS-Ressource gemäß mindestens einer der folgenden Informationen:

ob ein Steuerkanal, der den Datenkanal oder die CSI-RS-Ressource terminiert, und der Datenkanal oder die CSI-RS-Ressource zur gleichen Frequenzbandbreite gehören; oder

Beurteilen, ob eine vordefinierte Bedingung erfüllt ist, und Bestimmen des Quasi-Colokalisierungs-Referenzsignalsatzes des Datenkanals oder der CSI-RS-Ressource gemäß dem Beurteilungsergebnis, wobei die vordefinierte Bedingung umfasst: keiner der Quasi-Colokalisierungs-Referenzsignalsätze in einer Liste, die für eine Frequenzbandbreite konfiguriert ist, umfasst Quasi-Colokalisierungs-Referenzsignale, die einem räumlichen Empfängerparameter zugeordnet sind;

wobei die Frequenzbandbreite einer bedienenden Zelle oder einem Bandbreitenteil entspricht.

**11.** Verfahren nach Anspruch 10, wobei unter der Bedingung, dass der Steuerkanal, der den Datenkanal oder die CSI-RS-Ressource terminiert, und der Datenkanal oder die CSI-RS-Ressource zu unterschiedlichen Frequenzbandbreiten gehören, das Verfahren ferner umfasst:

Erfassen des Quasi-Colokalisierungs-Referenzsignalsatzes des Datenkanals oder der CSI-RS-Ressource gemäß der Signalisierungsinformation der höheren Schicht; und

Erfassen des Quasi-Colokalisierungs-Referenzsignalsatzes des Datenkanals oder der CSI-RS-Ressource gemäß einem ersten Element einer Quasi-Colokalisierungs-Referenzsignalsatzliste, die für eine Frequenzbandbreite konfiguriert ist, in der sich der Datenkanal oder die CSI-RS-Ressource befindet; oder

als Reaktion darauf, dass der Steuerkanal, der den Datenkanal oder die CSI-RS-Ressource terminiert, und der Datenkanal oder die CSI-RS-Ressource zu unterschiedlichen Frequenzbandbreiten gehören, sollte der Steuerkanal, der den Datenkanal oder CSI-RS-Ressourcensignal terminiert, Quasi-Colokalisierungs-Referenzsignal-Anzeigeinformationen des Datenkanals oder der CSI-RS-Ressource umfassen.

**12.** Vorrichtung zum Bestimmen eines Quasi-Colokalisierungs-Referenzsignalsatzes, umfassend einen Prozessor und ein computerlesbares Speichermedium, wobei das computerlesbare Speichermedium Befehle speichert, wobei die Befehle, wenn sie von dem Prozessor ausgeführt werden, das Verfahren zum Bestimmen des Quasi-Colokalisierungs-Referenzsignalsatzes nach einem der Ansprüche 1-11 implementieren.

## Revendications

**1.** Procédé de détermination d'un ensemble de signaux de référence de quasi-co-localisation, comprenant:

la détermination (200) d'un ensemble de ressources de commande, CORESET, ayant un indice le plus bas parmi les CORESET d'un groupe CORESET, dans lequel les CORESET sont compris dans une dernière unité de temps d'un canal de données ou d'une ressource de signal de référence d'informations d'état de canal, CSI-RS, qui comprend au moins un CORESET dans le groupe CORESET, et la dernière unité de temps est une unité de temps la plus proche du canal de données ou de la ressource CSI-RS parmi des unités de temps comprenant au moins un CORESET du groupe CORESET; et la détermination (201) d'un ensemble de signaux de référence de quasi-co-localisation d'un groupe de ports en fonction d'un ensemble de signaux de référence de quasi-co-localisation de signaux de référence de démodulation du CORESET déterminé;

dans lequel le groupe de ports satisfait au moins l'une des caractéristiques suivantes:

le groupe de ports est un groupe de ports de signal de référence de démodulation, DMRS, correspondant au canal de données, et un intervalle de temps entre le canal de données et la signalisation de commande programmant le canal de données est inférieur à un seuil prédéfini; ou

le groupe de ports est un groupe de ports de signal de référence d'informations d'état de canal, CSI-RS, correspondant à la ressource CSI-RS, et un intervalle de temps entre la ressource CSI-RS et la signalisation de commande programmant la ressource de référence de mesure est inférieur à un seuil prédéfini;

dans lequel les CORESET du groupe CORESET compris dans la dernière unité de temps sont des CORESET du groupe CORESET associés à au moins un ensemble d'espaces de recherche à surveiller dans la dernière unité de temps,

dans lequel le groupe CORESET comprend un CORESET dans lequel se trouvent des informations de commande programmant le canal de données ou la ressource CSI-RS, le groupe CORESET est l'un des M groupes CORESET et le groupe de ports est l'un des M groupes de ports, dans lequel M est supérieur à 1, et chacun des M groupes de ports correspond à l'un des M groupes CORESET et les M groupes de ports se trouvent dans une partie de largeur de bande BWP.

2. Procédé selon la revendication 1, dans lequel un identifiant, ID, du groupe CORESET dans lequel le CORESET dans lequel les informations de commande programmant le canal de données ou la ressource CSI-RS sont situées et le CORESET déterminé est situé est configuré dans les informations de configuration du CORESET; et/ou si les informations de configuration du CORESET dans lequel se trouvent les informations de commande programmant le canal de données ou la ressource CSI-RS ou le CORESET déterminé ne comprennent pas l'ID d'un groupe CORESET, le CORESET dans lequel se trouvent les informations de commande programmant le canal de données ou la ressource CSI-RS, ou le CORESET déterminé, appartient par défaut à un premier groupe CORESET.

3. Procédé selon la revendication 1, dans lequel la détermination d'un ensemble de signaux de référence de quasi-co-localisation d'un groupe de ports en fonction d'un ensemble de signaux de référence de quasi-co-localisation de signaux de référence de démodulation du CORESET déterminé comprend: la détermination d'un ensemble de signaux de référence de quasi-co-localisation de chacun des M groupes de ports en fonction d'un ensemble de signaux de référence de quasi-co-localisation de signaux de référence de démodulation d'un CORESET ayant un indice le plus bas, parmi les CORESET d'un groupe CORESET correspondant dans une dernière unité de temps de chaque groupe de ports qui comprend au moins un CORESET dans le groupe CORESET correspondant, dans lequel le groupe CORESET correspondant comprend un CORESET incluant des informations de commande programmant le canal de données correspondant ou la ressource CSI-RS correspondante.

4. Procédé selon la revendication 1, dans lequel les M groupes de ports correspondent à M dernières unités de temps; et/ou les M groupes de ports correspondent aux M groupes CORESET.

5. Procédé selon la revendication 1, dans lequel, si l'intervalle de temps entre un canal de données ou une ressource CSI-RS et la signalisation de commande programmant le canal de données ou la ressource CSI-RS est inférieur à un seuil prédéfini, le procédé comprend en outre:

la détermination d'au moins P ensembles de signaux de référence de quasi-co-localisation de groupes de ports de type P, P étant un entier supérieur ou égal à 2, et les groupes de ports P comprenant un groupe de ports de premier type et un groupe de ports de second type; la détermination d'un premier ensemble de signaux de référence de quasi-co-localisation du groupe de ports de premier type en fonction d'un paramètre de premier type; et la détermination d'un second ensemble de signaux de référence de quasi-co-localisation du groupe de ports de second type en fonction d'un paramètre de second type; dans lequel le paramètre de premier type est un ensemble de signaux de référence de quasi-co-localisation d'un signal de référence de démodulation d'un CORESET, le paramètre de second type ne comprend pas l'ensemble de signaux de référence de quasi-co-localisation du signal de référence de démodulation du CORESET.

6. Procédé selon la revendication 5, comprenant au moins l'une des opérations suivantes:

la détermination du second ensemble de signaux de référence de quasi-co-localisation en fonction d'un cinquième ensemble de signaux de référence de quasi-co-localisation notifié par une première signalisation de commande, la première signalisation de commande comprenant une signalisation de commande de couche supérieure; ou la détermination du type d'un groupe de ports en fonction de la seconde signalisation de commande et/ou d'une règle prédéfinie.

7. Procédé selon la revendication 5, dans lequel au moins un ensemble de signaux de référence de quasi-co-localisation d'au moins un groupe de ports parmi les groupes de ports de type P est déterminé en fonction d'au moins un élément des informations de paramètre suivantes;

un nombre maximal de groupes de ports compris dans le canal de données ou la ressource CSI-RS; un procédé pour déterminer l'ensemble de signaux de référence de quasi-co-localisation de chaque groupe de ports d'un canal de données ou d'une ressource CSI-RS en réponse au fait que l'intervalle de temps entre l'information de commande programmant le canal de données ou la ressource CSI-RS et le canal de données ou la ressource CSI-RS est inférieur au seuil prédéfini;

dans lequel les informations de paramètre sont déterminées en fonction d'informations de signalisation ou d'une règle prédéfinie, et les informations de signalisation comprennent des informations de signalisation de couche supérieure qui ne sont pas des informations de signalisation de couche physique.

8. Procédé selon la revendication 1, comprenant en outre:

un ensemble de signaux de référence de quasi-co-localisation correspondant à un port DMRS;
la transmission du canal de données ou de la ressource CSI-RS sur le port DMRS en fonction des ensembles de signaux de référence de quasi-co-localisation A;
dans lequel le port DMRS et les signaux de référence de chaque ensemble de signaux de référence parmi les ensembles de signaux de référence de quasi-co-localisation A ont une relation de quasi-co-localisation par rapport à un type de paramètres de quasi-co-localisation, et A est un entier supérieur à 1;
dans lequel un ensemble de ressources du domaine des fréquences A du DMRS correspond aux ensembles de signaux de référence de quasi-co-localisation A, ou un ensemble de ressources du domaine temporel du DMRS correspond aux ensembles de signaux de référence de quasi-co-localisation A.

9. Procédé selon la revendication 1, comprenant en outre:

en réponse à la collision de N canaux de commande à une même occasion, la détermination d'une priorité pour les N canaux de commande en fonction des informations de configuration des N canaux de commande, N étant un entier supérieur ou égal à 2; et
le traitement des N canaux de commande en fonction de la priorité, la priorité du paramètre de réception spatiale des N canaux de commande satisfaisant au moins l'une des caractéristiques suivantes:

la priorité d'un ensemble d'espaces de recherche ayant un identifiant d'ensemble d'espaces de recherche inférieur dans les ensembles d'espaces de recherche dans lesquels se trouve l'un des N canaux de commande est plus élevée que la priorité d'un ensemble d'espaces de recherche ayant un identifiant d'ensemble d'espaces de recherche supérieur dans les ensembles d'espaces de recherche dans lesquels se trouve un autre des N canaux de commande;
une priorité d'un ensemble d'espaces de recherche communs est supérieure à une priorité d'un ensemble d'espaces de recherche dédiés, l'ensemble d'espaces de recherche communs comprenant l'un des N canaux de commande et l'ensemble d'espaces de recherche dédiés comprenant un autre des N canaux de commande;
une priorité d'un ensemble d'espaces de recherche avec une longue période est plus élevée qu'une priorité d'un ensemble d'espaces de recherche avec une courte période, dans lequel chacun des N canaux de commande est compris dans un ensemble d'espaces de recherche.

10. Procédé selon la revendication 1, dans lequel, si un intervalle de temps entre un canal de données ou une ressource CSI-RS et un signal de commande programmant le canal de données ou la ressource CSI-RS est inférieur à un seuil prédéfini, le procédé comprend en outre:
l'acquisition de l'ensemble de signaux de référence de quasi-co-localisation du canal de données ou de la ressource CSI-RS en fonction d'au moins l'une des informations suivantes:

si un canal de commande programmant le canal de données ou la ressource CSI-RS et le canal de données ou la ressource CSI-RS appartiennent ou non à la même largeur de bande; ou
le jugement du fait qu'une condition prédéfinie est remplie ou non et la détermination de l'ensemble de signaux de référence de quasi-co-localisation du canal de données ou de la ressource CSI-RS en fonction du résultat du jugement, la condition prédéfinie comprenant : aucun des ensembles de signaux de référence de quasi-co-localisation dans une liste configurée pour une largeur de bande de fréquences ne comprend des signaux de référence de quasi-co-localisation associés à un paramètre spatial du récepteur;
dans lequel la largeur de bande de fréquences correspond à une cellule de desserte ou à une partie de largeur de bande.

11. Procédé selon la revendication 10, dans lequel, si le canal de commande programmant le canal de données ou la ressource CSI-RS et le canal de données ou la ressource CSI-RS appartiennent à des largeurs de bande de fréquences différentes, le procédé comprend en outre:

l'acquisition de l'ensemble de signaux de référence de quasi-co-localisation du canal de données ou de la ressource CSI-RS en fonction des informations de signalisation de couche supérieure; et

l'acquisition de l'ensemble de signaux de référence de quasi-co-localisation du canal de données ou de la ressource CSI-RS en fonction d'un premier élément d'une liste d'ensembles de signaux de référence de quasi-co-localisation configurée pour une largeur de bande de fréquences où se trouve le canal de données ou la ressource CSI-RS; ou

en réponse au fait que le canal de commande programme le canal de données ou la ressource CSI-RS et que le canal de données ou la ressource CSI-RS appartient à des largeurs de bande de fréquences différentes, le canal de commande qui programme le signal du canal de données ou de la ressource CSI-RS doit comprendre des informations d'indication de signal de référence de quasi-co-localisation du canal de données ou de la ressource CSI-RS.

12. Dispositif pour déterminer un ensemble de signaux de référence de quasi-co-localisation, comprenant un processeur et un support de stockage lisible par ordinateur, dans lequel le support de stockage lisible par ordinateur stocke des instructions, dans lequel, lorsqu'elles sont exécutées par le processeur, les instructions mettent en oeuvre le procédé de détermination de l'ensemble de signaux de référence de quasi-co-localisation selon l'une quelconque des revendications 1 à 11.

Non-backhaul

TRP1 —— / —— TRP2

DCI1,PDSCH1 DCI2,PDSCH2

UE

**FIG. 1**

_200_

Select N2 control resources from control resources included in N1 time units, where N1 and N2 are integers greater than or equal to 1

_201_

Determine at least M quasi-co-location reference signal sets of the M port groups according to the N2 control resources

**FIG. 2**

| | | | PDSCH1 and PDSCH2 need to be cached |
|---|---|---|---|
| {CORESET1, CORESET3} need to be detected in slot(n-3) | {CORESET0} needs to be detected in slot(n-2) | CORESET0 does not need to be detected in slot(n-1) | CORESET does not need to be detected in slot(n) |

**FIG. 3A**

| | | | PDSCH1 and PDSCH2 need to be cached |
|---|---|---|---|
| {CORESET1, CORESET3} need to be detected in slot(n-3) | CORESET does not need to be detected in slot(n-2) | {CORESET0} needs to be detected in slot(n-1) | {CORESET0} needs to be detected in slot(n) |

**FIG. 3B**

FIG. 3C

FIG. 4

FIG. 5

FIG. 6

| slot(n) | |
|---------|---|
| CORESET1 | PDSCH |

**FIG. 7**

800

Determine the quasi-co-location reference
signal set

801

Transmit a channel or signal on corresponding
resources according to the quasi-co-location
reference signal set

**FIG. 8**

Backhaul

TRP1 ← → TRP2

DCI1,
PDSCH 1
group 1

DCI1,
PDSCH 1
group 2

UE

**FIG. 9**

| Selection module | → | First determination module |

**FIG. 10**

Second
determination
module

**FIG. 11**

Third
determination
module → Transmission
module

**FIG. 12**

| OFDM 5 | OFDM 6 | OFDM 7 | OFDM 8 | OFDM 9 | OFDM 10 |

CSI-RS
PDSCH

**FIG. 13**

1400

In response to N channels or signals at a same occasion colliding, determine a processing mode and/or an information reporting mode of a channel or signal according to configuration information of at least one of N channels or signals; where N is an integer greater than or equal to 2

↓

1401

In response to N channels or signals at a same occasion colliding, determine a processing mode and/or an information reporting mode of a channel or signal according to configuration information of at least one of N channels or signals; where N is an integer greater than or equal to 2

**FIG. 14**

Fourth determination module → Processing module

**FIG. 15**

| | A first slot occupied by a PDSCH | A second slot occupied by the PDSCH | A third slot occupied by the PDSCH |
|---|---|---|---|
| {CORESET1, CORESET3} need to be detected in slot(n-3) | CORESET does not need to be detected in slot(n-2) | {CORESET0} needs to be detected in slot(n-1) | {CORESET0} needs to be detected in slot(n) |

**FIG. 16**

| | A first slot occupied by a PDSCH | A second slot occupied by the PDSCH | A third slot occupied by the PDSCH |
|---|---|---|---|
| {CORESET0, CORESET3} need to be detected in slot(n-3) | CORESET does not need to be detected in slot(n-2) | {CORESET0} needs to be detected in slot(n-1) | {CORESET0} needs to be detected in slot(n) |

**FIG. 17**

| Report CSI | Slot in which a CSI-RS is located | Slot in which a CSI-RS is located | Slot in which a CSI-RS is located | Report CSI |
|---|---|---|---|---|
| Slot (n) | Slot (n+p) | Slot (n+2p) | Slot (n+3p) | Slot (n+k) |

**FIG. 18**

CC0

CC1

CORE SET1

CORE SET1

Slot (n)

Whether a receiving beam
is a receiving beam 1 or a
receiving beam 2

Beam 1

Beam 2

**FIG. 19**

CORE SET1

CORE SET2

CORE SET1

CC0

CC1

Slot (n-1)

Slot (n)

**FIG. 20**

**EP 3 783 825 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170288743 A1